# EUROPEAN PATENT SPECIFICATION

(11) **EP 3 579 312 B1**
(45) Date of publication and mention of the grant of the patent: **27.07.2022**
(21) Application number: 18747630.4
(22) Date of filing: 02.02.2018
(51) Int. Cl.: H01M 4/62, C08F 290/06, C08K 5/053, C08L 33/02, H01M 4/133, H01M 4/134, H01M 4/1393, H01M 4/1395, H01M 4/36, H01M 4/04, H01M 4/02

(54) **USE OF A BINDER AGENT COMPOSITION FOR LITHIUM BATTERY, SLURRY COMPOSITION FOR LITHIUM BATTERIES COMPRISING THE BINDER COMPOSITION, AND ELECTRODE USING THE BINDER COMPOSITION**
VERWENDUNG EINER BINDEMITTELZUSAMMENSETZUNG FÜR LITHIUMBATTERIE, AUFSCHLÄMMUNGSZUSAMMENSETZUNG FÜR LITHIUMBATTERIEN ENTHALTEND DIE BINDEMITTELZUSAMMENSETZUNG, UND ELEKTRODE VERWENDEND DIE BINDEMITTELZUSAMMENSETZUNG
UTILISATION D'UNE COMPOSITION DE LIANT POUR BATTERIE AU LITHIUM, SUSPENSION D'UNE COMPOSITION POUR BATTERIE AU LITHIUM COMPRENANT LA COMPOSITION DE LIANT, ET ÉLECTRODE UTILISANT LA COMPOSITION DE LIANT

(30) Priority: 03.02.2017 JP 2017019098
(43) Date of publication of application: 11.12.2019
(73) Proprietor: FUJIFILM Wako Pure Chemical Corporation, Osaka-shi, Osaka 540-8605 (JP)
(72) Inventor: MIZUTA Hironori, Kawagoe-shi Saitama 350-1101 (JP); TAKIMOTO Kazuki, Kawagoe-shi Saitama 350-1101 (JP); WATAHIKI Hiromi, Kawagoe-shi Saitama 350-1101 (JP); SUGIMOTO Kaho, Kawagoe-shi Saitama 350-1101 (JP); MATSUURA takatoshi, Kawagoe-shi Saitama 350-1101 (JP); OKAMOTO Kuniaki, Kawagoe-shi Saitama 350-1101 (JP); SHIMAMURA Nobutaka, Kawagoe-shi Saitama 350-1101 (JP)
(74) Representative: Hinkelmann, Klaus
(86) International application number: PCT/JP2018/003514
(87) International publication number: WO 2018/143383

(56) References cited:
- WO-A1-2015/163302
- JP-A- 2007 220 439
- JP-A- 2008 311 067
- JP-A- 2014 130 752
- JP-A- 2015 115 109
- KR-A- 20140 139 337
- US-A- 5 433 892

## Description

### Technical Field

The present invention relates to the use of a binder agent composition, a slurry composition, and an electrode which are used in lithium batteries and relates to a method for preparing the electrode.

### Background Art

As secondary batteries, lithium batteries are used as power sources of various portable devices such as cellular phones. In recent years, research and development have been actively conducted regarding large batteries expected to be used in automobiles and the like. Therefore, it is essential to further increase the energy density of current lithium batteries. In order to increase the capacity of the lithium batteries, the use of silicon instead of carbon as an active material is drawing attention. Silicon can electrochemically cause an alloying reaction with lithium at room temperature. As this reason, it is considered that, in a case where silicon is used in lithium batteries, the electric capacity is further increased than in a case where carbon is used.

However, it is known that in a case where silicon is used as an active material, the silicon causes a great volume change (equal to or greater than triples the original volume) at the time of charge and discharge. Furthermore, unfortunately, the volume change results in the destruction of the electrode structure at the time of charge and discharge, which leads to the destruction of the electrode. Consequently, a charge/discharge capacity is reduced.

In recent years, as a method for inhibiting the volume change, the use of silicon monooxide (SiO) instead of silicon has been attempted. However, in a case where silicon monoxide is used as an active material, volume expansion occurs, and hence the silicon monoxide is problematic for practical use (Patent Literature 1). Furthermore, considering that the initial charge/discharge efficiency of silicon monoxide is low, an excess of battery capacity is necessary for a positive electrode. In order to solve the problem, various methods are being examined. For example, there is a report regarding the use of carbon-coated silicon monoxide (SiOC) and the like (Patent Literature 2).

There have been various attempts to increase the capacity of batteries and improve the stability of batteries by using a binder agent (Patent Literature 3 and 4). However, these attempts focused mainly on carbon as an active material, and did not aim to solve the problems which arise in a case where silicon oxide with carbon-coated surface including SiOC is used.

### Citation List

### Patent Literature

Patent Literature 1 JP2015-210962A
Patent Literature 2 WO2012/036127A
Patent Literature 3 JP2009-080971A
Patent Literature 4 JP4851092B2

The publication US 5 433 892 A is concerned with the production of reusable biomedical electrodes. Disclosed is in particular an electrically conductive, transparent, pressure-sensitive adhesive film consisting inter alia of 100 parts by weight of a carboxyl group-containing copolymer on an acrylate basis, said carboxyl group-containing copolymer comprising 10 to 30 weight percent of hydroxyl group-containing (meth)acrylates: 50 to 150 parts by weight of a water-soluble amine: 50 to 250 parts by weight of a polyoxyalkylene with a molecular mass of below 1000, a polyalcohol, its derivatives and mixtures thereof: 50 to 200 parts by weight of a solution of electrolytes; and 0.1 to 6 parts by weight of a cross-linking agent. In Example 8, a mixture comprising a copolymer comprising 2-EHA, BA, HPA and AA and further glycerin and a crosslinking agent and water is disclosed.

The publication KR 2014 0139337 A relates to a method for manufacturing cation modified gua gums. Example 1 discloses a complex mixture which also comprises water, glycerylacrylate/acrylic acid copolymer, dipropylene glycol and butylene glycol.

### Summary of Invention

### Technical Problem

An object of the present invention is to provide the use of an excellent binder agent composition solving the problems, a slurry composition and an electrode using the binder agent composition, and a method for preparing the electrode.

### Solution to Problem

In order to solve the problems that arise in a case where a carbon-containing material, particularly, a silicon oxide with carbon-coated surface including SiOC is used as an active material, the inventors of the present invention examined various binder agents. As a result, the inventors have found that in a case where a composition, which contains specific copolymers, a bivalent to decavalent alcohol for binding the copolymers, and water, is used as a binder agent, even though a silicon oxide with carbon-coated surface is used, an excellent charge/discharge capacity is obtained. Based on the finding, the inventors have accomplished the present invention.

That is, the present invention includes the following inventions [i] to [x].
[i] A use of a binder agent composition for lithium battery, wherein the binder agent composition comprises a copolymer containing a monomer unit derived from acrylic acid and one or two kinds of monomer units derived from a compound represented by the following general formula (I) or general formula (II) as constituent components, a bivalent to decavalent alcohol, and water (hereinafter, the binder agent composition will be simply described as a binder agent composition used inef the present invention in some cases); 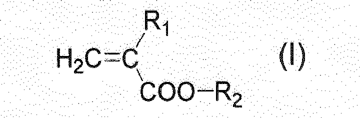 [in the formula, R₁ represents a hydrogen atom or a methyl group, in a case where R₂ is a hydrogen atom, R₁ represents a methyl group, R₂ represents a hydrogen atom; an alkyl group having 1 to 20 carbon atoms; an alkyl group having 1 to 20 carbon atoms substituted with a fluorine atom or a hydroxy group; an aryl group having 6 to 10 carbon atoms; an arylalkyl group having 7 to 13 carbon atoms; an alkoxyalkyl group having 2 to 9 carbon atoms; an alkoxyalkoxyalkyl group having 3 to 9 carbon atoms; an aryloxyalkyl group having 7 to 13 carbon atoms; a morpholinoalkyl group having 5 to 7 carbon atoms; a trialkylsilyl group having 3 to 9 carbon atoms; an alicyclic hydrocarbon group having 6 to 12 carbon atoms that has or does not have an oxygen atom; a dialkylaminoalkyl group having 3 to 9 carbon atoms; a hcxahydrophthalimide-N-alkyl group having 9 to 14 carbon atoms; a group represented by the following general formula (IV) 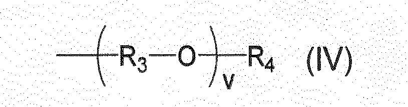 (in the formula, R₃ represents an alkylene group having 1 to 6 carbon atoms that has a hydroxy group as a substituent or is unsubstituted, R₄ represents a hydrogen atom, an alkyl group having 1 to 6 carbon atoms, or a phenyl group, and v represents an integer of 2 to 20);
   or a group represented by the following general formula (V) 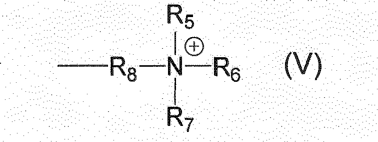 (in the formula, R₅ to R₇ each independently represent an alkyl group having 1 to 3 carbon atoms, and R₈ represents an alkylene group having 1 to 3 carbon atoms.).], 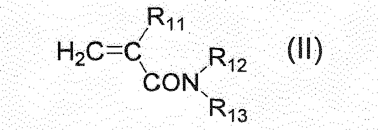 (in the formula, R₁₁ represents a hydrogen atom or a methyl group, R₁₂ represents a hydrogen atom or an alkyl group having 1 to 6 carbon atoms, R₁₃ represents a hydrogen atom, an alkyl group having 1 to 6 carbon atoms, a dialkylaminoalkyl group having 3 to 9 carbon atoms, or a hydroxyalkyl group having 1 to 6 carbon atoms.)
[ii] The use of the binder agent composition described in the invention [i], wherein the bivalent to decavalent alcohol is a compound represented by the following general formula (B1); 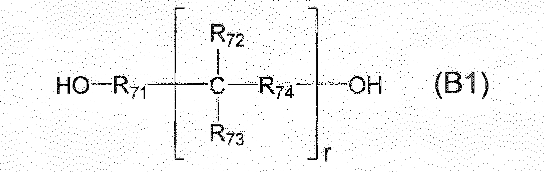 (in the formula, R₇₁ represents an alkylene group having 1 to 6 carbon atoms, R₇₂ represents a hydroxy group or a hydroxyalkyl group having 1 to 6 carbon atoms, R₇₃ represents a hydrogen atom, an alkyl group having 1 to 6 carbon atoms, or a hydroxyalkyl group having 1 to 6 carbon atoms, R₇₄ represents an alkylene group having 1 to 6 carbon atoms that may have -O- in a chain, r represents an integer of 0 to 4, and a plurality of R₇₂'s, a plurality of R₇₃'s, and a plurality of R₇₄'s may be the same as or different from each other respectively.)
[iii] The use of the binder agent composition described in the invention [i] or [ii], wherein the copolymer is crosslinked by a crosslinking agent selected from compounds described in the following general formulae [1] to [13] and a polymer described in the following general formula [14]; 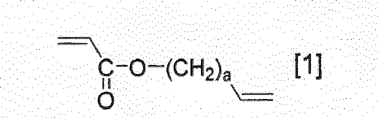 (in the formula, a represents an integer of 1 to 6.), 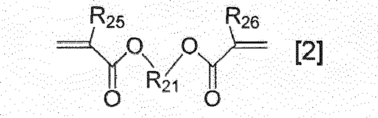 [in the formula, R₂₅ and R₂₆ each independently represent a hydrogen atom or a methyl group, and R₂₁ represents an alkylene group having 1 to 20 carbon atoms, a group represented by the following general formula [2-1] 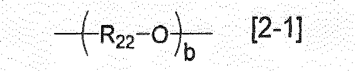 (in the formula, R₂₂ represents an alkylene group having 1 to 6 carbon atoms, and b represents an integer of 1 to 6.), or a group represented by the following general formula [2-2] 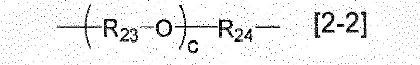 (in the formula, R₂₃ and R₂₄ each independently represent an alkylene group having 1 to 6 carbon atoms, and c represents an integer of 1 to 22.).], 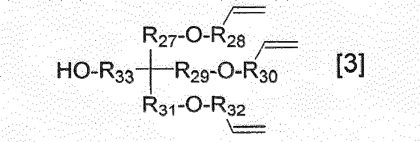 (in the formula, R₂₇ to R₃₃ each independently represent an alkylene group having 1 to 3 carbon atoms.), 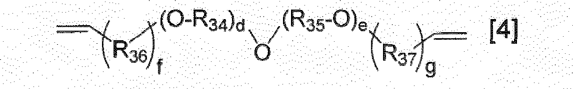 (in the formula, R₃₄ to R₃₇ each independently represent an alkylene group having 1 to 6 carbon atoms, d represents an integer of 1 to 6, e represents an integer of 0 to 6, and f and g each independently represent an integer of 0 or 1.), 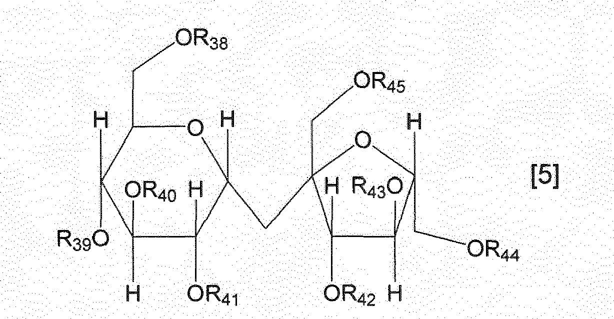 (in the formula, R₃₈ to R₄₅ each independently represent a hydrogen atom, a vinyl group, or a vinyl ketone group, and at least two or more groups among R₃₈ to R₄₅ are vinyl groups or vinyl ketone groups.), 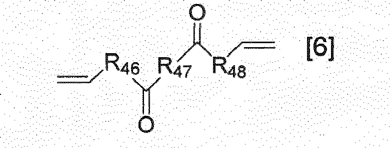 (in the formula, R₄₆ to R₄₈ each independently represent an alkylene group having 1 to 6 carbon atoms.), 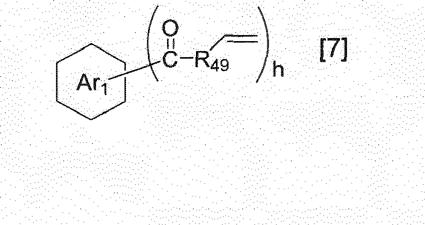 (in the formula, a ring Ar₁ represents a benzene ring or a naphthalene ring, R₄₉ represents an alkylene group having 1 to 6 carbon atoms, and h represents an integer of 2 to 4.), 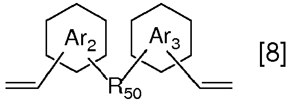 (in the formula, a ring Ar₂ and a ring Ar₃ each independently represent a benzene ring or a naphthalene ring, and R₅₀ represents an alkylene group having 1 to 6 carbon atoms.), 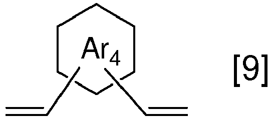 (in the formula, a ring Ar₄ represents a benzene ring or a naphthalene ring.), 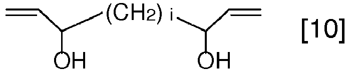 (in the formula, i represents an integer of 0 to 6.), 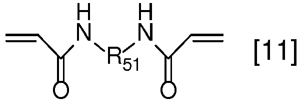 (in the formula, R₅₁ represents an alkylene group having 1 to 6 carbon atoms.), 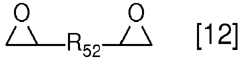 [in the formula, R₅₂ represents an alkylene group having 1 to 6 carbon atoms that has a substituent or is unsubstituted, an arylene group having 6 to 10 carbon atoms that has a substituent or is unsubstituted, a group represented by the following general formula [12-1] 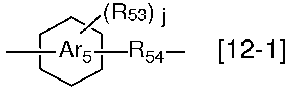 (in the formula, R₅₃ represents an alkyl group having 1 to 6 carbon atoms, R₅₄ represents an alkylene group having 1 to 6 carbon atoms, a ring Ar₅ represents a benzene ring or a naphthalene ring, and j represents an integer of 0 to 4), or a group represented by the following general formula [12-2] 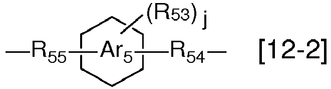 (in the formula, R₅₅ represents an alkylene group having 1 to 6 carbon atoms, and R₅₃, R₅₄, a ring Ar₅, and j are the same as R₅₃, R₅₄, the ring Ar₅, and j described above.).],

   R₅₆-N=C=N-R₅₇ [13]

   [in the formula, R₅₆ and R₅₇ each independently represent an alkyl group having 1 to 6 carbon atoms that has a substituent or is unsubstituted, an aryl group having 6 to 10 carbon atoms that has a substituent or is unsubstituted, or a group represented by the following general formula [13-1] 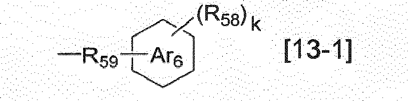 (in the formula, R₅₈ represents an alkyl group having 1 to 6 carbon atoms, R₅₉ represents an alkylene group having 1 to 6 carbon atoms, a ring Ar₆ represents a benzene ring or a naphthalene ring, and k represents an integer of 0 to 5.).], 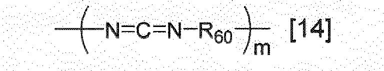 [in the formula, R₆₀ represents an alkylene group having 1 to 6 carbon atoms that has a substituent or is unsubstituted, an arylene group having 6 to 10 carbon atoms that has a substituent or is unsubstituted, a group represented by the following general formula [14-1] or [14-2] 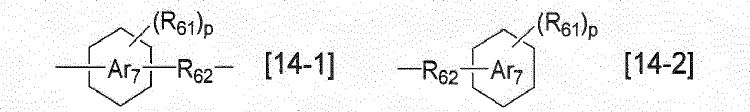 (in the formulae, R₆₁ represents an alkyl group having 1 to 6 carbon atoms, R₆₂ represents an alkylene group having 1 to 6 carbon atoms, a ring Ar₇ represents a benzene ring or a naphthalene ring, and p represents an integer of 0 to 4.),
   or a group represented by the following general formula [14-3] 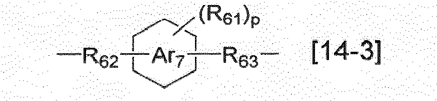 (in the formula, R₆₃ represents an alkylene group having 1 to 6 carbon atoms, and R₆₁, R₆₂, a ring Ar₇, and p are the same as R₆₁, R₆₂, the ring Ar₇, and p described above.),
   and m represents an integer of 10 to 10,000.].
[iv] A slurry composition for lithium batteries, comprising 1) a carbon-containing active material, 2) a conductive assistant, and 3) the binder agent composition described in one of the inventions [i] .
[v] A slurry composition for lithium batteries, comprising 1) a carbon-containing active material, 2) a conductive assistant, and 3) the binder agent composition described in the invention [ii].
[vi] A slurry composition for lithium batteries, comprising 1) a carbon-containing active material, 2) a conductive assistant, and 3) the binder agent composition described in the invention [iii].
[vii] The slurry composition described in any one of the inventions [iv] to [vi], wherein the carbon-containing active material contains at least one kind of material among carbon, silicon with carbon-coated surface, a silicon oxide with carbon-coated surface, and a metal-bonded silicon with carbon-coated surface.
[viii] The use of the slurry composition described in any one of the inventions [iv] to [viii for preparing a negative electrode.
[ix] An electrode for lithium batteries, comprising 1) a carbon-containing active material, 2) a conductive assistant, 3) a binder agent derived from the binder agent composition described in any one of the inventions [iv] to [vi], and 4) a current collector.
[x] The electrode described in the invention [ix], wherein the carbon-containing active material contains at least one kind of material among carbon, silicon with carbon-coated surface, a silicon oxide with carbon-coated surface, and a metal-bonded silicon with carbon-coated surface.
[xi] The electrode described in the invention [ix] or [x] , wherein the electrode is a negative electrode.
[xii] A method for preparing an electrode for lithium batteries, comprising coating a current collector with the slurry composition described in any one of the inventions [iv] to [viii] and drying the slurry composition after the coating.

### Advantageous Effects of Invention

In a case where a lithium electrode is prepared using the binder agent composition described herein, it is possible to provide an electrode which retains a high charge/discharge capacity even though a carbon-containing active material, particularly, an active material containing a silicon oxide with carbon-coated surface including SiOC is used. Furthermore, in a case where the electrode is used, it is possible to provide a battery which can retain a high capacity for a long period of time.

### Description of Embodiments

In the present specification, "binder solution" is a term referring to an aqueous solution obtained by mixing one or more kinds of polymers and other compounds (additives such as a crosslinking agent) with water. "Binder" is a term referring to a state where moisture has been removed from the binder solution by drying. The binder agent composition used in the present invention is a sort of binder solution, and a binder agent derived from the binder agent composition used in the present invention is a sort of binder.

In the present specification, "(meth)acrylic acid" is a generic term for acrylic acid, a methacrylic acid, and a mixture of these. The same is true for other similar expressions.

Furthermore, in the present specification, "n-" represents a normal-isomer, and "i-" represents an iso-isomer.

### Copolymer containing monomer unit derived from acrylic acid and one or two kinds of monomer units derived from compound represented by general formula (I) or general formula (II) as constituent component

The binder agent composition used in the present invention contains a copolymer which contains a monomer unit derived from acrylic acid and one or two kinds of monomer units derived from a compound represented by the general formula (I) or the general formula (II) as a constituent components (hereinafter, the copolymer will be simply described as a copolymer used in the present invention in some cases).

The alkyl group having 1 to 20 carbon atoms represented by R₂ in the general formula (I) preferably has 1 to 10 carbon atoms, and more preferably has 1 to 6 carbon atoms. Furthermore, the alkyl group may be any of a linear, branched, or cyclic alkyl group, and is preferably a linear alkyl group. Specifically, examples thereof include a methyl group, an ethyl group, a n-propyl group, an isopropyl group, a n-butyl group, an isobutyl group, a sec-butyl group, a tert-butyl group, a cyclobutyl group, a n-pentyl group, an isopentyl group, a sec-pentyl group, a tert-pentyl group, a neopentyl group, a 2-methylbutyl group, a 1,2-dimethylpropyl group, a cyclopentyl group, a n-hexyl group, an isohexyl group, a sec-hexyl group, a tert-hexyl group, a neohexyl group, a 2-methylpentyl group, a 1,2-dimethylbutyl group, a 2,3-dimethylbutyl group, a cyclohexyl group, a n-heptyl group, an isoheptyl group, a sec-heptyl group, a tert-heptyl group, a neoheptyl group, a cycloheptyl group, a n-octyl group, an isooctyl group, a sec-octyl group, a tert-octyl group, a neooctyl group, a cyclooctyl group, a n-nonyl group, an isononyl group, a sec-nonyl group, a tert-nonyl group, a neononyl group, a cyclononyl group, a n-decyl group, an isodecyl group, a sec-decyl group, a tert-decyl group, a neodecyl group, a cyclodecyl group, a n-undecyl group, a n-dodecyl group, a n-tridecyl group, a n-tetradecyl group, a n-pentadecyl group, a n-hexadecyl group, a n-heptadecyl group, a n-octadecyl group, a n-nonadecyl group, a n-eicosyl group, and the like. Among these, the methyl group, the ethyl group, the n-propyl group, the isopropyl group, the n-butyl group, the isobutyl group, the sec-butyl group, the tert-butyl group, the n-pentyl group, the isopentyl group, the sec-pentyl group, the tert-pentyl group, the neopentyl group, the 2-methylbutyl group, the 1,2-dimethylpropyl group, the n-hexyl group, the isohexyl group, the sec-hexyl group, the tert-hexyl group, the neohexyl group, the 2-methylpentyl group, the 1,2-dimethylbutyl group, and the 2,3-dimethylbutyl group are preferable, the methyl group, the ethyl group, the n-propyl group, the n-butyl group, the n-pentyl group, and the n-hexyl group are more preferable, and the n-butyl group, the n-pentyl group, and the n-hexyl group are particularly preferable.

It is preferable that in the alkyl group having 1 to 20 carbon atoms substituted with a fluorine atom represented by R₂ in the general formula (I), a terminal portion is fluorinated. As such an alkyl group, a perfluoroalkyl group or a (perfluoroalkyl)alkyl group is preferable, and the (perfluoroalkyl)alkyl group is more preferable. Furthermore, the alkyl group preferably has 1 to 10 carbon atoms and is preferably a linear alkyl group. Specifically, examples thereof include a fluoroethyl group, a fluoropropyl group, a fluorobutyl group, a fluoropentyl group, a fluorohexyl group, a fluoroheptyl group, a fluorooctyl group, a fluorononyl group, a fluorodecyl group, a fluoroundecyl group, a fluorododecyl group, a fluorotridecyl group, a fluorotetradecyl group, a fluoropentadecyl group, a fluorohexadecyl group, a fluoroheptadecyl group, a fluorooctadecyl group, a fluorononadecyl group, a fluoroeicosyl group, a trifluoromethyl group, a trifluoroethyl group, a trifluoropropyl group, a trifluorobutyl group, a trifluoropentyl group, a trifluorohexyl group, a perfluoroethyl group, a perfluoropropyl group, a perfluorobutyl group, a perfluoropentyl group, a perfluorohexyl group, a (perfluorobutyl)methyl group, a (perfluorobutyl)ethyl group, a (perfluorobutyl)propyl group, a (perfluorohexyl)methyl group, a (perfluorohexyl)ethyl group, a (perfluorohexyl)propyl group, and the like. Among these, the trifluoromethyl group, the trifluoroethyl group, the trifluoropropyl group, the trifluorobutyl group, the trifluoropentyl group, the trifluorohexyl group, the perfluoroethyl group, the perfluoropropyl group, the perfluorobutyl group, the perfluoropentyl group, the perfluorohexyl group, the (perfluorobutyl)methyl group, the (perfluorobutyl)ethyl group, the (perfluorobutyl)propyl group, the (perfluorohexyl)methyl group, the (perfluorohexyl)ethyl group, and the (perfluorohexyl)propyl group are preferable, the trifluoromethyl group, the trifluoroethyl group, the (perfluorobutyl)methyl group, the (perfluorobutyl)ethyl group, the (perfluorohexyl)methyl group, and the (perfluorohexyl)ethyl group are more preferable, and the (perfluorobutyl)ethyl group and the (perfluorohexyl)ethyl group are particularly preferable.

It is preferable that in the alkyl group having 1 to 20 carbon atoms substituted with a hydroxy group represented by R₂ in the general formula (I), a terminal portion is substituted with a hydroxy group. As such an alkyl group, an alkyl group in which one or two hydrogen atoms are substituted with a hydroxy group is preferable, and an alkyl group in which one hydrogen atom is substituted with a hydroxy group is more preferable. Furthermore, the alkyl group preferably has 1 to 6 carbon atoms and is preferably a linear alkyl group. Specifically, examples thereof include a hydroxymethyl group, a hydroxyethyl group, a dihydroxyethyl group, a hydroxypropyl group, a dihydroxypropyl group, a hydroxybutyl group, a dihydroxybutyl group, a hydroxypentyl group, a dihydroxypentyl group, a hydroxyhexyl group, a dihydroxyhexyl group, a hydroxyheptyl group, a hydroxyoctyl group, a hydroxynonyl group, a hydroxydecyl group, a hydroxyundecyl group, a hydroxydodecyl group, a hydroxytridecyl group, a hydroxytetradecyl group, a hydroxypentadecyl group, a hydroxyhexadecyl group, a hydroxyheptadecyl group, a hydroxyoctadecyl group, a hydroxynonadecyl group, a hydroxyeicosyl group, and the like. Among these, the hydroxymethyl group, the hydroxyethyl group, the dihydroxyethyl group, the hydroxypropyl group, the dihydroxypropyl group, the hydroxybutyl group, the dihydroxybutyl group, the hydroxypentyl group, the dihydroxypentyl group, the hydroxyhexyl group, and the dihydroxyhexyl group are preferable, the hydroxymethyl group, the hydroxyethyl group, the hydroxypropyl group, the hydroxybutyl group, the hydroxypentyl group, and the hydroxyhexyl group are more preferable, and the hydroxymethyl group, the hydroxyethyl group, the hydroxypropyl group, and the hydroxybutyl group are even more preferable, and the hydroxyethyl group is particularly preferable.

Examples of the aryl group having 6 to 10 carbon atoms represented by R₂ in the general formula (I) include a phenyl group, a naphthyl group, and the like. Among these, the phenyl group is preferable.

The arylalkyl group having 7 to 13 carbon atoms represented by R₂ in the general formula (I) preferably has 7 to 9 carbon atoms. Specifically, examples thereof include a benzyl group, a phenyl ethyl group, a phenyl propyl group, a naphthyl methyl group, a naphthyl ethyl group, a naphthyl propyl group, and the like. Among these, the benzyl group, the phenyl ethyl group, and the phenyl propyl group are preferable, and the benzyl group is more preferable.

Examples of the alkoxyalkyl group having 2 to 9 carbon atoms represented by R₂ in the general formula (I) include a methoxymethyl group, a methoxyethyl group, a methoxypropyl group, a methoxybutyl group, a methoxypentyl group, a methoxyhexyl group, a methoxyheptyl group, a methoxyoctyl group, an ethoxymethyl group, an ethoxyethyl group, an ethoxypropyl group, an ethoxybutyl group, an ethoxypentyl group, an ethoxyhexyl group, an ethoxyheptyl group, a propoxymethyl group, a propoxyethyl group, a propoxypropyl group, a propoxybutyl group, a propoxypentyl group, a propoxyhexyl group, and the like.

Examples of the alkoxyalkoxyalkyl group having 3 to 9 carbon atoms represented by R₂ in the general formula (I) include a methoxymethoxymethyl group, a methoxymethoxyethyl group, a methoxymethoxypropyl group, an ethoxymethoxymethyl group, an ethoxymethoxyethyl group, an ethoxymethoxypropyl group, a propoxymethoxymethyl group, a propoxymethoxyethyl group, a propoxymethoxypropyl group, a methoxyethoxymethyl group, a methoxyethoxyethyl group, a methoxyethoxypropyl group, an ethoxyethoxymethyl group, an ethoxyethoxyethyl group, an ethoxyethoxypropyl group, a propoxyethoxymethyl group, a propoxyethoxyethyl group, a propoxyethoxypropyl group, a methoxypropoxymethyl group, a methoxypropoxyethyl group, a methoxypropoxypropyl group, an ethoxypropoxymethyl group, an ethoxypropoxyethyl group, an ethoxypropoxypropyl group, a propoxypropoxymethyl group, a propoxypropoxyethyl group, a propoxypropoxypropyl group, and the like.

The aryloxyalkyl group having 7 to 13 carbon atoms represented by R₂ in the general formula (I) preferably has an aryloxyalkyl group having 7 to 9 carbon atoms. Specifically, examples thereof include a phenoxymethyl group, a phenoxyethyl group, a phenoxypropyl group, a naphthyloxymethyl group, a naphthyloxyethyl group, a naphthyloxypropyl group, and the like. Among these, the phenoxymethyl group, the phenoxyethyl group, and the phenoxypropyl group are preferable, and the phenoxyethyl group is more preferable.

Examples of the morpholinoalkyl group having 5 to 7 carbon atoms represented by R₂ in the general formula (I) include a morpholinomethyl group, a morpholinoethyl group, a morpholinopropyl group, and the like.

Examples of the trialkylsilyl group having 3 to 9 carbon atoms represented by R₂ in the general formula (I) include a trimethylsilyl group, a triethylsilyl group, a tripropylsilyl group, a dimethylethylsilyl group, a diethylmethylsilyl group, and the like.

Examples of the alicyclic hydrocarbon group having 6 to 12 carbon atoms that has an oxygen atom represented by R₂ in the general formula (I) include a dicyclopentenyloxyethyl group and the like.

Examples of the alicyclic hydrocarbon group having 6 to 12 carbon atoms that does not have an oxygen atom represented by R₂ in the general formula (I) include a cyclohexyl group, an isobornyl group, a dicyclopentanyl group, and the like.

Examples of the dialkylaminoalkyl group having 3 to 9 carbon atoms represented by R₂ in the general formula (I) include a dimethylaminomethyl group, a dimethylaminoethyl group, a dimethylaminopropyl group, a diethylaminomethyl group, a diethylaminoethyl group, a diethylaminopropyl group, a dipropylaminomethyl group, a dipropylaminoethyl group, a dipropylaminopropyl group, and the like.

In the hexahydrophthalimide-N-alkyl group having 9 to 14 carbon atoms represented by R₂ in the general formula (I), the alkyl group generally has 1 to 6 carbon atoms. The alkyl group preferably has 1 to 3 carbon atoms and is preferably a linear alkyl group. Specifically, examples of the hexahydrophthalimide-N-alkyl group having 9 to 14 carbon atoms include a 2-hexahydrophthalimidemethyl group, a 2-hexahydrophthalimideethyl group, a 2-hexahydrophthalimidepropyl group, a 2-hexahydrophthalimidebutyl group, a 2-hexahydrophthalimidepentyl group, a 2-hexahydrophthalimidehexyl group, and the like.

As the alkylene group having 1 to 6 carbon atoms that has a hydroxy group as a substituent represented by R₃ in the general formula (IV), an alkylene group in which one hydrogen atom is substituted with a hydroxy group is preferable. The alkylene group preferably has 1 to 3 carbon atoms. Specifically, examples thereof include a hydroxymethylene group, a hydroxyethylene group, a hydroxytrimethylene group, a hydroxytetramethylene group, a hydroxypentamethylene group, a hydroxyhexamethylene group, and the like. Among these, the hydroxymethylene group, the hydroxyethylene group, and the hydroxytrimethylene group are preferable, and the hydroxytrimethylene group is more preferable.

The unsubstituted alkylene group having 1 to 6 carbon atoms represented by R₃ in the general formula (IV) preferably has an alkylene group having 2 to 4 carbon atoms. Specifically, examples thereof include a methylene group, an ethylene group, a trimethylene group, a propylene group, a tetramethylene group, a pentamethylene group, a hexamethylene group, and the like. Among these, the ethylene group, the trimethylene group, the propylene group, and the tetramethylene group are preferable, the ethylene group and the propylene group are more preferable, and the ethylene group is particularly preferable.

The alkyl group having 1 to 6 carbon atoms represented by R₄ in the general formula (IV) preferably has an alkyl group having 1 to 3 carbon atoms. The alkyl group may be any of a linear, branched, or cyclic alkyl group, and is preferably a linear alkyl group. Specifically, exampled thereof include a methyl group, an ethyl group, a n-propyl group, an isopropyl group, a n-butyl group, an isobutyl group, a sec-butyl group, a tert-butyl group, a cyclobutyl group, a n-pentyl group, an isopentyl group, a sec-pentyl group, a tert-pentyl group, a neopentyl group, a 2-methylbutyl group, a 1,2-dimethylpropyl group, a cyclopentyl group, a n-hexyl group, an isohexyl group, a sec-hexyl group, a tert-hexyl group, a neohexyl group, a 2-methylpentyl group, a 1,2-dimethylbutyl group, a 2,3-dimethylbutyl group, a cyclohexyl group, and the like. Among these, the methyl group, the ethyl group, the n-propyl group, and the isopropyl group are preferable, and the methyl group is more preferable.

As R₃ in the general formula (IV), an unsubstituted alkylene group having 2 to 6 carbon atoms is preferable, and an unsubstituted alkylene group having 2 to 4 carbon atoms is more preferable. Among these, an ethylene group, a trimethylene group, a propylene group, and a tetramethylene group are preferable, the ethylene group and the propylene group are more preferable, and the ethylene group is particularly preferable.

As R₄ in the general formula (IV), a hydrogen atom and an alkyl group having 1 to 6 carbon atoms are preferable, the hydrogen atom and an alkyl group having 1 to 3 carbon atoms are more preferable, and the hydrogen atom and a methyl group are particularly preferable.

As v in the general formula (IV), an integer of 2 to 10 is preferable, and an integer of 4 to 10 is more preferable. Particularly, v pieces of -(R₃-O)- group may be the same as or different from each other.

Specific examples of the group represented by the general formula (IV) include a polyethylene glycol group, a methyl polyethylene glycol group, an ethyl polyethylene glycol group, a n-propyl polyethylene glycol group, an isopropyl polyethylene glycol group, a phenyl polyethylene glycol group, a polytrimethylene glycol group, a polypropylene glycol group, a methyl polypropylene glycol group, an ethyl polypropylene glycol group, a n-propyl polypropylene glycol group, an isopropyl polypropylene glycol group, a phenyl polypropylene glycol group, a polytetramethylene glycol group, a polypentamethylene glycol group, a polyhexamethylene glycol group, and the like. Among these, the polyethylene glycol group, the methyl polyethylene glycol group, the polypropylene glycol group, and the methyl polypropylene glycol group are preferable, and the polyethylene glycol group and the methyl polyethylene glycol group are more preferable.

Examples of the alkyl group having 1 to 3 carbon atoms represented by R₅ to R₇ in the general formula (V) include a methyl group, an ethyl group, a n-propyl group, an isopropyl group, and the like. Among these, the methyl group is preferable.

Examples of the alkylene group having 1 to 3 carbon atoms represented by R₈ in the general formula (V) include a methylene group, an ethylene group, a trimethylene group, and the like.

Specific examples of the group represented by the general formula (V) include a trimethylammonium methyl group, a trimethylammonium ethyl group, a trimethylammonium propyl group, a triethylammonium methyl group, a triethylammonium ethyl group, a triethylammonium propyl group, and the like.

R₁ in the general formula (I) may be a hydrogen atom or a methyl group. In a case where R₂ represents a hydrogen atom, R₁ represents a methyl group.

As R₂ in the general formula (I), a hydrogen atom; an alkyl group having 1 to 20 carbon atoms; an alkyl group having 1 to 20 carbon atoms substituted with a fluorine atom or a hydroxy group; an arylalkyl group having 7 to 13 carbon atoms; an aryloxyalkyl group having 7 to 13 carbon atoms; a hexahydrophthalimide-N-alkyl group having 9 to 14 carbon atoms; or the group represented by the general formula (IV) is preferable, the hydrogen atom; the alkyl group having 1 to 20 carbon atoms; the alkyl group having 1 to 20 carbon atoms substituted with a fluorine atom or a hydroxy group; the aryloxyalkyl group having 7 to 13 carbon atoms; or the group represented by the general formula (IV) is more preferable, the hydrogen atom or the alkyl group having 1 to 20 carbon atoms substituted with a fluorine atom or a hydroxy group is even more preferable, and the alkyl group having 1 to 20 carbon atoms substituted with a hydroxy group is particularly preferable.

Preferred specific examples of the compound represented by the general formula (I) include a compound represented by the following general formula (I-I). 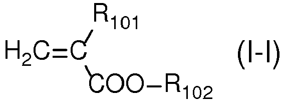 [In the formula, R₁₀₁ represents a hydrogen atom or a methyl group (here, in a case where R₁₀₂ represents a hydrogen atom, R₁₀₁ represents a methyl group), R₁₀₂ represents a hydrogen atom; an alkyl group having 1 to 20 carbon atoms; an alkyl group having 1 to 20 carbon atoms substituted with a fluorine atom or a hydroxy group; an arylalkyl group having 7 to 13 carbon atoms; an aryloxyalkyl group having 7 to 13 carbon atoms; a hexahydrophthalimide-N-alkyl group having 9 to 14 carbon atoms; or a group represented by the following general formula (IV-I) 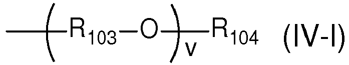 (in the formula, R₁₀₃ represents an unsubstituted alkylene group having 2 to 6 carbon atoms, R₁₀₄ represents a hydrogen atom or an alkyl group having 1 to 6 carbon atoms, and v is the same as v described above.).]

Examples of the alkyl group having 1 to 20 carbon atoms; the alkyl group having 1 to 20 carbon atoms substituted with a fluorine atom or a hydroxy group; the arylalkyl group having 7 to 13 carbon atoms; the aryloxyalkyl group having 7 to 13 carbon atoms; and the hexahydrophthalimide-N-alkyl group having 9 to 14 carbon atoms represented by R₁₀₂ in the general formula (I-I) are the same as the examples of the alkyl group, the arylalkyl group, the aryloxyalkyl group, and the hexahydrophthalimide-N-alkyl group represented by R₂ in the general formula (I). Furthermore, those preferred as the alkyl group, the arylalkyl group, the aryloxyalkyl group, and the hexahydrophthalimide-N-alkyl group represented by R₂ are also preferred as the alkyl group, the arylalkyl group, the aryloxyalkyl group, and the hexahydrophthalimide-N-alkyl group represented by R₁₀₂.

The unsubstituted alkylene group having 2 to 6 carbon atoms represented by R₁₀₃ in the general formula (IV-I) preferably has an alkylene group having 2 to 4 carbon atoms. Specifically, examples thereof include an ethylene group, a trimethylene group, a propylene group, a tetramethylene group, a pentamethylene group, a hexamethylene group, and the like. Among these, the ethylene group, the trimethylene group, the propylene group, and the tetramethylene group are preferable, the ethylene group and the propylene group are more preferable, and the ethylene group is particularly preferable.

Examples of the alkyl group having 1 to 6 carbon atoms represented by R₁₀₄ in the general formula (IV-I) are the same as the examples of the alkyl group having 1 to 6 carbon atoms represented by R₄ in the general formula (IV). Furthermore, those preferred as the alkyl group represented by R₄ are also preferred as the alkyl group represented by R₁₀₄.

As R₁₀₄ in the general formula (IV-I), a hydrogen atom and an alkyl group having 1 to 3 carbon atoms are preferable, and the hydrogen atom and a methyl group are more preferable.

Specific examples of the group represented by the general formula (IV-I) include a polyethylene glycol group, a methyl polyethylene glycol group, an ethyl polyethylene glycol group, a n-propyl polyethylene glycol group, an isopropyl polyethylene glycol group, a polytrimethylene glycol group, a polypropylene glycol group, a methyl polypropylene glycol group, an ethyl polypropylene glycol group, a n-propyl polypropylene glycol group, an isopropyl polypropylene glycol group, a polytetramethylene glycol group, a polypentamethylene glycol group, a polyhexamethylene glycol group, and the like. Among these, the polyethylene glycol group, the methyl polyethylene glycol group, the polypropylene glycol group, and the methyl polypropylene glycol group are preferable, and the polyethylene glycol group and the methyl polyethylene glycol group are more preferable.

R₁₀₁ in the general formula (I-I) may be a hydrogen atom or a methyl group. In a case where R₁₀₂ is a hydrogen atom, R₁₀₁ represents a methyl group.

As R₁₀₂ in the general formula (I-I), a hydrogen atom; an alkyl group having 1 to 20 carbon atoms; an alkyl group having 1 to 20 carbon atoms substituted with a fluorine atom or a hydroxy group; an aryloxyalkyl group having 7 to 13 carbon atoms; or the group represented by the general formula (IV-I) is preferable, the hydrogen atom or the alkyl group having 1 to 20 carbon atoms substituted with a fluorine atom or a hydroxy group is more preferable, and the alkyl group having 1 to 20 carbon atoms substituted with a hydroxy group is particularly preferable.

More preferred specific examples of the compound represented by the general formula (I) include a compound represented by the following general formula (I-II). 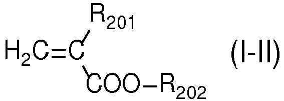 [In the formula, R₂₀₁ represents a hydrogen atom or a methyl group (here, in a case where R₂₀₂ is a hydrogen atom, R₂₀₁ represents a methyl group), and R₂₀₂ represents a hydrogen atom; an alkyl group having 1 to 20 carbon atoms; an alkyl group having 1 to 20 carbon atoms substituted with a fluorine atom or a hydroxy group; an aryloxyalkyl group having 7 to 13 carbon atoms; or a group represented by a general formula (IV-II) 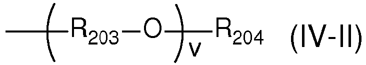 (in the formula, R₂₀₃ represents an unsubstituted alkylene group having 2 to 4 carbon atoms, R₂₀₄ represents a hydrogen atom or an alkyl group having 1 to 3 carbon atoms, and v is the same as v described above.).]

Examples of the alkyl group having 1 to 20 carbon atoms; the alkyl group having 1 to 20 carbon atoms substituted with a fluorine atom or a hydroxy group; and the aryloxyalkyl group having 7 to 13 carbon atoms represented by R₂₀₂ in the general formula (I-II) are the same as the examples of the alkyl group and the aryloxyalkyl group represented by R₂ in the general formula (I). Furthermore, those preferred as the alkyl group and the aryloxyalkyl group represented by R₂ are also preferred as the alkyl group and the aryloxyalkyl group represented by R₂₀₂.

Examples of the unsubstituted alkylene group having 2 to 4 carbon atoms represented by R₂₀₃ in the general formula (IV-II) include an ethylene group, a trimethylene group, a propylene group, a tetramethylene group, and the like. Among these, the ethylene group and the propylene group are preferable, and the ethylene group is more preferable.

Examples of the alkyl group having 1 to 3 carbon atoms represented by R₂₀₄ in the general formula (IV-II) include a methyl group, an ethyl group, a n-propyl group, an isopropyl group, and the like. Among these, the methyl group is preferable.

As R₂₀₄ in the general formula (IV-II), a hydrogen atom and a methyl group are preferable.

Specific examples of the group represented by the general formula (IV-II) include a polyethylene glycol group, a methyl polyethylene glycol group, an ethyl polyethylene glycol group, a n-propyl polyethylene glycol group, an isopropyl polyethylene glycol group, a polytrimethylene glycol group, a polypropylene glycol group, a methyl polypropylene glycol group, an ethyl polypropylene glycol group, a n-propyl polypropylene glycol group, an isopropyl polypropylene glycol group, and a polytetramethylene glycol group. Among these, the polyethylene glycol group, the methyl polyethylene glycol group, the polypropylene glycol group, and the methyl polypropylene glycol group are preferable, and the polyethylene glycol group and the methyl polyethylene glycol group are more preferable.

R₂₀₁ in the general formula (I-II) may be a hydrogen atom or a methyl group. In a case where R₂₀₂ is a hydrogen atom, R₂₀₁ represents a methyl group.

As R₂₀₂ in the general formula (I-II), a hydrogen atom or an alkyl group having 1 to 20 carbon atoms substituted with a fluorine atom or a hydroxy group is preferable, and the alkyl group having 1 to 20 carbon atoms substituted with a hydroxy group is more preferable.

Particularly preferred specific examples of the compound represented by the general formula (I) include a methacrylic acid, n-butyl (meth)acrylate, n-pentyl (meth)acrylate, n-hexyl (meth)acrylate, trifluoromethyl (meth)acrylate, trifluoroethyl (meth)acrylate, (perfluorobutyl)methyl (meth)acrylate, 2-(perfluorobutyl)ethyl (meth)acrylate, (perfluorohexyl)methyl (meth)acrylate, 2-(perfluorohexyl)ethyl (meth)acrylate, hydroxymethyl (meth)acrylate, hydroxyethyl (meth)acrylate, hydroxypropyl (meth)acrylate, hydroxybutyl (meth)acrylate, hydroxypentyl (meth)acrylate, hydroxyhexyl (meth)acrylate, phenoxymethyl (meth)acrylate, phenoxyethyl (meth)acrylate, phenoxypropyl (meth)acrylate, polyethylene glycol (meth)acrylate, polyethylene glycol monomethyl ether (meth)acrylate, and the like. Among these, the methacrylic acid, the 2-(perfluorobutyl)ethyl (meth)acrylate, the 2-(perfluorohexyl)ethyl (meth)acrylate, the hydroxymethyl (meth)acrylate, the hydroxyethyl (meth)acrylate, the hydroxypropyl (meth)acrylate, the hydroxybutyl (meth)acrylate, the hydroxypentyl (meth)acrylate, and the hydroxyhexyl (meth)acrylate are preferable, the hydroxymethyl (meth)acrylate, the hydroxyethyl (meth)acrylate, the hydroxypropyl (meth)acrylate, and the hydroxybutyl (meth)acrylate are more preferable, and the hydroxyethyl (meth)acrylate is particularly preferable. The compound represented by the general formula (I) may be a commercial compound or a compound appropriately synthesized by a known method.

Examples of the alkyl group having 1 to 6 carbon atoms represented by R₁₂ and R₁₃ in the general formula (II) are the same as the examples of the alkyl group having 1 to 6 carbon atoms represented by R₄ in the general formula (IV). Among these, a methyl group, an ethyl group, a n-propyl group, and an isopropyl group are preferable, and the isopropyl group is more preferable.

Examples of the dialkylaminoalkyl group having 3 to 9 carbon atoms represented by R₁₃ in the general formula (II) include a dimethylaminomethyl group, a dimethylaminoethyl group, a dimethylaminopropyl group, a diethylaminomethyl group, a diethylaminoethyl group, a diethylaminopropyl group, a dipropylaminomethyl group, a dipropylaminoethyl group, a dipropylaminopropyl group, and the like.

It is preferable that in the hydroxyalkyl group having 1 to 6 carbon atoms represented by R₁₃ in the general formula (II), a terminal portion is substituted with a hydroxy group is preferable. As such a hydroxyalkyl group, a hydroxyalkyl group in which one or two hydrogen atoms are substituted with a hydroxy group is preferable, and a hydroxyalkyl group in which one hydrogen atom is substituted with a hydroxy group is more preferable. In addition, the hydroxyalkyl group preferably has 1 to 3 carbon atoms and is preferably a linear hydroxyalkyl group. Specifically, examples thereof include a hydroxymethyl group, a hydroxyethyl group, a dihydroxyethyl group, a hydroxypropyl group, a dihydroxypropyl group, a hydroxybutyl group, a dihydroxybutyl group, a hydroxypentyl group, a dihydroxypentyl group, a hydroxyhexyl group, and a dihydroxyhexyl group. Among these, the hydroxymethyl group, the hydroxyethyl group, the hydroxypropyl group, the hydroxybutyl group, the hydroxypentyl group, and the hydroxyhexyl group are preferable, and the hydroxyethyl group is more preferable.

As R₁₁ in the general formula (II), a hydrogen atom is preferable.

As R₁₂ in the general formula (II), a hydrogen atom and an alkyl group having 1 to 3 carbon atoms are preferable, and the hydrogen atom is more preferable.

As R₁₃ in the general formula (II), a hydrogen atom, an alkyl group having 1 to 6 carbon atoms, and a hydroxyalkyl group having 1 to 6 carbon atoms are preferable, the hydrogen atom and the alkyl group having 1 to 6 carbon atoms are more preferable, the hydrogen atom and an alkyl group having 1 to 3 carbon atoms are even more preferable, and the hydrogen atom is particularly preferable.

Preferred specific examples of the compound represented by the general formula (II) include a compound represented by the following general formula (II-I). 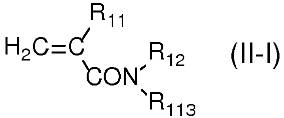 (In the formula, R₁₁₃ represents a hydrogen atom, an alkyl group having 1 to 6 carbon atoms, or a hydroxyalkyl group having 1 to 6 carbon atoms, and R₁₁ and R₁₂ are the same as R₁₁ and R₁₂ described above.)

Examples of the alkyl group having 1 to 6 carbon atoms and the hydroxyalkyl group having 1 to 6 carbon atoms represented by R₁₁₃ in the general formula (II-I) are the same as the examples of the alkyl group and the hydroxyalkyl group represented by R₁₃ in the general formula (II). Furthermore, those preferred as the alkyl group and the hydroxyalkyl group represented by R₁₃ are also preferred as the alkyl group and the hydroxyalkyl group represented by R₁₁₃.

As R₁₁₃ in the general formula (II-I), a hydrogen atom and an alkyl group having 1 to 6 carbon atoms are preferable, the hydrogen atom and an alkyl group having 1 to 3 carbon atoms are more preferable, and the hydrogen atom is particularly preferable.

More preferred specific examples of the compound represented by the general formula (II) include a compound represented by the following general formula (II-II). 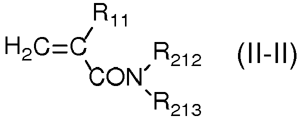 (In the formula, R₂₁₂ and R₂₁₃ each independently represent a hydrogen atom or an alkyl group having 1 to 3 carbon atoms, and R₁₁ is the same as R₁₁ described above.)

Examples of the alkyl group having 1 to 3 carbon atoms represented by R₂₁₂ and R₂₁₃ in the general formula (II-II) include a methyl group, an ethyl group, a n-propyl group, an isopropyl group, and the like. Among these, the isopropyl group is preferable.

As R₂₁₂ and R₂₁₃ in the general formula (II-II), a hydrogen atom is preferable.

Particularly preferred specific examples of the compound represented by the general formula (II) include (meth)acrylamide, N-methyl (meth)acrylamide, N-ethyl (meth)acrylamide, N-n-propyl (meth)acrylamide, N-isopropyl (meth)acrylamide, N,N-dimethyl (meth)acrylamide, N,N-diethyl (meth)acrylamide, N,N-di-n-propyl (meth)acrylamide, N,N-diisopropyl (meth)acrylamide, and the like. Among these, the (meth)acrylamide, the N-methyl (meth)acrylamide, the N-ethyl (meth)acrylamide, the N-n-propyl (meth)acrylamide, the N-isopropyl (meth)acrylamide, and the N,N-dimethyl (meth)acrylamide are preferable, the (meth)acrylamide is more preferable, and the acrylamide is particularly preferable. The compound represented by the general formula (II) may be a commercial compound or a compound appropriately synthesized by a known method.

Examples of the combination of the constituent components of the copolymer used in the present invention include combinations described in the following table. Among these, combinations 1 to 4 are preferable, the combinations 1, 3, and 4 are more preferable, and the combination 1 is particularly preferable. As the combination 1, a combination of a monomer unit derived from acrylic acid and one kind of monomer unit derived from the compound represented by the general formula (I-I) is preferable, and a combination of a monomer unit derived from acrylic acid and one kind of monomer unit derived from the compound represented by the general formula (I-II) is more preferable. More specifically, a combination of a monomer unit derived from acrylic acid and one kind of monomer unit derived from a compound included in the specific examples particularly preferred as the compound represented by the general formula (I) is preferable.

| | Compound from which monomer unit is derived | | |
|---|---|---|---|
| Combination 1 | Acrylic acid | One kind of compound represented by general formula (I) | - |
| Combination 2 | Acrylic acid | One kind of compound represented by general formula (II) | - |
| Combination 3 | Acrylic acid | Two kinds of compounds represented by general formula (I) | |
| Combination 4 | Acrylic acid | One kind of compound represented by general formula (I) | One kind of compound represented by general formula (II) |
| Combination 5 | Acrylic acid | Two kinds of compounds represented by general formula (II) | |

In the copolymer used in the present invention, the mass ratio of the monomer unit derived from acrylic acid to the monomer unit derived from the compound represented by the general formula (I) or the general formula (II), that is represented by monomer unit derived from acrylic acid/monomer unit derived from compound represented by general formula (I) or general formula (II), is generally 30/70 to 70/30, and preferably 40/60 to 60/40.

The copolymer used in the present invention may be neutralized. It is preferable that the copolymer used in to the present invention is neutralized. In other words, in the copolymer used in the present invention, some or all of carboxy groups may have turned into a salt. As the neutralized copolymer used in to the present invention, a copolymer neutralized by an alkali metal such as sodium hydroxide, lithium hydroxide, or potassium hydroxide is preferable, and a copolymer neutralized by sodium hydroxide is more preferable. In a case where the neutralized copolymer used in the present invention is used, the dispersibility of an electrode member is improved, and hence an active material and a conductive compound can be evenly distributed onto a current collector. Accordingly, the electric characteristics of the electrode can be further improved. In this case, a degree of neutralization is generally 60% to 100%, preferably 70% to 100%, and more preferably 70% to 90%.

The copolymer used in to the present invention may be crosslinked. It is preferable that the copolymer used in the present invention is crosslinked. Examples of a crosslinking agent used for crosslinking the copolymer used in the present invention include a crosslinking agent selected from compounds described in general formulae [1] to [13] and a polymer described in a general formula [14] that will be described later (hereinafter, the crosslinking agent will be simply described as a crosslinking agent used in the present invention in some cases). The crosslinked copolymer used in the present invention may also be neutralized.

Provided that the rotation speed of a rotational viscometer is 12 rpm, the viscosity of the crosslinked copolymer used in the present invention is generally 500 to 50,000 mPa·s, and preferably 1,000 to 50,000 mPa·s. It should be noted that as the rotational viscometer, a viscometer capable of measuring a viscosity of up to 50,000 mPa·s at a rotation speed of 12 rpm was used. The viscosity is a value of viscosity of a substance, which was obtained by dispersing (suspending) the copolymer used in the present invention in water at a concentration of 1% by mass, and measured at a temperature of 20°C to 25°C by using a B type rotational viscometer.

The weight-average molecular weight of the copolymer used in the present invention is generally 1,000 to 10,000,000, and preferably 10,000 to 5,000,000.

The copolymer used in the present invention is preferably crosslinked by the crosslinking agent described herein, and more preferably crosslinked by the crosslinking agent described herein and neutralized.

Specifically, the copolymer used in the present invention is preferably a copolymer containing a monomer unit derived from acrylic acid and one or two kinds of monomer units derived from the compound represented by the general formula (I) or the general formula (II) as constituent components, in which the copolymer is crosslinked by the crosslinking agent described herein; and more preferably a copolymer containing a monomer unit derived from acrylic acid and one or two kinds of monomer units derived from the compound represented by the general formula (I) or the general formula (II) as constituent components, in which the copolymer is crosslinked by the crosslinking agent described herein and neutralized. Especially, the copolymer used in the present invention is preferably a copolymer containing a monomer unit derived from acrylic acid and one kind of monomer unit derived from the compound represented by the general formula (I) as constituent components, in which the copolymer is crosslinked by the crosslinking agent described herein and neutralized; more preferably a copolymer containing a monomer unit derived from acrylic acid and one kind of monomer unit derived from the compound represented by the general formula (I-I) as constituent components, in which the copolymer is crosslinked by the crosslinking agent described herein and neutralized; even more preferably a copolymer containing a monomer unit derived from acrylic acid and one kind of monomer unit derived from the compound represented by the general formula (I-II) as constituent components, in which the copolymer is crosslinked by the crosslinking agent described herein and neutralized; and particularly preferably a copolymer containing a monomer unit derived from acrylic acid and one kind of monomer unit derived from the compound included in the particularly preferred specific examples as the compound represented by the general formula (I) as constituent components, in which the copolymer is crosslinked by the crosslinking agent described herein and neutralized.

### Crosslinking agent used in the present invention

Examples of the crosslinking agent used for crosslinking the copolymer used in the present invention include a crosslinking agent selected from compounds described in the
following general formulae [1] to [13] and a polymer described in the following general formula [14]. 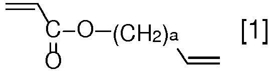 (In the formula, a represents an integer of 1 to 6.) 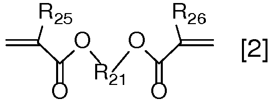 [In the formula, R₂₅ and R₂₆ each independently represent a hydrogen atom or a methyl group, R₂₁ represents an alkylene group having 1 to 20 carbon atoms, a group represented by the following general formula [2-1] 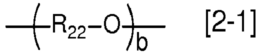 (in the formula, R₂₂ represents an alkylene group having 1 to 6 carbon atoms, and b represents an integer of 1 to 6.),
or a group represented by the following general formula [2-2] 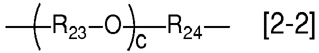 (in the formula, R₂₃ and R₂₄ each independently represent an alkylene group having 1 to 6 carbon atoms, and c represents an integer of 1 to 22.).] 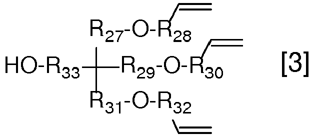 (in the formula, R₂₇ to R₃₃ each independently represent an alkylene group having 1 to 3 carbon atoms.) 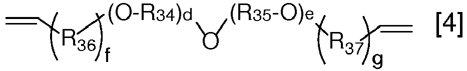 (in the formula, R₃₄ to R₃₇ each independently represent an alkylene group having 1 to 6 carbon atoms, d represents an integer of 1 to 6, e represents an integer of 0 to 6, and f and g each independently represent an integer of 0 or 1.) 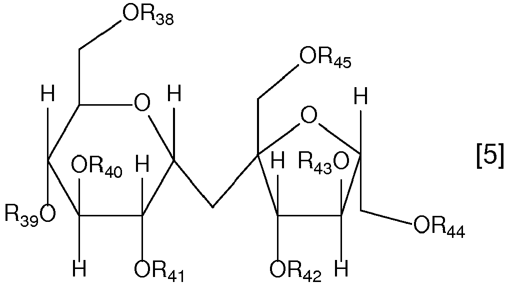 (in the formula, R₃₈ to R₄₅ each independently represent a hydrogen atom, a vinyl group, or a vinyl ketone group, and at least two or more groups among R₃₈ to R₄₅ are vinyl groups or a vinyl ketone groups.) 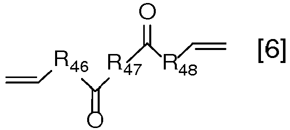 (in the formula, R₄₆ to R₄₈ each independently represent an alkylene group having 1 to 6 carbon atoms.) 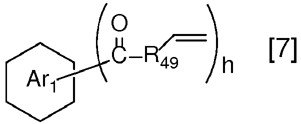 (in the formula, a ring Ar₁ represents a benzene ring or a naphthalene ring, R₄₉ represents an alkylene group having 1 to 6 carbon atoms, and h represents an integer of 2 to 4.) 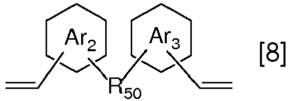 (in the formula, a ring Ar₂ and a ring Ar₃ each independently represent a benzene ring or a naphthalene ring, and R₅₀ represents an alkylene group having 1 to 6 carbon atoms.) 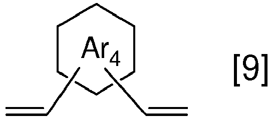 (in the formula, a ring Ar₄ represents a benzene ring or a naphthalene ring.) 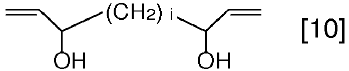 (in the formula, i represents an integer of 0 to 6.) 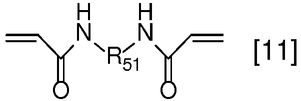 (in the formula, R₅₁ represents an alkylene group having 1 to 6 carbon atoms.) 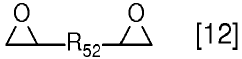 [in the formula, R₅₂ represents an alkylene group having 1 to 6 carbon atoms that has a substituent or is unsubstituted, an arylene group having 6 to 10 carbon atoms that has a substituent or is unsubstituted, a group represented by the following general formula [12-1] 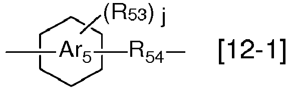 (in the formula, R₅₃ represents an alkyl group having 1 to 6 carbon atoms, R₅₄ represents an alkylene group having 1 to 6 carbon atoms, a ring Ar₅ represents a benzene ring or a naphthalene ring, and j represents an integer of 0 to 4.),
or a group represented by the following general formula [12-2] 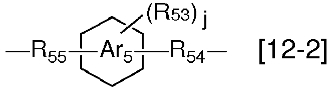 (in the formula, R₅₅ represents an alkylene group having 1 to 6 carbon atoms, and R₅₃, R₅₄, a ring Ar₅, and j are the same as R₅₃, R₅₄, the ring Ar₅, and j described above.).]

R₅₆-N=C=N-R₅₇ [13]

[In the formula, R₅₆ and R₅₇ each independently represent an alkyl group having 1 to 6 carbon atoms that has a substituent or is unsubstituted, an aryl group having 6 to 10 carbon atoms that has a substituent or is unsubstituted, or a group represented by the following general formula [13-1] 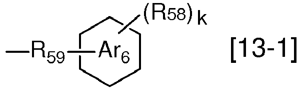 (in the formula, R₅₈ represents an alkyl group having 1 to 6 carbon atoms, R₅₉ represents an alkylene group having 1 to 6 carbon atoms, a ring Ar₆ represents a benzene ring or a naphthalene ring, and k represents an integer of 0 to 5.).] 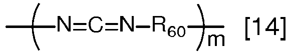 [In the formula, R₆₀ represents an alkylene group having 1 to 6 carbon atoms that has a substituent or is unsubstituted, an arylene group having 6 to 10 carbon atoms that has a substituent or is unsubstituted, a group represented by the following general formula [14-1] or [14-2] 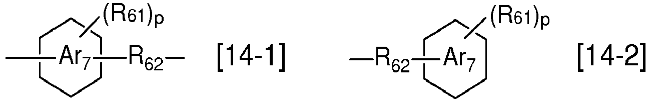 (in the formulae, R₆₁ represents an alkyl group having 1 to 6 carbon atoms, R₆₂ represents an alkylene group having 1 to 6 carbon atoms, a ring Ar₇ represents a benzene ring or a naphthalene ring, and p represents an integer of 0 to 4.),
or a group represented by the following general formula [14-3] 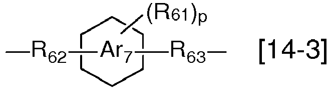 (in the formula, R₆₃ represents an alkylene group having 1 to 6 carbon atoms, and R₆, R₆₂, a ring Ar₇, and p are the same as R₆₁, R₆₂, the ring Ar₇, and p described above.),
and m represents an integer of 10 to 10,000.]

In the general formula [1], a is preferably an integer of 1 to 3, and more preferably 1.

Specific examples of the compound described in the general formula [1] include (2-propenyl acrylate) allyl acrylate, 3-butenyl acrylate, 4-pentenyl acrylate, 5-hexenyl acrylate, 6-heptenyl acrylate, 7-octenyl acrylate, and the like. Among these, the allyl acrylate is preferable.

The alkylene group having 1 to 20 carbon atoms represented by R₂₁ in the general formula [2] preferably has 1 to 12 carbon atoms, and more preferably has 1 to 6 carbon atoms. Furthermore, the alkylene group may be any of a linear, branched, or cyclic alkylene group, and is preferably a linear alkylene group. Specifically, examples thereof include a methylene group, an ethylene group, a methyl methylene group, a trimethylene group, a propylene group, a dimethyl methylene group, an ethyl methylene group, a tetramethylene group, a 1-methyl trimethylene group, a 2-methyl trimethylene group, a 1,2-dimethyl ethylene group, a 1,1-dimethyl ethylene group, an ethyl ethylene group, an ethyl methyl methylene group, a propyl methylene group, a pentamethylene group, a 1-methyl tetramethylene group, a 2-methyl tetramethylene group, a 1-ethyl trimethylene group, a 2-ethyl trimethylene group, a n-propyl ethylene group, an isopropyl ethylene group, a n-butyl methylene group, an isobutyl methylene group, a tert-butyl methylene group, a hexamethylene group, a 1-methyl pentamethylene group, a 2-methyl pentamethylene group, a 3-methyl pentamethylene group, a 1-ethyl tetramethylene group, a 2-ethyl tetramethylene group, a 1-n-propyl trimethylene group, a 1-isopropyl trimethylene group, a 2-n-propyl trimethylene group, a 2-isopropyl trimethylene group, a n-butyl ethylene group, an isobutyl ethylene group, a tert-butyl ethylene group, a n-pentyl methylene group, an isopentyl methylene group, a heptamethylene group, an octamethylene group, a nonamethylene group, a decamethylene group, an undecamethylene group, a dodecamethylene group, a tridecamethylene group, a tetradecamethylene group, a pentadecamethylene group, a hexadecamethylene group, a heptadecamethylene group, an octadecamethylene group, a nonadecamethylene group, an eicosamethylene group, a cyclopropylene group, a cyclopentylene group, a cyclohexylene group, a cycloheptylene group, a cyclooctylene group, a cyclononylene group, a cyclodecylene group, a cycloundecylene group, a cyclododecylene group, a cyclotridecylene group, a cyclohexadecylene group, a cyclooctadecylene group, a cycloeicosylene group, a -C₆H₁₀-CH₂- group, a -C₆H₁₀-C₂H₄-group, a -C₆H₁₀-C₃H₆- group, a -C₆H₁₀-C₄H₈- group, a -C₆H₁₀-C₅H₁₀- group, a -C₆H₁₀-C₆H₁₂- group, and the like. Among these, the methylene group, the ethylene group, the trimethylene group, the tetramethylene group, the pentamethylene group, the hexamethylene group, the heptamethylene group, the octamethylene group, the nonamethylene group, the decamethylene group, the undecamethylene group, and the dodecamethylene group are preferable, and the methylene group, the ethylene group, the trimethylene group, the tetramethylene group, the pentamethylene group, and the hexamethylene group are more preferable.

The alkylene group having 1 to 6 carbon atoms represented by R₂₂ in the general formula [2-1] preferably has 1 to 3 carbon atoms, and more preferably has 2 or 3 carbon atoms. Furthermore, the alkylene group may be any of a linear, branched, or cyclic alkylene group, and is preferably a linear alkylene group. Specifically, examples thereof include a methylene group, an ethylene group, a methyl methylene group, a trimethylene group, a propylene group, a dimethyl methylene group, an ethyl methylene group, a tetramethylene group, a 1-methyl trimethylene group, a 2-methyl trimethylene group, a 1,2-dimethyl ethylene group, a 1,1-dimethyl ethylene group, an ethyl ethylene group, an ethyl methyl methylene group, a propyl methylene group, a pentamethylene group, a hexamethylene group, a cyclopropylene group, a cyclopentylene group, a cyclohexylene group, and the like. Among these, the methylene group, the ethylene group, and the trimethylene group are preferable, the ethylene group and the trimethylene group are more preferable, and the ethylene group is particularly preferable.

In the general formula [2-1], b is preferably an integer of 2 to 6, and more preferably an integer of 4 to 6. In a case where b is equal to or greater than 2, b pieces of -(R₂₂-O)-group may be the same as or different from each other. It is preferable that all the -(R₂₂-O)-groups are the same as each other.

Preferred specific examples of the group represented by the general formula [2-1] include groups represented by the following general formulae [2-1-1] to [2-1-3] and the like. 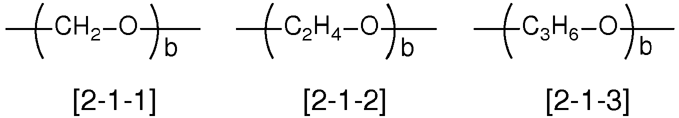 (In the formulae, b is the same as b described above.)

Examples of the alkylene group having 1 to 6 carbon atoms represented by R₂₃ and R₂₄ in the general formula [2-2] are the same as the examples of the alkylene group having 1 to 6 carbon atoms represented by R₂₂ in the general formula [2-1]. Furthermore, those preferred as the alkylene group represented by R₂₂ are also preferred as the alkylene group represented by R₂₃ and R₂₄.

In the general formula [2-2], c is preferably an integer of 2 to 13, and more preferably an integer of 3 to 8. In a case where c is equal to or greater than 2, c pieces of -(R₂₃-O)-group may be the same as or different from each other. It is preferable that all the -(R₂₃-O)-groups are the same as each other.

Preferred specific examples of the group represented by the general formula [2-2] include groups represented by the following general formulae [2-2-1] to [2-2-3] and the like. Among these, the group represented by the general formula [2-2-2] is preferable. 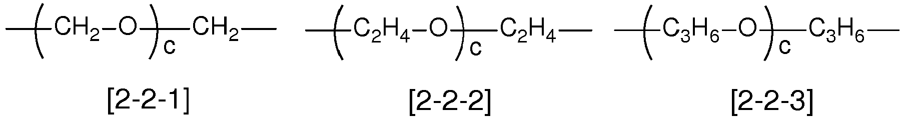 (In the formulae, c is the same as c described above.)

Preferred specific examples of the compound described in the general formula [2] include compounds described in the following general formulae [2-01] to [2-14] and the like. Among these, the compounds described in the general formulae [2-09] to [2-14] are preferable, the compounds described in the general formulae [2-11] and [2-12] are more preferable, and the compound described in the general formula [2-11] is particularly preferable. 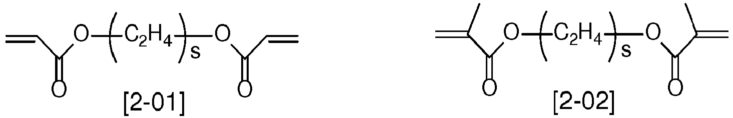 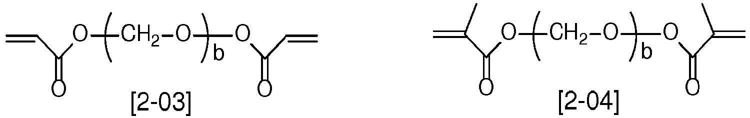 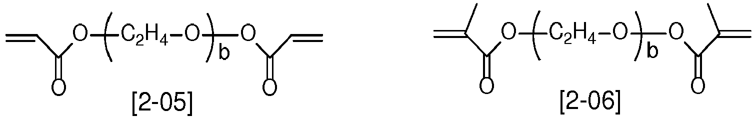 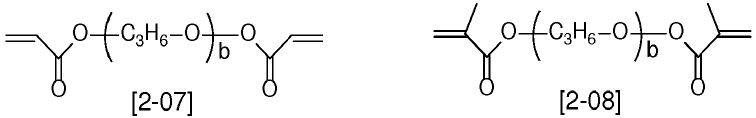 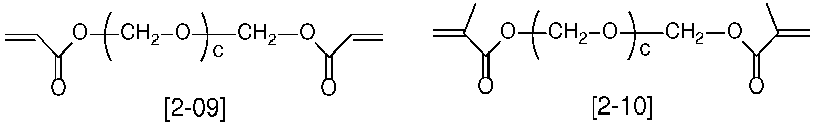 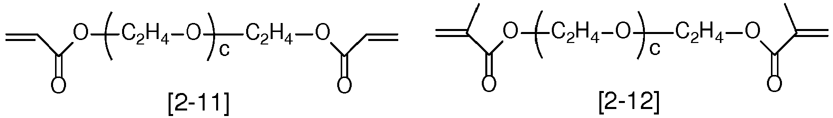 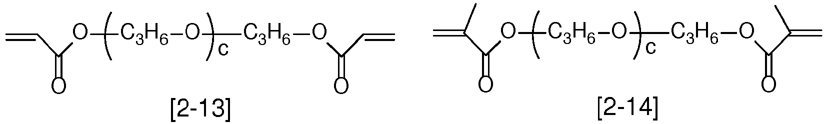 (In the formulae, b and c are the same as b and c described above, and s represents an integer of 1 to 6. As s, an integer of 4 to 6 is preferably, and 6 is more preferably.)

Examples of the alkylene group having 1 to 3 carbon atoms represented by R₂₇ to R₃₃ in the general formula [3] include a methylene group, an ethylene group, a trimethylene group, and the like. Among these, the methylene group and the ethylene group are preferable, and the methylene group is more preferable.

Preferred specific examples of the compound described in the general formula [3] include compounds described in the following formulae [3-01] to [3-03] and the like. Among these, the compound described in the formula [3-01] is preferable.

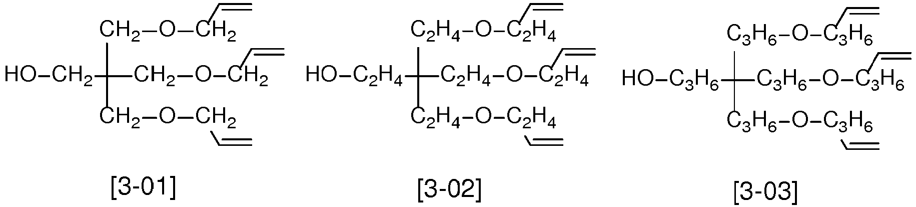

Examples of the alkylene group having 1 to 6 carbon atoms represented by R₃₄ to R₃₇ in the general formula [4] are the same as the examples of the alkylene group having 1 to 6 carbon atoms represented by R₂₂ in the general formula [2-1]. Furthermore, those preferred as the alkylene group represented by R₂₂ are also preferred as the alkylene group represented by R₃₄ to R₃₇.

In the general formula [4], d is preferably an integer of 1 to 4, and more preferably 1 or 2. In a case where d is equal to or greater than 2, d pieces of -(O-R₃₄)- group may be the same as or different from each other. It is preferable that all the -(O-R₃₄)- groups are the same as each other.

In the general formula [4], e is preferably an integer of 0 to 2. In a case where e is equal to or greater than 2, e pieces of -(R₃₅-O)- group may be the same as or different from each other. It is preferable that all the -(R₃₅-O)- groups are the same as each other. It should be noted that in a case where e is 0, -(R₃₅-O)- represents a bond. That is, in a case where e is 0, -O- and -(R₃₇)_{g}- adjacent to each other are directly bonded to each other. Hereinafter, a bond has the same definition.

In the general formula [4], f and g each independently represent an integer of 0 or 1. It is preferable that f and g are the same as each other. It should be noted that in a case where f is 0, -R₃₆- represents a bond, and in a case where g is 0, -R₃₇- represents a bond.

Preferred specific examples of the compound described in the general formula [4] include a compound described in the following general formula [4-1] or [4-2] and the like. Among these, the compound described in the general formula [4-1] is preferable. 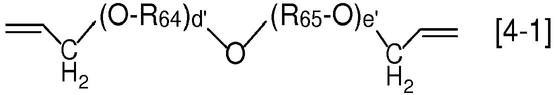 (In the formula, R₆₄ and R₆₅ each independently represent a methylene group, an ethylene group, or a trimethylene group, d' represents 1 or 2, and e' represents an integer of 0 to 2.) 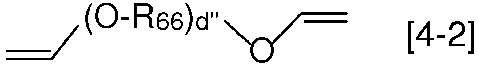 (In the formula, R₆₆ represents a methylene group, an ethylene group, a trimethylene group, a tetramethylene group, a pentamethylene group, or a hexamethylene group, and d" represents an integer of 1 to 4.)

As R₆₄ and R₆₅ in the general formula [4-1], an ethylene group is preferable.

It is preferable that d' and e' in the general formula [4-1] are the same as each other. In a case where d' is 2, d' pieces of -(O-R₆₄)- group may be the same as or different from each other. It is preferable that all the -(O-R₆₄)- groups are the same as each other. In a case where e' is 2, e' pieces of -(R₆₅-O)- group may be the same as or different from each other. It is preferable that all the -(R₆₅-O)- groups are the same as each other. It should be noted that in a case where e' is 0, -(R₆₅-O)- represents a bond.

As R₆₆ in the general formula [4-2], an ethylene group, a tetramethylene group, and a hexamethylene group are preferable.

As d" in the general formula [4-2], 1 or 2 is preferable. In a case where d" is equal to or greater than 2, d" pieces of -(O-R₆₅)- group may be the same as or different from each other. It is preferable that all the -(O-R₆₅)- groups are the same as each other.

More preferred specific examples of the compound described in the general formula [4] include compounds described in the following formulae [4-01] to [4-10] and the like. Among these, the compounds described in the formulae [4-02] to [4-05] are preferable.

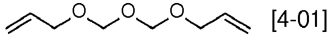

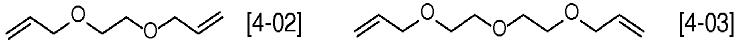

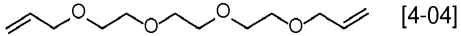

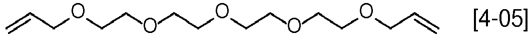

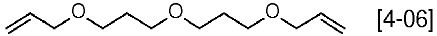

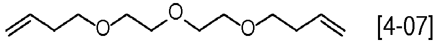

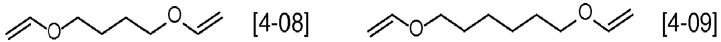

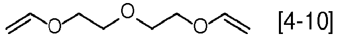

In the general formula [5], at least two or more groups among R₃₈ to R₄₅ are vinyl groups or vinyl ketone groups. It is preferable that at least 5 to 8 groups among R₃₈ to R₄₅ are vinyl groups or vinyl ketone groups. It is more preferable at least 5 to 7 groups among R₃₈ to R₄₅ are vinyl groups or vinyl ketone groups.

Preferred specific examples of the compound described in the general formula [5] include compounds described in the following formulae [5-01] to [5-06] and the like.

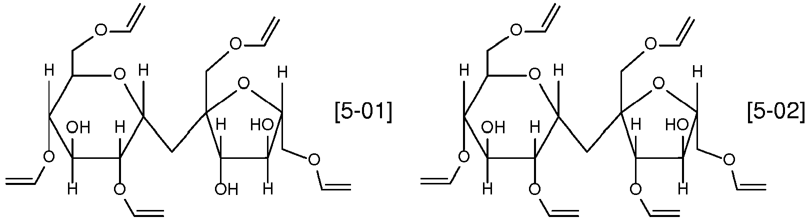

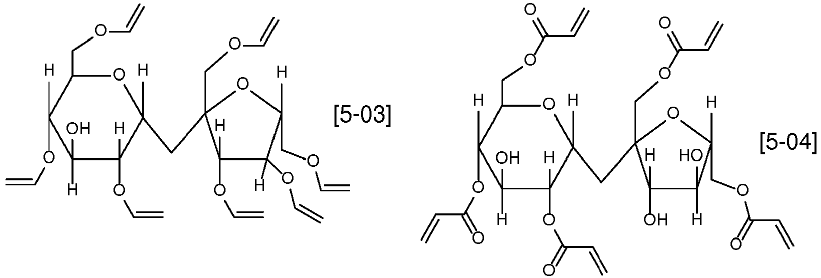

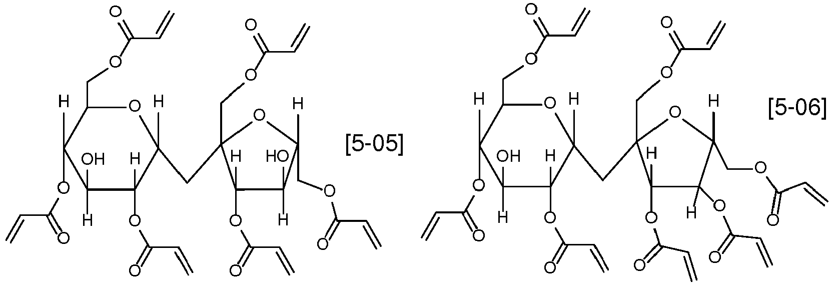

Examples of the alkylene group having 1 to 6 carbon atoms represented by R₄₆ to R₄₈ in the general formula [6] are the same as the examples of the alkylene group having 1 to 6 carbon atoms represented by R₂₂ in the general formula [2-1].

As R₄₆ and R₄₈ in the general formula [6], a methylene group, an ethylene group, a trimethylene group, a propyl methylene group, a pentamethylene group, and a hexamethylene group are preferable, and the methylene group, the ethylene group, and the trimethylene group are more preferable.

As R₄₇ in the general formula [6], a cyclopentylene group and a cyclohexylene group are preferable, and the cyclohexylene group is more preferable.

Preferred specific examples of the compound described in the general formula [6] include compounds described in the following formulae [6-01] to [6-03] and the like.

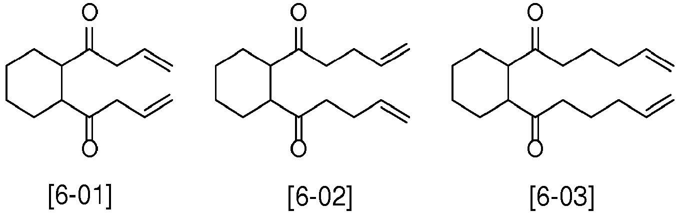

Examples of the alkylene group having 1 to 6 carbon atoms represented by R₄₉ in the general formula [7] are the same as the examples of the alkylene group having 1 to 6 carbon atoms represented by R₂₂ in the general formula [2-1]. Among these, a methylene group and an ethylene group are preferable, and the methylene group is more preferable.

As the ring Ar₁ in the general formula [7], a benzene ring is preferable.

As h in the general formula [7], an integer of 3 or 4 is preferable, and h pieces of group represented by the following formula may be the same as or different from each other. It is preferable that all the groups represented by the following formula are the same as each other.

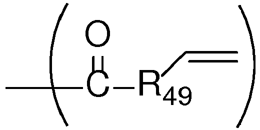

### (In the formula, R₄₉ is the same as R₄₉ described above.)

Preferred specific examples of the compound described in the general formula [7] include compounds described in the following formulae [7-01] and [7-02] and the like.

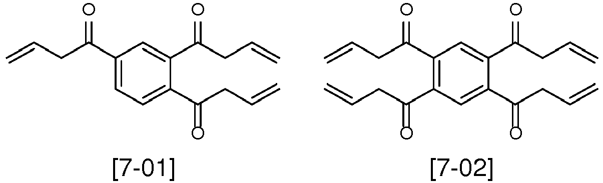

As the ring Ar₂ and the ring Ar₃ in the general formula [8], a benzene ring is preferable.

Examples of the alkylene group having 1 to 6 carbon atoms represented by R₅₀ in the general formula [8] are the same as the examples of the alkylene group having 1 to 6 carbon atoms represented by R₂₂ in the general formula [2-1]. Among these, a methylene group, an ethylene group, and a trimethylene group are preferable, and the trimethylene group is more preferable.

Preferred specific examples of the compound described in the general formula [8] include compounds described in the following formulae [8-01] to [8-03] and the like. Among these, the compound described in the formula [8-03] is preferable.

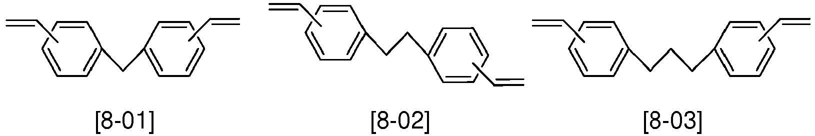

As the ring Ar₄ in the general formula [9], a benzene ring is preferable.

Preferred specific examples of the compound described in the general formula [9] include compounds described in the following formulae [9-01] and [9-02] and the like. Among these, the compound described in the formula [9-01] is preferable.

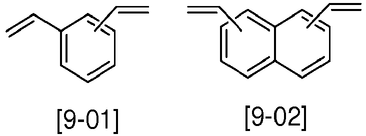

As i in the general formula [10], an integer of 0 to 3 is preferable, and 0 is more preferable.

Preferred specific examples of the compound described in the general formula [10] include divinyl ethylene glycol (1,5-hexadiene-3,4-diol), 1,6-heptadiene-3,5-diol, 1,7-octadiene-3,6-diol, 1,8-nonadiene-3,7-diol, and the like. Among these, the divinyl ethylene glycol is preferable.

Examples of the alkylene group having 1 to 6 carbon atoms represented by R₅₁ in the general formula [11] are the same as the examples of the alkylene group having 1 to 6 carbon atoms represented by R₂₂ in the general formula [2-1]. Among these, a methylene group, an ethylene group, and a trimethylene group are preferable, and the methylene group is more preferable.

Preferred specific examples of the compound described in the general formula [11] include N,N'-methylenebisacrylamide, N,N'-ethylenebisacrylamide, N,N'-trimethylenebisacrylamide, and the like. Among these, the N,N'-methylenebisacrylamide is preferable.

Examples of the alkylene group having 1 to 6 carbon atoms in "alkylene group having 1 to 6 carbon atoms that has a substituent or is unsubstituted" represented by R₅₂ in the general formula [12] are the same as the examples of the alkylene group having 1 to 6 carbon atoms represented by R₂₂ in the general formula [2-1]. Among these, a methylene group, an ethylene group, a trimethylene group, a tetramethylene group, a pentamethylene group, and a hexamethylene group are preferable. It should be noted that the number of carbon atoms in the substituent is not included in the 1 to 6 carbon atoms. Likewise, hereinafter, the number of carbon atoms in a group having a substituent does not include the number of carbon atoms in the substituent.

Specifically, examples of the arylene group having 6 to 10 carbon atoms in "arylene group having 6 to 10 carbon atoms that has a substituent or is unsubstituted" represented by R₅₂ in the general formula [12] include a phenylene group, a naphthylene group, and the like. Among these, the phenylene group is preferable.

It is preferable that the alkylene group having 1 to 6 carbon atoms having a substituent and the arylene group having 6 to 10 carbon atoms having a substituent that are represented by R₅₂ in the general formula [12] have 1 or 2 substituents. Examples of the substituents include an alkyl group having 1 to 6 carbon atoms such as a methyl group, an ethyl group, a n-propyl group, an isopropyl group, a n-butyl group, an isobutyl group, a tert-butyl group, a n-pentyl group, or a n-hexyl group; a halogen atom such as a fluorine atom, a chlorine atom, a bromine atom, or an iodine atom; an alkoxy group having 1 to 6 carbon atoms such as a methoxy group, an ethoxy group, a propoxy group, a butoxy group, a tert-butoxy group, a propoxy group, or a hexyloxy group; an aryl group having 6 to 10 carbon atoms such as a phenyl group; a hydroxyalkyl group having 1 to 6 carbon atoms such as a hydroxyethyl group or a hydroxypropyl group; an alkoxyalkyl group having 2 to 7 carbon atoms such as a methoxyethyl group, an ethoxyethyl group, an ethoxypropyl group, or a butoxyethyl group; a hydroxyalkoxy group having 1 to 6 carbon atoms such as a 2-hydroxyethoxy group; an alkoxyalkoxy group having 2 to 7 carbon atoms such as a 2-methoxyethoxy group or a 2-ethoxyethoxy group; a sulfoalkyl group having 1 to 6 carbon atoms such as a 2-sulfoethyl group; a carboxyalkyl group having 2 to 7 carbon atoms such as a carboxymethyl group, a carboxyethyl group, a carboxypropyl group, a carboxybutyl group, a carboxypentyl group, or a carboxyhexyl group; a cyanoalkyl group having 2 to 7 carbon atoms such as a cyanomethyl group, a cyanoethyl group, a cyanopropyl group, a cyanobutyl group, a cyanopentyl group, or a cyanohexyl group; a sulfo group, and the like. Among these, the alkyl group having 1 to 6 carbon atoms is preferable.

As R₅₂ in the general formula [12], an unsubstituted alkylene group having 1 to 6 carbon atoms and a phenylene group that has an alkyl group having 1 to 6 carbon atoms as a substituent or is unsubstituted are preferable, and a linear alkylene group having 1 to 6 carbon atoms is more preferable.

Examples of the alkyl group having 1 to 6 carbon atoms represented by R₅₃ in the general formulae [12-1] and [12-2] are the same as the examples of the alkyl group having 1 to 6 carbon atoms represented by R₄ in the general formula (IV). Furthermore, those preferred as the alkyl group represented by R₄ are also preferred as the alkyl group represented by R₅₃.

Examples of the alkylene group having 1 to 6 carbon atoms represented by R₅₄ in the general formulae [12-1] and [12-2] and represented by R₅₅ in the general formula [12-2] are the same as the examples of the alkylene group having 1 to 6 carbon atoms represented by R₂₂ in the general formula [2-1]. Furthermore, those preferred as the alkylene group represented by R₂₂ are also preferred as the alkylene group represented by R₅₄ and R₅₅.

As the ring Ar₅ in the general formulae [12-1] and [12-2], a benzene ring is preferable.

As j in the general formulae [12-1] and [12-2], 0 or 1 is preferable. In a case where j is 0, the benzene ring or the naphthalene ring as the ring Ar₅ does not have a substituent.

Preferred specific examples of the compound described in the general formula [12] include compounds described in the following general formulae [12-3] to [12-6] and the like. Among these, the compound described in the general formula [12-6] is preferable. 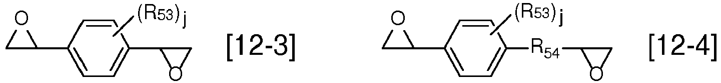 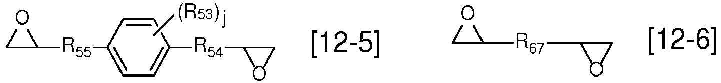 (In the formulae, R₆₇ represents an unsubstituted alkylene group having 1 to 6 carbon atoms, and R₅₃ to R₅₅ and j are the same as R₅₃ to R₅₅ and j described above.)

Examples of the unsubstituted alkylene group having 1 to 6 carbon atoms represented by R₆₇ in the general formula [12-6] are the same as the examples of the alkylene group having 1 to 6 carbon atoms represented by R₂₂ in the general formula [2-1]. Among these, a methylene group, an ethylene group, a trimethylene group, a tetramethylene group, a pentamethylene group, and a hexamethylene group are preferable.

Preferred specific examples of the compound described in the general formula [12-6] include 1,2:4,5-diepoxypentane, 1,2:5,6-diepoxyhexane, 1,2:6,7-diepoxyheptane, 1,2:7,8-diepoxyoctane, 1,2:8,9-diepoxynonane, 1,2:9,10-diepoxydecane, and the like.

Examples of the alkyl group having 1 to 6 carbon atoms in "alkyl group having 1 to 6 carbon atoms that has a substituent or is unsubstituted" represented by R₅₆ and R₅₇ in the general formula [13] are the same as the examples of the alkyl group having 1 to 6 carbon atoms represented by R₄ in the general formula (IV). Furthermore, those preferred as the alkyl group represented by R₄ are also preferred as the alkyl group represented by R₅₆ and R₅₇.

Specifically, examples of the aryl group having 6 to 10 carbon atoms in "aryl group having 6 to 10 carbon atoms that has a substituent or is unsubstituted" represented by R₅₆ and R₅₇ in the general formula [13] include a phenyl group, a naphthyl group, and the like. Among these, the phenyl group is preferable.

The alkyl group having 1 to 6 carbon atoms having a substituent and the aryl group having 6 to 10 carbon atoms having a substituent that are represented by R₅₆ and R₅₇ in the general formula [13] preferably have 1 to 3 substituents, and more preferably have 2 substituents. Examples of the substituents are the same as the specific examples of the substituents of "the alkylene group having 1 to 6 carbon atoms having a substituent and the arylene group having 6 to 10 carbon atoms having a substituent" represented by R₅₂ in the general formula [12].

Examples of the alkyl group having 1 to 6 carbon atoms represented by R₅₈ in the general formula [13-1] are the same as the examples of the alkyl group having 1 to 6 carbon atoms represented by R₄ in the general formula (IV). Furthermore, those preferred as the alkyl group represented by R₄ are also preferred as the alkyl group represented by R₅₈.

Examples of the alkylene group having 1 to 6 carbon atoms represented by R₅₉ in the general formula [13-1] are the same as the examples of the alkylene group having 1 to 6 carbon atoms represented by R₂₂ in the general formula [2-1]. Furthermore, those preferred as the alkylene group represented by R₂₂ are also preferred as the alkylene group represented by R₅₉.

As the ring Ar₆ in the general formula [13-1], a benzene ring is preferable.

As k in the general formula [13-1], an integer of 1 to 3 is preferable, and 2 is more preferable. In a case where k is 0, the benzene ring or the naphthalene ring as the ring Ar₆ does not have a substituent.

It is preferable that R₅₆ and R₅₇ in the general formula [13] are the same . As R₅₆ and R₅₇, a phenyl group which has an alkyl group having 1 to 6 carbon atoms as a substituent or is unsubstituted and the group represented by the general formula [13-1] are preferable.

Preferred specific examples of the compound described in the general formula [13] include compounds described in the following general formulae [13-2] and [13-3] and the like. Among these, the compound described in the general formula [13-2] is preferable. 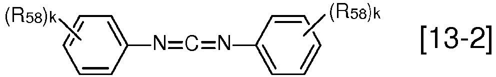 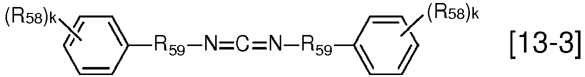 (In the formulae, R₅₈, R₅₉, and k are the same as R₅₈, R₅₉, and k described above, and two R₅₈'s and two R₅₉'s may be the same as or different from each other respectively.)

Preferred specific examples of the compound described in the general formula [13-2] include compounds described in the following formulae [13-01] to [13-12] and the like.

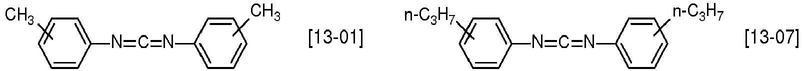

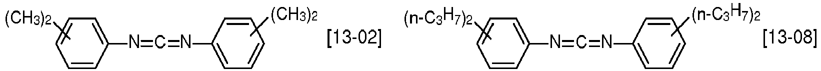

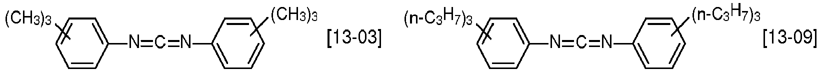

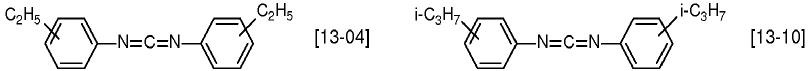

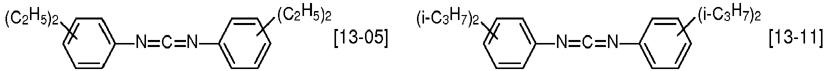

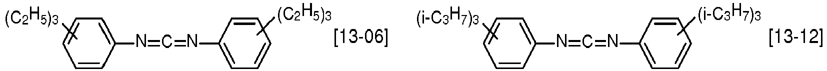

Examples of the alkylene group having 1 to 6 carbon atoms that is represented by R₆₀ in the general formula [14] and has a substituent or is unsubstituted and the arylene group having 6 to 10 carbon atoms that is represented by R₆₀ in the general formula [14] and has a substituent or is unsubstituted are the same as the examples of the alkylene group and the arylene group represented by R₅₂ in the general formula [12].

Examples of the alkyl group having 1 to 6 carbon atoms represented by R₆₁ in the general formulae [14-1] to [14-3] are the same as the examples of the alkyl group having 1 to 6 carbon atoms represented by R₄ in the general formula (IV).

Examples of the alkylene group having 1 to 6 carbon atoms represented by R₆₂ in the general formulae [14-1] to [14-3] and represented by R₆₃ in the general formula [14-3] are the same as the examples of the alkylene group having 1 to 6 carbon atoms represented by R₂₂ in the general formula [2-1].

As the ring Ar₇ in the general formulae [14-1] to [14-3], a benzene ring is preferable.

As p in the general formulae [14-1] to [14-3], 0 or 1 is preferable. In a case where p is 0, the benzene ring or the naphthalene ring as the ring Ar₇ does not have a substituent.

As R₆₀ in the general formula [14], an alkylene group having 1 to 6 carbon atoms that has a substituent or is unsubstituted and a phenylene group that has a substituent or is unsubstituted are preferable, the unsubstituted alkylene group having 1 to 6 carbon atoms and the phenylene group having a substituent are more preferable, and a phenylene group having an alkyl group having 1 to 6 carbon atoms as a substituent is particularly preferable.

As m in the general formula [14], an integer of 10 to 1,000 is preferable, and an integer of 10 to 100 is more preferable.

Preferred specific examples of the polymer described in the general formula [14] include polymers described in the following general formulae [14-4] to [14-8] and the like. Among these, the polymer described in the general formula [14-5] is preferable. 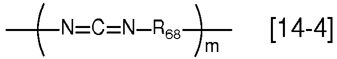 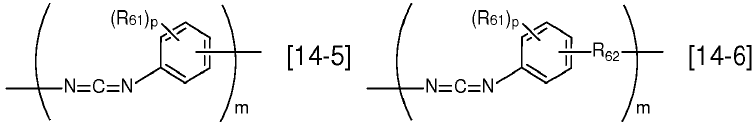 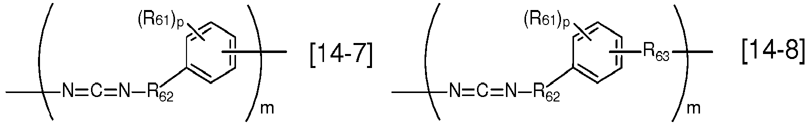 (In the formulae, R₆₁ to R₆₃, p, and m are the same as R₆₁ to R₆₃, p, and m described above, and R₆₈ represents an unsubstituted alkylene group having 1 to 6 carbon atoms.)

Examples of the unsubstituted alkylene group having 1 to 6 carbon atoms represented by R₆₁ in the general formula [14-2] are the same as the examples of the unsubstituted alkylene group having 1 to 6 carbon atoms represented by R₆₇ in the general formula [12-6]. Furthermore, those preferred as the unsubstituted alkylene group represented by R₆₇ are also preferred as the unsubstituted alkylene group represented by R₆₁.

Preferred specific examples of the polymer described in the general formula [14-5] include polymers described in the following general formulae [14-01] to [14-04] and the like. Among these, the polymer described in the general formula [14-01] is preferable.

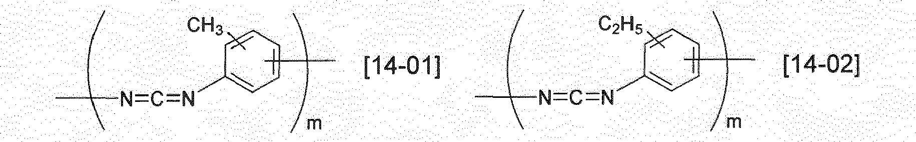

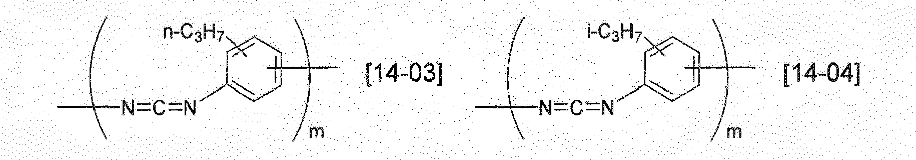

### (In the formulae, m is the same as m described above.)

As the crosslinking agent used in the present invention, the compounds described in the general formulae [2], [3], [4], [9], [10], and [11] and the polymer described in the general formula [14] are preferable, the compounds described in the general formulae [2], [3], [4], and [10] are more preferable, the compounds described in the general formulae [2] and [4] are even more preferable, and the compound described in the general formula [2] is particularly preferable. The crosslinking agent may be a commercial crosslinking agent or a crosslinking agent appropriately synthesized by a known method.

### Method for manufacturing copolymer used the present invention

The copolymer used in the present invention may be manufactured by performing a polymerization reaction based on a known method. For example, by performing a polymerization reaction of acrylic acid and one or two kinds of compounds represented by the general formula (I) or the general formula (II) in the presence of, if necessary, a polymerization initiator, the copolymer can be manufactured.

The polymerization reaction may be performed based on a known method. Specifically, in an appropriate solvent, the polymerization reaction may be performed at a temperature of 30°C to 200°C, preferably at a temperature of 70°C to 180°C, and more preferably at a temperature of 80°C to 150°C, generally for 0.1 to 24 hours and preferably for 1 to 10 hours.

The polymerization initiator is not particularly limited as long as it is generally used in the field of the related art. Examples thereof include 2,2'-azobis(isobutyronitrile), 2,2'-azobis(2,4-dimethylvaleronitrile), 2,2'-azobis(2-methylpropionate), 2,2'-azobis(2-methylbutyronitrile), benzoyl peroxide, lauroyl peroxide, and the like. Among these, the 2,2'-azobis(isobutyronitrile) is preferable. One kind of each of these compounds may be used singly, or two or more kinds of these compounds may be used in combination. The amount of the polymerization initiator used is generally 0.01% to 30% by mass with respect to the total amount of the reactants.

The solvent is not particularly limited as long as it is generally used in the field of the related art. Examples thereof include toluene, 1,4-dioxane, tetrahydrofuran, isopropanol, methyl ethyl ketone, propylene glycol monomethyl ether acetate, and the like. Among these, the propylene glycol monomethyl ether acetate is preferable. One kind of each of these solvents may be used singly, or two or more kinds of these solvents may be used in combination. The amount of the solvent used is, based on volume, 100% to 1,000% of the total volume of the reactants.

The amount of the compound used that is represented by the general formula (I) or the general formula (II) may be appropriately set such that the mass ratio between the monomer unit derived from acrylic acid and the monomer unit derived from the compound represented by the general formula (I) or the general formula (II) is accomplished in the copolymer used in the present invention.

If necessary, general post-treatment operation and purification operation that are commonly carried out in the field of the related art may be performed on a product obtained after the polymerization reaction. Specifically, for example, filtration, rinsing, extraction, concentration under reduced pressure, recrystallization, distillation, column chromatography, and the like may be performed.

In a case where the copolymer used in the present invention is neutralized, the copolymer may be neutralized based on a known method. For example, the copolymer used in to the present invention may be neutralized by a method of adding an alkali metal such as sodium hydroxide in an amount of 0.5 to 1 mol with respect to 1 mol of the carboxy group in the copolymer. The copolymer used in the present invention to be neutralized may be a crosslinked copolymer or may be crosslinked after being neutralized. Examples of solvents used at the time of neutralization are the same as the examples of solvents used in the polymerization reaction.

In a case where the copolymer used in the present invention is crosslinked, the copolymer may be crosslinked based on a known method by using the crosslinking agent described herein.

For example, by adding a crosslinking agent selected from the compounds described in the general formulae [1] to [11] in the polymerization reaction, the polymerization reaction and the crosslinking reaction may be simultaneously performed. Alternatively, the copolymer used in the present invention obtained after the polymerization reaction and the compound described in the general formula [12] or [13] or the polymer described in the general formula [14] may be subjected to the crosslinking reaction under the same reaction conditions (the type and used amount of the solvent, the reaction temperature, the reaction time, and the like) as those in the polymerization reaction.

The amount of the compounds used that are described in the general formulae [1] to [11] is generally 0.001 to 10 mol%, preferably 0.005 to 1 mol%, and even more preferably 0.01 to 0.5 mol% with respect to 1 mol of the monomer to be used.

The amount of the compound used that is described in the general formula [12] or [13] or the amount of the polymer used that is described in the general formula [14] is generally 0.01% to 40% by mass, preferably 0.05% to 20 % by mass, and more preferably 0.1% to 10% by mass with respect to the mass of the copolymer used in to the present invention.

Specifically, the crosslinked copolymer used in the present invention is prepared as below.

That is, acrylic acid, one or two kinds of compounds represented by the general formula (I) or the general formula (II) that are used in an amount of 70 to 30 parts by mass with respect to 30 to 70 parts by mass of the acrylic acid, and a crosslinking agent, which is used in an amount of 0.01 to 0.5 mol% with respect to 1 mol of the acrylic acid and is selected from the compounds described in the general formulae [1] to [11], are dissolved or dispersed in a solvent such as propylene glycol monomethyl ether acetate, which is used in an amount of, based on volume, 100% to 1,000% of the total volume, in the presence of a polymerization initiator such as 2,2'-azobis(isobutyronitrile). Then, a polymerization reaction and a crosslinking reaction are performed for 0.1 to 10 hours at a temperature of 80°C to 150°C, thereby preparing a crosslinked polyacrylic acid. If necessary, an alkali metal such as sodium hydroxide may be added in an amount of 0.5 to 1 mol with respect to 1 mol of carboxy groups in the obtained crosslinked copolymer used in the present invention acid so as to obtain a salt of the crosslinked copolymer used in to the present invention.

Alternatively, acrylic acid and one or two kinds of compounds represented by the general formula (I) or the general formula (II) that are used in an amount of 70 to 30 parts by mass with respect to 30 to 70 parts by mass of the acrylic acid are dissolved or dispersed in a solvent such as propylene glycol monomethyl ether acetate, which is used in an amount of, based on volume, 100% to 1,000% of the total volume, in the presence of a polymerization initiator such as 2,2'-azobis(isobutyronitrile). Then, a polymerization reaction is performed for 0.1 to 10 hours at a temperature of 80°C to 150°C, thereby preparing the copolymer used in to the present invention. Thereafter, the obtained copolymer used in the present invention and the compound described in the general formula [12] or [13] or the polymer described in the general formula [14] that is used in an amount of 0.1% to 10% by mass with respect to the mass of the copolymer are dissolved or dispersed in a solvent such as propylene glycol monomethyl ether acetate, which is used in an amount of, based on volume, 100% to 1,000% of the total volume. Subsequently, a crosslinking reaction is performed for 0.1 to 10 hours at a temperature of 80°C to 150°C, thereby preparing the crosslinked copolymer used in the present invention. If necessary, an alkali metal such as sodium hydroxide may be added in an amount of 0.5 to 1 mol with respect to 1 mol of carboxy groups in the obtained crosslinked copolymer used in the present invention so as to obtain a salt of the crosslinked copolymer used in the present invention.

### Bivalent to decavalent alcohol

The bivalent to decavalent alcohol in the binder agent composition used in the present invention (hereinafter, the bivalent to decavalent alcohol will be simply described as an alcohol used in accordance with the present invention in some cases) may be a conventionally known alcohol that is generally used in the field of the related art. As the bivalent to decavalent alcohol, a bivalent to hexavalent alcohol is preferable, and a bivalent to tetravalent alcohol is more preferable.

Specific examples of the alcohol used in accordance with the present invention include a compound represented by the following general formula (B1). 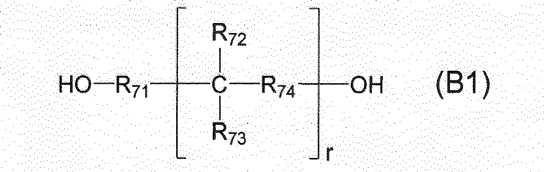 (In the formula, R₇₁ represents an alkylene group having 1 to 6 carbon atoms, R₇₂ represents a hydroxy group or a hydroxyalkyl group having 1 to 6 carbon atoms, R₇₃ represents a hydrogen atom, an alkyl group having 1 to 6 carbon atoms, or a hydroxyalkyl group having 1 to 6 carbon atoms, R₇₄ represents an alkylene group having 1 to 6 carbon atoms that may have -O- in a chain, and r represents an integer of 0 to 4. Here, a plurality of R₇₂'s, a plurality of R₇₃'s, and a plurality of R₇₄'s may be the same as or different from each other respectively.)

In a case where r is 0, the alkylene group having 1 to 6 carbon atoms represented by R₇₁ in the general formula (B1) preferably has 3 to 6 carbon atoms. In a case where r is an integer of 1 to 4, the alkylene group preferably has 1 to 4 carbon atoms. The alkylene group may be any of a linear, branched, or cyclic alkylene group. Among these, the linear and branched alkylene groups are preferable, and the linear alkylene group is more preferable. Specifically, examples thereof include a methylene group, an ethylene group, a methyl methylene group, a trimethylene group, a propylene group, a dimethyl methylene group, an ethyl methylene group, a tetramethylene group, a 1-methyl trimethylene group, a 2-methyl trimethylene group, a 1,2-dimethyl ethylene group, a 1,1-dimethyl ethylene group, an ethyl ethylene group, an ethyl methyl methylene group, a propyl methylene group, a pentamethylene group, a hexamethylene group, a cyclopropylene group, a cyclopentylene group, a cyclohexylene group, and the like. Among these, the methylene group, the ethylene group, the trimethylene group, the tetramethylene group, the pentamethylene group, and the hexamethylene group are preferable. In a case where r is 0, the trimethylene group, the tetramethylene group, the pentamethylene group, and the hexamethylene group are preferable. In a case where r is an integer of 1 to 4, the methylene group, the ethylene group, the trimethylene group, and the tetramethylene group are more preferable.

Examples of the hydroxyalkyl group having 1 to 6 carbon atoms represented by R₇₂ and R₇₃ in the general formula (B1) are the same as the examples of the hydroxyalkyl group having 1 to 6 carbon atoms represented by R₁₃ in the general formula (II). Among these, a hydroxymethyl group, a hydroxyethyl group, a hydroxypropyl group, and a hydroxybutyl group are preferable, and the hydroxymethyl group and the hydroxyethyl group are more preferable.

Examples of the alkyl group having 1 to 6 carbon atoms represented by R₇₃ in the general formula (B1) are the same as the examples of the alkyl group having 1 to 6 carbon atoms represented by R₄ in the general formula (IV). Among these, a methyl group, an ethyl group, a n-propyl group, and a n-butyl group are preferable, and the methyl group and the ethyl group are more preferable.

Examples of the alkylene group having 1 to 6 carbon atoms that does not have -O- in a chain and is represented by R₇₄ in the general formula (B1) are the same as the examples of the alkylene group having 1 to 6 carbon atoms represented by R₇₁ in the general formula (B1). Among these, a methylene group, an ethylene group, a trimethylene group, a tetramethylene group, a pentamethylene group, and a hexamethylene group are preferable, the methylene group, the ethylene group, the trimethylene group, and the tetramethylene group are more preferable, and the methylene group and the ethylene group are particularly preferable.

Examples of the alkylene group having 1 to 6 carbon atoms that has -O- in a chain and is represented by R₇₄ in the general formula (B1) include a group represented by the following general formula (B1-1) and the like.

-(R₇₅-O-)ₜ-R₇₆- (B1-1)

(In the formula, R₇₅ and R₇₆ each independently represent a linear or branched alkylene group having 1 to 5 carbon atoms, and t represents an integer of 1 to 5. Here, the total number of carbon atoms in the formula is 2 to 6, and t pieces of R₇₅ may be the same as or different from each other.)

It is preferable that the alkylene group having 1 to 5 carbon atoms represented by R₇₅ and R₇₆ in the general formula (B1-1) has 1 to 3 carbon atoms. The alkylene group may be any of a linear, branched, or cyclic alkylene group, and is more preferably a linear alkylene group. Specifically, examples thereof include a methylene group, an ethylene group, a methyl methylene group, a trimethylene group, a propylene group, a dimethyl methylene group, an ethyl methylene group, a tetramethylene group, a 1-methyl trimethylene group, a 2-methyl trimethylene group, a 1,2-dimethyl ethylene group, a 1,1-dimethyl ethylene group, an ethyl ethylene group, an ethyl methyl methylene group, a propyl methylene group, a pentamethylene group, and the like. Among these, the methylene group, the ethylene group, the trimethylene group, the tetramethylene group, and the pentamethylene group are preferable, and the methylene group and the ethylene group are more preferable.

As t in the general formula (B1-1), 1 or 2 is preferable, and 1 is more preferable.

Preferred specific examples of the group represented by the general formula (B1-1) include a group represented by the following general formula (B1-2).

-R₇₅'-O-R₇₆'- (B1-2)

(In the formula, R₇₅' and R₇₆' each independently represent a linear alkylene group having 1 to 5 carbon atoms. Here, the total number of carbon atoms in the formula is 2 to 6.)

Specifically, examples of the linear alkylene group having 1 to 5 carbon atoms represented by R₇₅' and R₇₆' in the general formula (B1-2) include a methylene group, an ethylene group, a trimethylene group, a tetramethylene group, and a pentamethylene group. Among these, the methylene group and the ethylene group are preferable.

Specifically, examples of the group represented by the general formula (B1-2)include -CH₂-O-CH₂-, -CH₂-O-CH₂CH₂-, -CH₂-O-CH₂CH₂CH₂-, -CH₂-O-CH₂CH₂CH₂CH₂-, -CH₂-O-CH₂CH₂CH₂CH₂CH₂-, -CH₂CH₂-O-CH₂-, -CH₂CH₂-O-CH₂CH₂-, -CH₂CH₂-O-CH₂CH₂CH₂-, -CH₂CH₂-O-CH₂CH₂CH₂CH₂-, -CH₂CH₂CH₂-O-CH₂-, -CH₂CH₂CH₂-O-CH₂CH₂-, -CH₂CH₂CH₂-O-CH₂CH₂CH₂-, -CH₂CH₂CH₂CH₂-O-CH₂-, -CH₂CH₂CH₂CH₂-O-CH₂CH₂-, -CH₂CH₂CH₂CH₂CH₂-O-CH₂-, and the like. Among these, -CH₂-O-CH₂-, -CH₂-O-CH₂CH₂-, -CH₂CH₂-O-CH₂-, and -CH₂CH₂-O-CH₂CH₂- are preferable, -CH₂-O-CH₂- and -CH₂CH₂-O-CH₂CH₂- are more preferable, and -CH₂-O-CH₂is particularly preferable.

As R₇₂ in the general formula (B1), a hydroxy group and a linear hydroxyalkyl group having 1 to 6 carbon atoms are preferable, the hydroxy group and a linear hydroxyalkyl group having 1 to 6 carbon atoms in which one hydrogen atom in a terminal portion is substituted with a hydroxy group are more preferable, and the linear hydroxyalkyl group having 1 to 6 carbon atoms in which one hydrogen atom in a terminal portion is substituted with a hydroxy group is particularly preferable. Specifically, a hydroxy group, a hydroxymethyl group, a hydroxyethyl group, a hydroxypropyl group, and a hydroxybutyl group are preferable, the hydroxy group, the hydroxymethyl group, and the hydroxyethyl group are more preferable, and the hydroxymethyl group and the hydroxyethyl group are particularly preferable.

As R₇₃ in the general formula (B1), a hydrogen atom, a linear alkyl group having 1 to 6 carbon atoms, and a linear hydroxyalkyl group having 1 to 6 carbon atoms are preferable, the hydrogen atom, the linear alkyl group having 1 to 6 carbon atoms, and a linear hydroxyalkyl group having 1 to 6 carbon atoms in which one hydrogen atom in a terminal portion is substituted with a hydroxy group are more preferable, and the linear hydroxyalkyl group having 1 to 6 carbon atoms in which one hydrogen atom in a terminal portion is substituted with a hydroxy group is particularly preferable. Specifically, a hydrogen atom, a methyl group, an ethyl group, a n-propyl group, a n-butyl group, a hydroxymethyl group, a hydroxyethyl group, a hydroxypropyl group, and a hydroxybutyl group are preferable, the hydrogen atom, the methyl group, the ethyl group, the hydroxymethyl group, and the hydroxyethyl group are more preferable, and the hydroxymethyl group and the hydroxyethyl group are particularly preferable.

As R₇₄ in the general formula (B1), a linear or branched alkylene group having 1 to 6 carbon atoms and the group represented by the general formula (B1-1) are preferable, the linear alkylene group having 1 to 6 carbon atoms and the group represented by the general formula (B1-2) are more preferable, and the linear alkylene group having 1 to 6 carbon atoms is particularly preferable. Specifically, a methylene group, an ethylene group, a trimethylene group, a tetramethylene group, a pentamethylene group, a hexamethylene group, -CH₂-O-CH₂-, -CH₂-O-CH₂CH₂-, -CH₂CH₂-O-CH₂-, and -CH₂CH₂-O-CH₂CH₂- are preferable, the methylene group, the ethylene group the trimethylene group, the tetramethylene group, -CH₂-O-CH₂-, and -CH₂CH₂-O-CH₂CH₂- are more preferable, the methylene group, the ethylene group, and -CH₂-O-CH₂- are even more preferable, and the methylene group and the ethylene group are particularly preferable.

As r in the general formula (B1), an integer of 0 to 2 is preferable, and 0 or 1 is more preferable.

Preferred specific examples of the compound represented by the general formula (B1) include a compound represented by the following general formula (B2). 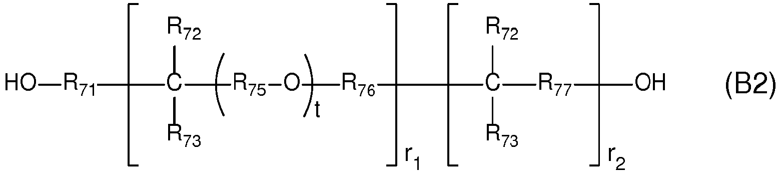 (In the formula, R₇₁ to R₇₃, R₇₅, R₇₆, and t are the same as R₇₁ to R₇₃, R₇₅, R₇₆, and t described above, R₇₇ represents a linear or branched alkylene group having 1 to 6 carbon atoms, r₂ represents 0 or 1, in a case where r₂ is 0, r₁ represents 0, and in a case where r₂ is 1, r₁ represents an integer of 0 to 3. Here, a plurality of R₇₂'s, R₇₃'s, R₇₅'s, R₇₆'s, and t's may be the same as or different from each other respectively.)

Examples of the linear or branched alkylene group having 1 to 6 carbon atoms represented by R₇₇ in the general formula (B2) include linear or branched alkylene groups among the specific examples of the alkylene group having 1 to 6 carbon atoms represented by R₇₁ in the general formula (B1). Among these, a methylene group, an ethylene group, a trimethylene group, a tetramethylene group, a pentamethylene group, and a hexamethylene group are preferable, the methylene group, the ethylene group, the trimethylene group, and the tetramethylene group are more preferable, and the methylene group and the ethylene group are particularly preferable.

As r₂ in the general formula (B2), 0 or 1 is preferable.

Preferred specific examples of the compound represented by the general formula (B2) include compounds represented by the following general formulae (B3) to (B5). 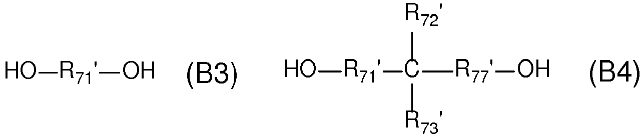 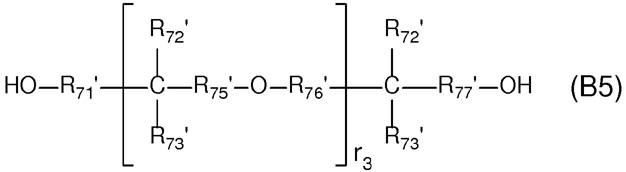 (In the formulae, R₇₅' and R₇₆' are the same as R₇₅' and R₇₆' described above, R₇₁' and R₇₇' each represent a linear alkylene group having 1 to 6 carbon atoms, R₇₂'s represents a hydroxy group or a linear hydroxyalkyl group having 1 to 6 carbon atoms in which one hydrogen atom in a terminal portion is substituted with a hydroxy group, R₇₃' represents a hydrogen atom, a linear alkyl group having 1 to 6 carbon atoms, or a linear hydroxyalkyl group having 1 to 6 carbon atoms in which one hydrogen atom in a terminal portion is substituted with a hydroxy group, and r₃ represents an integer of 1 to 3. Here, the total number of carbon atoms in R₇₅' and R₇₆' is 2 to 6, and a plurality of R₇₂"s, R₇₃"s, R₇₅"s, and R₇₆"s may be the same as or different from each other respectively.)

Specifically, examples of the linear alkylene group having 1 to 6 carbon atoms represented by R₇₁' in the general formulae (B3) to (B5) include a methylene group, an ethylene group, a trimethylene group, a tetramethylene group, a pentamethylene group, and a hexamethylene group. In the general formula (B3), a trimethylene group, a tetramethylene group, a pentamethylene group, and a hexamethylene group are preferable. In the general formula (B4), a methylene group, an ethylene group, a trimethylene group, and a tetramethylene group are preferable. In the general formula (B5), a methylene group and an ethylene group are preferable.

Specifically, examples of the linear alkylene group having 1 to 6 carbon atoms represented by R₇₁' in the general formulae (B4) and (B5) include a methylene group, an ethylene group, a trimethylene group, a tetramethylene group, a pentamethylene group, and a hexamethylene group. Among these, the methylene group, the ethylene group, the trimethylene group, and the tetramethylene group are preferable, and the methylene group and the ethylene group are more preferable.

Specifically, examples of the linear hydroxyalkyl group having 1 to 6 carbon atoms in which one hydrogen atom in a terminal portion is substituted with a hydroxy group represented by R₇₂' and R₇₃' in the general formulae (B4) and (B5) include a hydroxymethyl group, a hydroxyethyl group, a hydroxypropyl group, a hydroxybutyl group, a hydroxypentyl group, and a hydroxyhexyl group. Among these, the hydroxymethyl group, the hydroxyethyl group, the hydroxypropyl group, and the hydroxybutyl group are preferable, and the hydroxymethyl group and the hydroxyethyl group are more preferable.

Specifically, examples of the linear alkyl group having 1 to 6 carbon atoms represented by R₇₃' in the general formulae (B4) and (B5) include a methyl group, an ethyl group, a n-propyl group, a n-butyl group, a n-pentyl group, and a n-hexyl group. Among these, the methyl group, the ethyl group, the n-propyl group, and the n-butyl group are preferable, and the methyl group and the ethyl group are more preferable.

As R₇₂' in the general formula (B4), a hydroxy group, a hydroxymethyl group, a hydroxyethyl group, a hydroxypropyl group, and a hydroxybutyl group are preferable, the hydroxy group, the hydroxymethyl group, and the hydroxyethyl group are more preferable, and the hydroxymethyl group and the hydroxyethyl group are particularly preferable.

As R₇₃' in the general formula (B4), a hydrogen atom, a methyl group, an ethyl group, a n-propyl group, a n-butyl group, a hydroxymethyl group, a hydroxyethyl group, a hydroxypropyl group, and a hydroxybutyl group are preferable, the hydrogen atom, the methyl group, the ethyl group, the hydroxymethyl group, and the hydroxyethyl group are more preferable, and the hydroxymethyl group and the hydroxyethyl group are particularly preferable.

As R₇₂' and R₇₃' in the general formula (B5), a linear hydroxyalkyl group having 1 to 6 carbon atoms in which one hydrogen atom in a terminal portion is substituted with a hydroxy group is preferable. Specifically, a hydroxymethyl group and a hydroxyethyl group are preferable.

As r₃ in the general formula (B5), 1 is preferable.

Preferred specific examples of the compound represented by the general formula (B3) include 1,3-propanediol, 1,4-butanediol, 1,5-pentanediol, and 1,6-hexanediol. Among these, the 1,4-butanediol is preferable.

Preferred specific examples of the compound represented by the general formula (B4) include compounds represented by the following formulae.

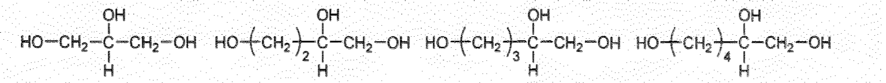

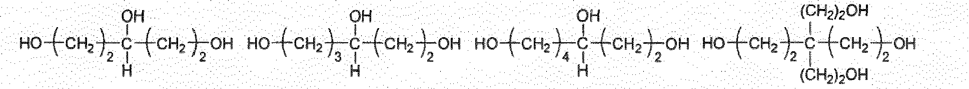

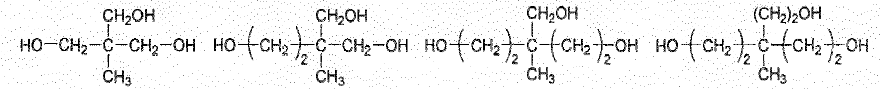

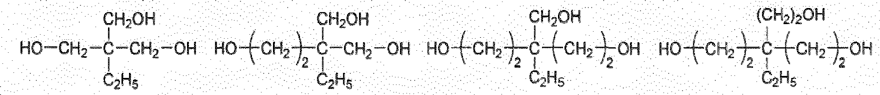

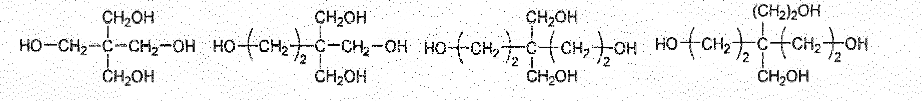

Among the following specific examples, 1,2,4-butanetriol, 1,2,5-pentanetriol, 1,2,6-hexanetriol, trimethylolethane, trimethylolpropane, and pentaerythritol are preferable, the 1,2,6-hexanetriol, the trimethylolpropane, and the pentaerythritol are more preferable, and the pentaerythritol is particularly preferable.

Preferred specific examples of the compound represented by the general formula (B5) include dipentaerythritol, tripentaerythritol, and tetrapentaerythritol. Among these, the dipentaerythritol is preferable.

As the alcohol used in accordance with the present invention, among the specific examples preferred as the compounds represented by the general formulae (B3) to (B5), 1,3-propanediol, 1,4-butanediol, 1,5-pentanediol, 1,6-hexanediol, 1,2,6-hexanetriol, trimethylolpropane, pentaerythritol, and dipentaerythritol are preferable, the 1,3-propanediol, the 1,4-butanediol, the 1,6-hexanediol, the 1,2,6-hexanetriol, and the pentaerythritol are more preferable, the 1,4-butanediol and the pentaerythritol are even more preferable, and the pentaerythritol is particularly preferable. The alcohol used in accordance with the present invention may be a commercial alcohol or an alcohol appropriately synthesized by a known method.

### Binder agent composition used in the present invention

The binder agent composition used in the present invention contains the copolymer used in the present invention, the alcohol used in accordance with the present invention, and water. It should be noted that one kind of each of the copolymer used the present invention and the alcohol used in accordance with the present invention may be used singly, or two or more kinds of each of the copolymer used in the present invention and the alcohol used in accordance with the present invention may be used in combination. It is preferable to use one kind each of the copolymer used in the present invention and the alcohol used in accordance with the present invention singly.

In the binder agent composition used in the present invention, the content of the copolymer used in the present invention with respect to the total mass of the copolymer used in to the present invention and the alcohol used in accordance with the present invention is 70% to 99% by mass, preferably 75% to 99% by mass, and more preferably 80% to 99% by mass. It should be noted that in a case where two or more kinds of copolymers used in the present invention are used in combination, the total mass thereof equal the content.

In the binder agent composition used in the present invention, the content of the alcohol used in accordance with the present invention with respect to the total mass of the copolymer used in the present invention and the alcohol used in accordance with the present invention is 1% to 30% by mass, preferably 1% to 25% by mass, and more preferably 1% to 20% by mass. It should be noted that in a case where two or more kinds of alcohols used in accordance with the present invention are used in combination, the total mass thereof equal the content.

In the binder agent composition used **in** the present invention, the content of water is set such that the total mass of the copolymer used in to the present invention and the alcohol used in accordance with the present invention becomes 1% to 50% by mass of the total mass of the composition, and preferably becomes 1% to 20% by mass of the total mass of the composition. At this time, the concentration of the copolymer used in the present invention in the binder agent composition used in the present invention may be appropriately set according to the concentration used for preparing an electrode. The concentration of the copolymer is generally 1% to 30%, and preferably 1% to 20%.

The binder agent composition used in the present invention can be manufactured by mixing together the copolymer used in the present invention, the alcohol used in accordance with the present invention, and water such that the content of each of the copolymer, the alcohol, and water becomes as described above. At this time, the polymerization reaction, the neutralization treatment, and the crosslinking reaction in the method for manufacturing the copolymer used in to the present invention need to be performed before the manufacturing of the binder agent composition used in the present invention. That is, the polymerization reaction and either or both of the neutralization treatment and the crosslinking reaction, which are carried out if necessary, is performed so as to manufacture the desired copolymer used in the present invention, and then the copolymer needs to be mixed with the alcohol used in accordance with the present invention and water to manufacture the binder agent composition used inef the present invention. The reason is as below. For example, in the method for manufacturing the copolymer used in the present invention, in a case where the polymerization reaction is performed by adding the alcohol used in accordance with the present invention, unfortunately, the obtained copolymer is not dissolved in various solvents including water, and accordingly, the copolymer cannot be used for preparing an electrode.

It is considered that at the time of preparing an electrode, the copolymers used in the present invention in the binder agent composition used in the present invention may be bonded to each other through the alcohol used in accordance with the present invention (due to the action of the alcohol as a linking agent), and the copolymers used in the present invention may be evenly disposed on the electrode and cover the surface of the active material. Therefore, in a case where an electrode is prepared using the binder agent composition used in the present invention, it is possible to obtain an electrode having excellent cycle characteristics in which substantially the entire surface of the active material can be utilized for charge and discharge.

### Carbon-containing active material

The carbon-containing active material in the slurry composition of the present invention may contain carbon or at least one kind of active material with carbon-coated surface other than carbon (hereinafter, the active material will be simply described as an active material with carbon-coated surface in some cases). The carbon-containing active material may be any of a material constituted only with carbon; a material constituted only with a carbon-coated active material; a material constituted with a combination of carbon and a carbon-coated active material; and a material constituted with a combination of carbon and/or a carbon-coated active material and an active material other than carbon.

Examples of the carbon include a graphite-based carbon material (graphite) such as natural graphite, artificial graphite, or expanded graphite, carbon black, activated carbon, carbon fiber, cokes, soft carbon, hard carbon, and the like. Among these, the graphite such as the natural graphite, the artificial graphite, or the expanded graphite is preferable. Examples of the natural graphite include flake graphite, lump graphite, and the like. Examples of the artificial graphite include lump graphite, vapor-grown graphite, flake graphite, fibrous graphite, and the like.

Examples of the active material other than carbon include silicon, germanium, tin, lead, zinc, aluminum, indium, antimony, bismuth, and the like. Among these, the silicon is preferable. Examples of the silicon include a silicon oxide such as SiO or SiO₂, a metal-bonded silicon (SiM: M represents a metal such as magnesium, iron, calcium, cobalt, nickel, boron, copper, manganese, silver, vanadium, cerium, or zinc), and the like, besides silicon.

Specifically, examples of the carbon-coated active material include silicon with carbon-coated surface, a silicon oxide with carbon-coated surface, a metal-bonded silicon with carbon-coated surface, and the like. Among these, the silicon with carbon-coated surface and the silicon oxide with carbon-coated surface are preferable, and the silicon oxide with carbon-coated surface is more preferable. It should be noted that in the active material with carbon-coated surface, the surface may be fully or partially coated with carbon.

Examples of the carbon-containing active material in the slurry composition of the present invention include an active material containing at least one kind of material among carbon, silicon with carbon-coated surface, a silicon oxide with carbon-coated surface, and a metal-bonded silicon with carbon-coated surface. More specifically, examples thereof include an active material containing carbon; silicon with carbon-coated surface; a silicon oxide with carbon-coated surface; a metal-bonded silicon with carbon-coated surface; an active material obtained by mixing together at least two or more kinds of materials described above; or a material obtained by mixing at least one kind of the above material with one or more kinds of materials selected from silicon, germanium, tin, lead, zinc, aluminum, indium, antimony, and bismuth. Among these, an active material containing carbon; silicon with carbon coated surface; a silicon oxide with carbon-coated surface; a metal-bonded silicon with carbon-coated surface; an active material obtained by mixing together two or more kinds of materials selected from these; or a material obtained by mixing at least one kind of material described above with one or more kinds of materials selected from silicon, a silicon oxide, and a metal-bonded silicon is preferable; an active material containing carbon; the silicon with carbon-coated surface; the silicon oxide with carbon-coated surface; the metal-bonded silicon with carbon-coated surface; or a material obtained by mixing together two or more kinds of materials selected from these is more preferable; an active material containing carbon; the silicon with carbon-coated surface; the silicon oxide with carbon-coated surface; or a material obtained by mixing together at least two or more kinds of materials selected from these is even more preferable; an active material containing carbon and the silicon oxide with carbon-coated surface is still more preferable; and an active material containing carbon and silicon monoxide with carbon-coated surface is particularly preferable.

The average particle size of the carbon-containing active material in the slurry composition of the present invention varies with the type of the active material. The average particle size of the carbon-containing active material is generally 1 nm to 100 µm, preferably 1 nm to 50 µm, and more preferably 1 nm to 20 µm.

In the slurry composition of the present invention, the content of carbon in the carbon-containing active material is generally 10% to 100% by mass, preferably 40% to 100% by mass, and more preferably 50% to 100% by mass.

### Conductive assistant

Examples of the conductive assistant in the slurry composition of the present invention include carbon black such as acetylene black, Ketjen black, furnace black, or thermal black. Among these, the acetylene black and the Ketjen black are preferable, and the acetylene black is more preferable.

### Slurry composition of the present invention

The slurry composition of the present invention is a composition for preparing an electrode that contains 1) the carbon-containing active material, 2) the conductive assistant, and 3) the binder agent composition used in the present invention. The slurry composition of the present invention may be used for preparing a positive electrode or a negative electrode, but is preferably used for preparing a negative electrode.

In the slurry composition of the present invention, the content of the carbon-containing active material with respect to the mass of the slurry composition which does not contain a solvent is 1% to 98% by mass, and preferably 10% to 98% by mass.

In the slurry composition of the present invention, the content of the conductive assistant with respect to the mass of the slurry composition which does not contain a solvent is 1% to 40% by mass, preferably 1% to 30% by mass, and even more preferably 1% to 20% by mass.

In the slurry composition of the present invention, the content of the binder agent composition used in the present invention with respect to the mass of the slurry composition which does not contain a solvent is 1% to 30% by mass, more preferably 1% to 25% by mass, and even more preferably 1% to 20% by mass. In a case where the binder agent composition used inef the present invention is incorporated into the slurry composition within the above range, the active material and the conductive assistant can be evenly dispersed on a current collector at the time of preparing an electrode, and the electrode structure can be maintained even though the active material expands.

The slurry composition of the present invention may contain, for example, a supporting salt, an ion-conductive polymer, a binder polymer, and the like (except for the copolymer used in the present invention), in addition to 1) the carbon-containing active material, 2) the conductive assistant, and 3) the binder agent composition used in the present invention. Examples of the supporting salt include Li(C₂F₅SO₂)₂N (LiBETI), LiPF₆, LiBF₄, LiClO₄, LiAsF₆, LiCF₃SO₃, and the like. Examples of the ion-conductive polymer include a polyethylene oxide (PEO)-based polymer, a polypropylene oxide (PPO)-based polymer, and the like. Examples of the binder polymer include polyvinylidene fluoride (PVDF), polytetrafluoroethylene (PTFE), carboxymethyl cellulose (CMC), a styrene-butadiene copolymer (SBR), an acrylonitrile-butadiene copolymer (NBR), polyacrylonitrile (PAN), an ethylene-vinyl alcohol copolymer (EVOH), polyurethane, polyacrylate, polyvinyl ether, polyimide, and the like. The content of the supporting salt, the ion-conductive polymer, and the binder polymer may be set based on the amount generally used in the field of the related art.

The slurry composition of the present invention is obtained by mixing together 1) the carbon-containing active material, 2) the conductive assistant, and 3) the binder agent composition used in the present invention and described herein in an appropriate solvent such that the concentration range of each of these becomes described above. Examples of the solvent include water, N-methyl-2-pyrrolidone (NMP), dimethylformamide, dimethylacetamide, methylformamide, dimethyl sulfoxide, acetonitrile, tetrahydrofuran, γ-butyrolactone, toluene, methyl ethyl ketone, ethyl acetate, dioxane, and the like. Among these, water is preferable.

### Current collector

The current collector used in the present invention is constituted with a foil, a mesh, an expanded grid (expanded metal), a punched metal, and the like in which a conductive material such as nickel, copper, or stainless steel (SUS) is used. The opening size and the wire diameter of the mesh, the number of meshes, and the like are not particularly limited, and conventionally known meshes can be used. The thickness of the current collector is preferably 5 to 30 µm. Here, a current collector having a thickness out of the range may also be used.

The size of the current collector is determined according to the use of the battery. In order to prepare a large electrode used in a large battery, a current collector with a large area is used. In order to prepare a small electrode, a current collector with a small area is used.

### Electrode of the present invention

The electrode of the present invention has 1) the carbon-containing active material, 2) the conductive assistant, 3) the binder agent derived from the binder agent composition described herein as being used for the present invention, and 4) the current collector. Specifically, the electrode of the present invention has the current collector and an active material layer which is formed on the surface of the current collector and contains the carbon-containing active material, the conductive assistant, and the binder agent derived from the binder agent composition used in the present invention. The electrode of the present invention can be used as a negative electrode and a positive electrode. It is preferable that the electrode of the present invention is used as a negative electrode.

In the active material layer, due to the binder agent derived from the binder agent composition used in the present invention, the carbon-containing active material and the conductive assistant are evenly dispersed on the current collector, and excellent coating properties are maintained. Therefore, the electrode of the present invention has excellent reversibility.

The thickness of the active material layer (thickness of the coating layer) is generally 1 to 500 µm, preferably 1 to 300 µm, and more preferably 1 to 150 µm.

The method for preparing the electrode of the present invention includes coating the current collector with the slurry composition of the present invention [a composition containing 1) the carbon-containing active material, 2) the conductive assistant, and 3) the binder agent composition used in the present invention] and drying the slurry composition. Because of the drying of the slurry composition of the present invention in the preparation method, the polymers used in the present invention in the binder agent composition used in the present invention are bonded to each other through the bivalent to decavalent alcohol, and the binder agent derived from the binder agent composition used in the present invention and described herein is formed.

In the preparation method, the amount of the slurry composition of the present invention used may be appropriately set such that the thickness of the active material layer becomes the range described above after drying.

In the method for preparing the electrode of the present invention, the current collector can be coated with the slurry composition of the present invention by a method such as a self-propellable coater, an ink jet method, a doctor blade method, a spray method, or a combination of these. Among these, the doctor blade method or the ink jet method which can form a thin layer is preferable, and the doctor blade method is more preferable.

In the method for preparing the electrode of the present invention, the drying method may be performed based on a conventionally known method. Generally, the drying method is performed by a heating treatment. At the time of heating, the drying conditions (whether or not a vacuum is required, the drying time, and the drying temperature) may be appropriately set according to the amount of the slurry composition of the present invention used for coating or the volatilization rate or the slurry composition. Specifically, for example, the slurry composition may be dried in a vacuum generally at a temperature of 80°C to 150°C and preferably at a temperature of 120°C to 150°C, generally for 5 to 20 hours and preferably for 6 to 12 hours.

In the method for preparing the electrode of the present invention, if necessary, a pressing treatment may be performed after drying. The pressing method may be performed based on a conventionally known method. Examples thereof include a calender roll method, flat plate pressing, and the like. Among these, the calender roll method is preferable.

The electrode of the present invention can be used in lithium batteries. The electrode of the present invention can be used in any of general batteries constituted with a positive electrode, an electrolyte, and a negative electrode.

As the electrolyte, electrolytes having additives such as vinylene carbonate, fluorovinylene carbonate, methyl vinylene carbonate, fluoromethyl vinylene carbonate, ethyl vinylene carbonate, propyl vinylene carbonate, butyl vinylene carbonate, dipropyl vinylene carbonate, 4,5-dimethylvinylene carbonate, 4,5-diethylvinylene carbonate, vinyl ethylene carbonate, divinyl ethylene carbonate, phenyl ethylene carbonate, diallyl carbonate, fluoroethylene carbonate (FEC), catechol carbonate, 1,3-propanesultone, and butane sultone are preferable. Among these, electrolytes having fluoroethylene carbonate (FEC) are more preferable. The content of the additives in the electrolyte is generally 0.5% to 15%, and preferably 0.5% to 5%.

Hereinafter, the present invention will be specifically described based on examples, but the present invention is not limited thereto.

### Examples

### Synthesis Example 1 Preparation of crosslinked copolymer solution E-1

### (1) Synthesis of crosslinked copolymer

Propylene glycol monomethyl ether acetate (70 g, 530 mmol, manufactured by Wako Pure Chemical Industries, Ltd.) was put into a 200 mL round bottom flask comprising a stirring device, a cooling pipe, a thermometer, a nitrogen introduction pipe, and a dripping device, and the flask was heated under a nitrogen stream until the internal temperature thereof became 90°C. Then, a solution, which was obtained by mixing together 9.2 g of acrylic acid (128 mmol, manufactured by Wako Pure Chemical Industries, Ltd.), 9.2 g of 2-hydroxyethyl acrylate (HEA, 79 mmol, manufactured by Wako Pure Chemical Industries, Ltd.), 0.06 g of polyethylene glycol diacrylate (0.2 mmol, manufactured by SHIN-NAKAMURA CHEMICAL CO., LTD.), 0.04 g of 2,2'-azobis(isobutyronitrile) (0.2 mmol, manufactured by Wako Pure Chemical Industries, Ltd.), and 30 g of propylene glycol monomethyl ether acetate (227 mmol), was added dropwise to the round bottom flask for 2 hours. Thereafter, the obtained solution was reacted for 5 hours at 90°C. After the reaction, the solution was cooled to room temperature, thereby obtaining a crosslinked copolymer. From the copolymer obtained under pressure reduced to 25 mmHg (about 33.3 hPa), propylene glycol monomethyl ether acetate was removed, thereby obtaining solid substances. The solid substances were then dried in a vacuum, thereby obtaining solid contents (crosslinked copolymer) in which a compositional ratio between monomers of acrylic acid:HEA = 1:1.

### (2) Preparation of crosslinked copolymer solution

The crosslinked copolymer (4.6 g) obtained in (1) and 30 mL of deionized water were added to a 100 mL glass beaker and dispersed by being stirred for 2 hours. A 50% sodium hydroxide solution (manufactured by Wako Pure Chemical Industries, Ltd.) was added to the obtained dispersion liquid so as to adjust the pH to be 6.8. Then, deionized water was added thereto so as to adjust the total amount thereof to be 50 g. In this way, 50 g of a crosslinked copolymer solution was obtained in which 10 wt% of the solid contents were neutralized (degree of neutralization: 80%). The solution was named crosslinked copolymer solution E-1.

### Synthesis Example 2 Preparation of non-crosslinked copolymer solution E-2

A non-crosslinked copolymer was obtained by performing a polymerization reaction according to the same method as in (1) of Synthesis Example 1, except that polyethylene glycol diacrylate was not added.

A neutralized non-crosslinked copolymer solution was obtained (degree of neutralization: 80%) by the same method as in (2) of Synthesis Example 1, except that 4.6 g of the non-crosslinked copolymer obtained as above was used instead of 4.6 g of the crosslinked copolymer. The solution was named non-crosslinked copolymer solution E-2.

### Experimental Example 1 Measurement of viscosity of each copolymer solution

For each of the crosslinked copolymer solution E-1 obtained in Synthesis Example 1 and the non-crosslinked copolymer solution E-2 obtained in Synthesis Example 2, the viscosity was measured using a B type rotational viscometer (trade name: B8L, manufactured by TOKYO KEIKI) and a No. 4 rotor at a rotation speed of 12 rpm and a measurement temperature of 20°C.

The obtained results are shown in Table 1 together with the degree of neutralization.

**[Table 1]**

| | Copolymer solution | |
|---|---|---|
| | E-1 | E-2 |
| | Crosslinked | Non-crosslinked |
| Degree of neutralization (%) | 80 | 80 |
| Viscosity (mPa/s) | 3,000 | 2,800 |

### Synthesis Example 3 Preparation of binder solution K-1

The crosslinked copolymer solution E-1 (9.9 g, 0.99 g as solid contents), 0.01 g of pentaerythritol (manufactured by Wako Pure Chemical Industries, Ltd.), and 90 µL of deionized water were added to a 10 mL beaker made of TEFLON (registered trademark), and stirred until a transparent solution was obtained. In this way, a binder solution K-1 with 10 wt% solid contents was obtained.

### Synthesis Example 4 Preparation of binder solution K-2

The crosslinked copolymer solution E-1 (9 g, 0.9 g as solid contents), 0.1 g of pentaerythritol, and 900 µL of deionized water were added to a 10 mL beaker made of TEFLON (registered trademark), and stirred until a transparent solution was obtained. In this way, a binder solution K-2 with 10 wt% solid contents was obtained.

### Synthesis Examples 5 to 7 Preparation of binder solutions K-3 to K-5

Binder solutions K-3 to K-5 with 10 wt% solid contents were obtained by the same method as in Synthesis Example 4, except that instead of 0.1 g of the pentaerythritol, 1,3-propanediol (manufactured by Wako Pure Chemical Industries, Ltd.), 1,4-butanediol (manufactured by Wako Pure Chemical Industries, Ltd.), or 1,6-hexanediol (manufactured by Wako Pure Chemical Industries, Ltd.) was used in an amount of 0.1 g.

### Synthesis Example 8 Preparation of binder solution K-6

A binder solution K-6 with 10 wt% solid contents was obtained by the same method as in Synthesis Example 3, except that 0.01 g of 1,2,6-hexanetriol (manufactured by Wako Pure Chemical Industries, Ltd.) was used instead of 0.01 g of pentaerythritol.

### Synthesis Example 9 Preparation of binder solution K-7

A binder solution K-7 with 10 wt% solid contents was obtained by the same method as in Synthesis Example 4, except that 9 g (0.9 g as solid contents) of the non-crosslinked copolymer solution E-2 was used instead of 9 g of the crosslinked copolymer solution E-1.

### Synthesis Example 10 Preparation of binder solution J-1

A binder solution J-1 with 10 wt% solid contents was obtained by the same method as in Synthesis Example 4, except that 0.1 g of propanediamine (manufactured by Wako Pure Chemical Industries, Ltd.) was used instead of 0.1 g of pentaerythritol.

### Synthesis Example 11 Preparation of binder solution J-2

A binder solution J-2 with 10 wt% solid contents was obtained by the same method as in Synthesis Example 3, except that 0.01 g of sodium oxalate (manufactured by Wako Pure Chemical Industries, Ltd.) was used instead of 0.01 g of pentaerythritol.

### Example 1 Manufacturing of battery by using electrode of the present invention

### (1) Manufacturing of slurry composition of the present invention

A carbon-coated silicon monoxide active material (SiOC) (2.1 g, particle size: average particle size of 5 µm, trade name: SiO 1.3C, manufactured by OSAKA Titanium Technologies Co., Ltd.), 11.2 g of a graphite active material (particle size: average particle size of 10 µm, trade name: SNO-10, manufactured by SEC CARBON, LIMITED.), and 0.14 g of acetylene black (AB) (trade name: DENKA BLACK, manufactured by Denka Company Limited.) were weighed and mixed together for 10 minutes by using a rotation/revolution foam removing stirrer (trade name: AWATORI RENTARO, model: AR-250, manufactured by Thinky Corporation) at a rotation speed of 2,000 rpm. Then, 5.6 g of the binder solution K-1 was added thereto and mixed for 3 hours by using the rotation/revolution foam removing stirrer at 2,000 rpm. Thereafter, 6 g of deionized water was added thereto and mixed for 10 minutes by using the rotation/revolution foam removing stirrer at 2,000 rpm. Subsequently, foam was removed for 5 minutes by using the rotation/revolution foam removing stirrer, and the obtained mixture (mass ratio of solid contents of SiOC:graphite:AB:binder solution = 10:85:1:4) was used as a slurry composition. By being applied onto a current collector and then dried, the slurry composition becomes a coating film containing 10 wt% of SiOC, 85 wt% of graphite, 1 wt% of AB, and 4 wt% of a binder.

### (2) Preparation of electrode for lithium battery of the present invention

By using a doctor blade (manufactured by TESTER SANGYO CO., LTD.) and a coater (trade name: MINI-COATER MC-20, manufactured by Hohsen Corp.), a copper foil current collector having a thickness of 20 µm was coated with the slurry composition obtained in (1) such that the total mass of SiOC and graphite in the active material became 5 mg/cm². Then, the slurry composition was dried at 80°C in the air and then dried for 12 hours at 150°C in a vacuum. The thickness of the film on the current collector measured using a caliper was about 80 to 50 µm.

The obtained current collector was pressed using a roll press machine (trade name: HSR-60150, manufactured by Hohsen Corp.), thereby preparing an electrode for lithium batteries in which the density of the silicon active material was 1.5 mg/cm³.

### (3) Manufacturing of coin type battery

A coin type battery including the electrode obtained in (2), a lithium foil electrode, an ethylene carbonate (EC)/dimethyl carbonate (DMC) (volume ratio: 1:1) solution containing 1 M LiPF₆, and a separator was assembled in a glovebox filled with argon.

### Examples 2 to 7 Manufacturing of battery by using electrode of the present invention

A slurry composition, an electrode for lithium batteries, and a coin type battery were manufactured by the same method as in Example 1, except that 5.6 g of each of the binder solutions K-2 to K-7 was used instead of 5.6 g of the binder solution K-1.

### Comparative Examples 1 and 2 Manufacturing of battery

A slurry composition, an electrode for lithium batteries, and a coin type battery were manufactured by the same method as in Example 1, except that 5.6 g of the binder solution J-1 or J-2 was used instead of 5.6 g of the binder solution K-1.

### Comparative Example 3 Manufacturing of battery

A slurry composition, an electrode for lithium batteries, and a coin type battery were manufactured by the same method as in Example 1, except that 5.6 g of the crosslinked copolymer solution E-1 was used instead of 5.6 g of the binder solution K-1.

### Experimental Example 2 Measurement of slurry dispersibility by using each slurry composition

Each of the slurry compositions (5 g) prepared in Examples 1 to 7 and Comparative Examples 1 to 3 was added to a 50 mL graduated centrifuge tube made of glass, and then 20 mL of deionized water was added thereto. The solution was stirred for 10 minutes by using a shaker and then left to stand for 60 minutes, and blue paper was installed on the rear surface of the centrifuge tube. In a case where blue as background color was not seen in the entire range of 0 to 20 mL indicated by the gradations on the centrifuge tube, the slurry was denoted by A (dispersibility was excellent). In a case where blue as background color was not seen in a range of 0 to 15 mL but seen in a range of 15 to 20 mL, the slurry was denoted by B (precipitates slightly occurred). In a case where blue as background color was seen in a range of 5 to 20 mL, the slurry was denoted by C (dispersibility was poor).

The obtained results are shown in Table 2.

### Experimental Example 3 Measurement of peel strength by using each electrode

Each of the electrodes prepared in Examples 1 to 7 and Comparative Examples 1 to 3 was cut with a cutter in the form of a rectangle having a width of 5 mm and a length of about 50 mm. Except for the edge of the electrode that was 5 mm long, the electrode was bonded to slide glass on which a double-sided tape was stuck. Kapton tape was bonded to the non-bonded edge of the electrode that was 5 mm long, the edge opposite to the edge of the electrode was set in a peel tester (trade name: FGS-TV, model number: digital force gauge FGP-0.5, manufactured by NIDEC-SHIMPO CORPORATION) such that the peel angle became 90°, and the electrode was pulled up at a speed of 10 mm/min. The average of the data obtained while the electrode was being pulled up to 30 mm was taken as a peel strength (unit: N).

The obtained results are shown in Table 2.

It should be noted that the obtained data represents a force required mainly for peeling the active material layer from the copper foil. Accordingly, a high peel strength means that the active material layer formed of the slurry composition (here, containing SiOC, graphite, AB, and a binder) is strongly bonded to the copper foil of the current collector.

### Experimental Example 4 Charge/discharge test by using each battery

By using each of the coin type batteries prepared in Examples 1 to 7 and Comparative Examples 1 to 3, a constant current charge/discharge test was performed under the following conditions. The conditions of charge and discharge are as below.
- Counter electrode: Li foil
- Electrolytic solution: 1 M LiPF₆ EC/DMC mixed solution (volume ratio: 1:1)
- Measurement apparatus: ABE1024-5V 0.1A-4 charge/discharge tester (manufactured by ELECTRO FIELD)
- Potential and current density
Potential range 2.0 to 0.0 V (vs. Li/Li⁺)
Current density 50 mA/g for the first test, 50 mA/g from the second test

From the values of discharge capacity of the negative electrode obtained in the initial charge and discharge by using each battery and the discharge capacity of the negative electrode obtained after the 5^{th} cycle, a capacity retention rate (%) was calculated using the following equation.

Capacity retention rate (%) = discharge capacity after 5^{th} cycle ÷ initial discharge capacity × 100

The obtained results are shown in Table 2.

**[Table 2]**

| Example | Binder solution | Amount of copolymer solution (wt% in composition for preparing electrode) | | bivalent to decavalent alcohol | | Slurry dispersibility | Peel strength (N) | Capacity retention rate |
|---|---|---|---|---|---|---|---|---|
| | | E-1 | E-2 | Name of alcohol | Amount (wt%) | | | |
| | | Crosslinked | Non-crosslinked | | | | | |
| Example 1 | K-1 | 3.96 | - | Pentaerythritol | 0.04 | A | 0.22 | 90 |
| Example 2 | K-2 | 3.6 | - | Pentaervthritol | 0.4 | A | 0.25 | 92 |
| Example 3 | K-3 | 3.6 | - | 1,3-Propanediol | 0,4 | A | 0.21 | 88 |
| Example 4 | K-4 | 3.6 | - | 1.4-Butanediol | 0.4 | A | 0.22 | 81 |
| Example 5 | K-5 | 3.6 | - | 1,6-Hexanediol | 0.4 | A | 0.21 | 80 |
| Example 6 | K-6 | 3.96 | - | 1,2,6- Hexanetriol | 0.04 | A | 0.22 | 85 |
| Example 7 | K-7 | - | 3.6 | Pentaervthritol | 0.4 | A | 0.17 | 75 |
| Comparative Example 1 | J-1 | 3.6 | - | Propanediamine | 0.4 | C | 0.17 | 55 |
| Comparative Example 2 | J-2 | 3.96 | - | Sodium oxalate | 0.04 | B | 0.07 | 53 |
| Comparative Example 3 | E-1 | 4 | - | - | - | B | 0.18 | 70 |

From Table 2, it was understood that while all of the slurry compositions of the present invention in Examples 1 to 7 exhibited excellent slurry dispersibility, all of the slurry compositions of Comparative Examples 1 to 3 exhibited poor slurry dispersibility. Evenly dispersing an active material or a conductive assistant in slurry is an important factor in preparing an electrode. In a case where AB as a conductive assistant is aggregated without being dispersed in slurry, a conduction path is not formed in an electrode, and the battery performance deteriorates. Therefore, it is considered that because the slurry compositions of Examples 1 to 7 had excellent slurry dispersibility, a conduction path was formed in the electrodes prepared using the slurry compositions, and hence the battery performance was improved.

It was understood that all of the electrodes of the present invention in Examples 1 to 7 had a peel strength equal to or higher than that of the electrodes of Comparative Examples 1 to 3. It is considered that because the alcohol used in accordance with the present invention improved the binding to the current collector, or copolymers were bonded to each other through the alcohol used in accordance with the present invention, the copolymers were evenly disposed on the electrode, copper atoms or active materials in the current collector were more strongly bonded to each other, and as a result, all of the electrodes of the present invention in Examples 1 to 7 had a peel strength equal to or higher than that of the electrodes of Comparative Examples 1 to 3.

Furthermore, it was understood that all of the batteries of Examples 1 to 7, in which the electrode of the present invention was used, exhibited a capacity retention rate higher than that of the batteries of Comparative Examples 1 to 3. It is considered that because a homopolymer was bonded to a copolymer or a homopolymer through the alcohol used in accordance with the present invention, the polymers were evenly disposed on the electrode and covered the surface of the active material, and as a result, problems such as the separation of a micro-layer in which the polymers are unevenly distributed did not occur, substantially the entire surface of the active material is utilized for charge and discharge.

### Synthesis Example 12 Synthesis of crosslinked copolymer C-1

Methyl ethyl ketone (MEK, 20 mL, manufactured by Wako Pure Chemical Industries, Ltd.) was put into a 200 mL round bottom flask comprising a stirring device, a cooling pipe, a thermometer, a nitrogen introduction pipe, and a dripping device. Then, 2 g of acrylic acid (28 mmol, manufactured by Wako Pure Chemical Industries, Ltd.), 2 g of 2-hydroxyethyl acrylate (HEA) (17 mmol, manufactured by Wako Pure Chemical Industries, Ltd.), 0.014 g of polyethylene glycol diacrylate (0.05 mmol, manufactured by SHIN-NAKAMURA CHEMICAL CO., LTD.), and 0.01 g of dimethyl 2,2'-azobis(2-methylpropionate) (0.04 mmol, manufactured by Wako Pure Chemical Industries, Ltd.) were added thereto and stirred. Thereafter, the mixture was reacted for 4 hours at 70°C under a nitrogen stream. Because a slight amount of MEK was volatilized during the reaction, MEK was added as necessary. After the reaction, the reaction solution was cooled to room temperature, thereby obtaining white solids. The obtained white solids were dried in a vacuum, thereby obtaining a crosslinked copolymer in which the compositional ratio of monomers represented by acrylic acid:HEA = 1:1. The obtained copolymer was named crosslinked copolymer C-1.

### Synthesis Example 13 Synthesis of crosslinked copolymer C-2

A crosslinked copolymer C-2 was obtained by performing a polymerization reaction according to the same method as in Synthesis Example 12, except that 0.4 g of 1,4-butanediol (manufactured by Wako Pure Chemical Industries, Ltd.) was further added to the reaction system.

### Synthesis Example 14 Synthesis of crosslinked copolymer C-3

A crosslinked copolymer C-3 was obtained by performing a polymerization reaction according to the same method as in Synthesis Example 12, except that 0.4 g of pentaerythritol (manufactured by Wako Pure Chemical Industries, Ltd.) was further added to the reaction system.

### Experimental Example 5 Testing solubility of each polymer

For each of the crosslinked copolymers C-1 to C-3 obtained in Synthesis Examples 12 to 14, solubility tests described in the following (1) to (3) were performed. A copolymer completely dissolved in a solvent was denoted by A, and a copolymer insoluble in a solvent was denoted by C.

The obtained results are shown in Table 3 together with the monomer content and the content of the bivalent to decavalent alcohol in each of the crosslinked copolymers C-1 to C-3.

### (1) Testing solubility in water

Deionized water (H₂O) was added in an amount by which the concentration of each of the crosslinked copolymers C-1 to C-3 became 5%, and the solubility was tested at room temperature.

### (2) Testing solubility in aqueous sodium hydroxide solution

An aqueous sodium hydroxide solution (NaOH, manufactured by Wako Pure Chemical Industries, Ltd.) was added in an amount by which the degree of neutralization of each of the crosslinked copolymers C-1 to C-3 became 80%, and the solubility was tested at room temperature.

### (3) Testing solubility in N-methylpyrrolidone

N-methylpyrrolidone (NMP, manufactured by Wako Pure Chemical Industries, Ltd.) was added in an amount by which the concentration of each of the crosslinked copolymers C-1 to C-3 became 5%, and the solubility was tested at room temperature.

**[Table 3]**

| | | Crosslinked copolymer | | |
|---|---|---|---|---|
| | | C-1 | C-2 | C-3 |
| Monomer | Acrylic acid | 2g | 2g | 2g |
| | 2-Hydroxyethyl acrylate | 2g | 2g | 2g |
| bivalent to decavalent alcohol | 1,4-Butanediol | - | 0.4g | - |
| | Pentaerythritol | - | - | 0.4g |
| Solubility test | (1) H₂O | A | C | C |
| | (2) NaOH | A | C | C |
| | (3) NMP | A | C | c |

From Table 3, it was understood that the copolymers (the crosslinked copolymers C-2 and C-3) subjected to a polymerization reaction together with the bivalent to decavalent alcohol (1,4-butanediol or pentaerythritol) were dissolved in none of the solvents including water, the aqueous sodium hydroxide solution, and N-methylpyrrolidone. That is, it was understood that in a case where a polymerization reaction was performed by adding the bivalent to decavalent alcohol at the time of manufacturing the copolymer used in the present invention (in other words, in a case where the polymerization reaction of the copolymer and a binding reaction by the bivalent to decavalent alcohol were simultaneously performed), the obtained copolymer was not dissolved in various solvents including water, and accordingly, the copolymer could not be used for preparing an electrode.

Accordingly, it was understood that the binder agent composition used in the present invention needs to be manufactured by manufacturing the desired copolymer used in the present invention by performing a polymerization reaction and, if necessary, a neutralization treatment and/or a crosslinking reaction, and then mixing the copolymer with the alcohol used in accordance with the present invention and water.

## Claims

1. Use of a binder agent composition for lithium batteries, wherein the binder agent composition comprises:
a copolymer containing a monomer unit derived from acrylic acid and one or two kinds of monomer units derived from a compound represented by the following general formula (I) or general formula (II) as constituent components;
a bivalent to decavalent alcohol; and
water; 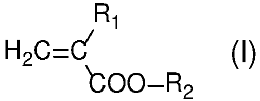
in the formula, R₁ represents a hydrogen atom or a methyl group, in a case where R₂ is a hydrogen atom, R₁ represents a methyl group, R₂ represents a hydrogen atom; an alkyl group having 1 to 20 carbon atoms; an alkyl group having 1 to 20 carbon atoms substituted with a fluorine atom or a hydroxy group; an aryl group having 6 to 10 carbon atoms; an arylalkyl group having 7 to 13 carbon atoms; an alkoxyalkyl group having 2 to 9 carbon atoms; an alkoxyalkoxyalkyl group having 3 to 9 carbon atoms; an aryloxyalkyl group having 7 to 13 carbon atoms; a morpholinoalkyl group having 5 to 7 carbon atoms; a trialkylsilyl group having 3 to 9 carbon atoms; an alicyclic hydrocarbon group having 6 to 12 carbon atoms that has or does not have an oxygen atom; a dialkylaminoalkyl group having 3 to 9 carbon atoms; a hexahydrophthalimide-N-alkyl group having 9 to 14 carbon atoms; a group represented by the following general formula (IV) 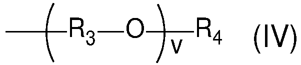
in the formula, R₃ represents an alkylene group having 1 to 6 carbon atoms that has a hydroxy group as a substituent or is unsubstituted, R₄ represents a hydrogen atom, an alkyl group having 1 to 6 carbon atoms, or a phenyl group, and v represents an integer of 2 to 20;
or a group represented by the following general formula (V) 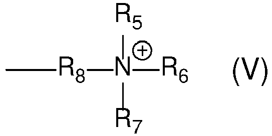
in the formula, R₅ to R₇ each independently represent an alkyl group having 1 to 3 carbon atoms, and R₈ represents an alkylene group having 1 to 3 carbon atoms, 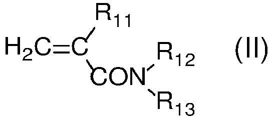
in the formula, R₁₁ represents a hydrogen atom or a methyl group, R₁₂ represents a hydrogen atom or an alkyl group having 1 to 6 carbon atoms, R₁₃ represents a hydrogen atom, an alkyl group having 1 to 6 carbon atoms, a dialkylaminoalkyl group having 3 to 9 carbon atoms, or a hydroxyalkyl group having 1 to 6 carbon atoms.

2. Use according to claim 1,
wherein the bivalent to decavalent alcohol is a compound represented by the following general formula (B1); 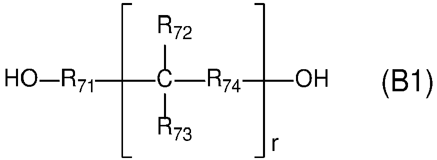 in the formula, R₇₁ represents an alkylene group having 1 to 6 carbon atoms, R₇₂ represents a hydroxy group or a hydroxyalkyl group having 1 to 6 carbon atoms, R₇₃ represents a hydrogen atom, an alkyl group having 1 to 6 carbon atoms, or a hydroxyalkyl group having 1 to 6 carbon atoms, R₇₄ represents an alkylene group having 1 to 6 carbon atoms that may have -O- in a chain, r represents an integer of 0 to 4, and a plurality of R₇₂'s, a plurality of R₇₃'s, and a plurality of R₇₄'s may be the same as or different from each other respectively.

3. Use according to claim 1,
wherein the copolymer is crosslinked by a crosslinking agent selected from compounds described in the following general formulae [1] to [13] and a polymer described in the following general formula [14]; 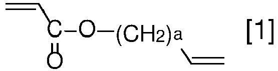 in the formula, a represents an integer of 1 to 6, 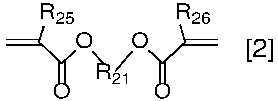 in the formula, R₂₅ and R₂₆ each independently represent a hydrogen atom or a methyl group, and R₂₁ represents an alkylene group having 1 to 20 carbon atoms, a group represented by the following general formula [2-1] 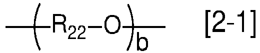 in the formula, R₂₂ represents an alkylene group having 1 to 6 carbon atoms, and b represents an integer of 1 to 6, or a group represented by the following general formula [2-2] 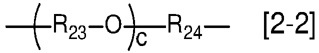 in the formula, R₂₃ and R₂₄ each independently represent an alkylene group having 1 to 6 carbon atoms, and c represents an integer of 1 to 22, 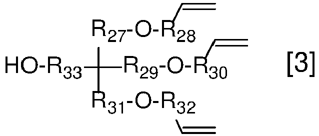 in the formula, R₂₇ to R₃₃ each independently represent an alkylene group having 1 to 3 carbon atoms, 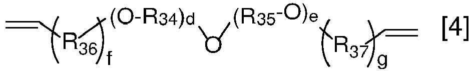 in the formula, R₃₄ to R₃₇ each independently represent an alkylene group having 1 to 6 carbon atoms, d represents an integer of 1 to 6, e represents an integer of 0 to 6, and f and g each independently represent an integer of 0 or 1, 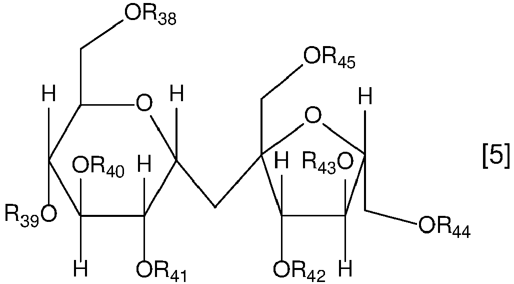 in the formula, R₃₈ to R₄₅ each independently represent a hydrogen atom, a vinyl group, or a vinyl ketone group, and at least two or more groups among R₃₈ to R₄₅ are vinyl groups or vinyl ketone groups, 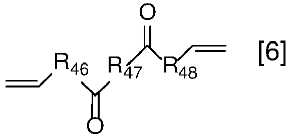 in the formula, R₄₆ to R₄₈ each independently represent an alkylene group having 1 to 6 carbon atoms, 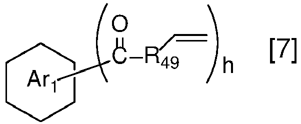 in the formula, a ring Ar₁ represents a benzene ring or a naphthalene ring, R₄₉ represents an alkylene group having 1 to 6 carbon atoms, and h represents an integer of 2 to 4, 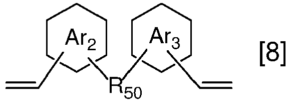 in the formula, a ring Ar₂ and a ring Ar₃ each independently represent a benzene ring or a naphthalene ring, and R₅₀ represents an alkylene group having 1 to 6 carbon atoms, 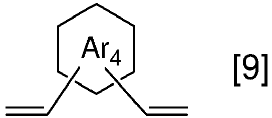 in the formula, a ring Ar₄ represents a benzene ring or a naphthalene ring, 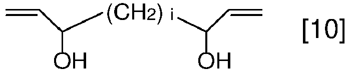 in the formula, i represents an integer of 0 to 6, 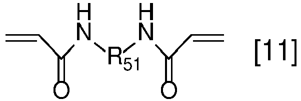 in the formula, R₅₁ represents an alkylene group having 1 to 6 carbon atoms, 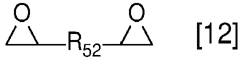 in the formula, R₅₂ represents an alkylene group having 1 to 6 carbon atoms that has a substituent or is unsubstituted, an arylene group having 6 to 10 carbon atoms that has a substituent or is unsubstituted, a group represented by the following general formula [12-1] 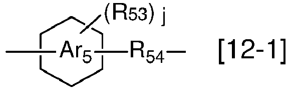 in the formula, R₅₃ represents an alkyl group having 1 to 6 carbon atoms, R₅₄ represents an alkylene group having 1 to 6 carbon atoms, a ring Ar₅ represents a benzene ring or a naphthalene ring, and j represents an integer of 0 to 4, or a group represented by the following general formula [12-2] 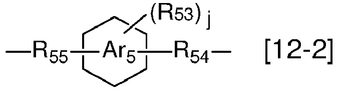 in the formula, R₅₅ represents an alkylene group having 1 to 6 carbon atoms, and R₅₃, R₅₄, a ring Ar₅, and j are the same as R₅₃, R₅₄, the ring Ar₅, and j described above, R₅₆-N=C=N-R₅₇ [13] in the formula, R₅₆ and R₅₇ each independently represent an alkyl group having 1 to 6 carbon atoms that has a substituent or is unsubstituted, an aryl group having 6 to 10 carbon atoms that has a substituent or is unsubstituted, or a group represented by the following general formula [13-1] 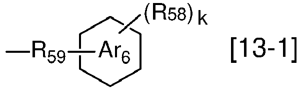 in the formula, R₅₈ represents an alkyl group having 1 to 6 carbon atoms, R₅₉ represents an alkylene group having 1 to 6 carbon atoms, a ring Ar₆ represents a benzene ring or a naphthalene ring, and k represents an integer of 0 to 5, 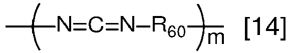 in the formula, R₆₀ represents an alkylene group having 1 to 6 carbon atoms that has a substituent or is unsubstituted, an arylene group having 6 to 10 carbon atoms that has a substituent or is unsubstituted, a group represented by the following general formula [14-1] or [14-2] 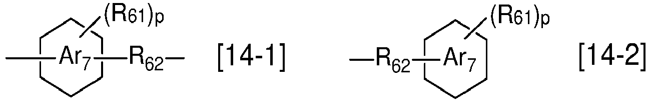 in the formulae, R₆₁ represents an alkyl group having 1 to 6 carbon atoms, R₆₂ represents an alkylene group having 1 to 6 carbon atoms, a ring Ar₇ represents a benzene ring or a naphthalene ring, and p represents an integer of 0 to 4, or a group represented by the following general formula [14-3] 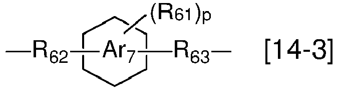 in the formula, R₆₃ represents an alkylene group having 1 to 6 carbon atoms, and R₆₁, R₆₂, a ring Ar₇, and p are the same as R₆₁, R₆₂, the ring Ar₇, and p described above, and m represents an integer of 10 to 10,000.

4. A slurry composition for lithium batteries, comprising:
1) a carbon-containing active material;
2) a conductive assistant; and
3) a binder agent composition comprising:
a copolymer containing a monomer unit derived from acrylic acid and one or two kinds of monomer units derived from a compound represented by the following general formula (I) or general formula (II) as constituent components;
a bivalent to decavalent alcohol; and
water; 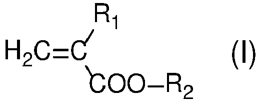
in the formula, R₁ represents a hydrogen atom or a methyl group, in a case where R₂ is a hydrogen atom, R₁ represents a methyl group, R₂ represents a hydrogen atom; an alkyl group having 1 to 20 carbon atoms; an alkyl group having 1 to 20 carbon atoms substituted with a fluorine atom or a hydroxy group; an aryl group having 6 to 10 carbon atoms; an arylalkyl group having 7 to 13 carbon atoms; an alkoxyalkyl group having 2 to 9 carbon atoms; an alkoxyalkoxyalkyl group having 3 to 9 carbon atoms;
an aryloxyalkyl group having 7 to 13 carbon atoms; a morpholinoalkyl group having 5 to 7 carbon atoms; a trialkylsilyl group having 3 to 9 carbon atoms; an alicyclic hydrocarbon group having 6 to 12 carbon atoms that has or does not have an oxygen atom; a dialkylaminoalkyl group having 3 to 9 carbon atoms; a hexahydrophthalimide-N-alkyl group having 9 to 14 carbon atoms; a group represented by the following general formula (IV) 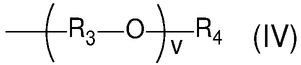
in the formula, R₃ represents an alkylene group having 1 to 6 carbon atoms that has a hydroxy group as a substituent or is unsubstituted, R₄ represents a hydrogen atom, an alkyl group having 1 to 6 carbon atoms, or a phenyl group, and v represents an integer of 2 to 20;
or a group represented by the following general formula (V) 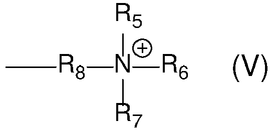
in the formula, R₅ to R₇ each independently represent an alkyl group having 1 to 3 carbon atoms, and R₈ represents an alkylene group having 1 to 3 carbon atoms, 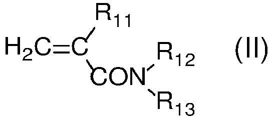
in the formula, R₁₁ represents a hydrogen atom or a methyl group, R₁₂ represents a hydrogen atom or an alkyl group having 1 to 6 carbon atoms, R₁₃ represents a hydrogen atom, an alkyl group having 1 to 6 carbon atoms, a dialkylaminoalkyl group having 3 to 9 carbon atoms, or a hydroxyalkyl group having 1 to 6 carbon atoms.

5. The slurry composition according to claim 4,
wherein the bivalent to decavalent alcohol is a compound represented by the following general formula (B1); 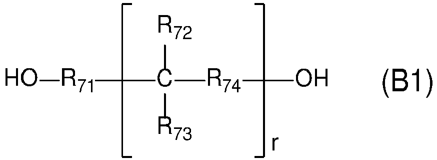 in the formula, R₇₁ represents an alkylene group having 1 to 6 carbon atoms, R₇₂ represents a hydroxy group or a hydroxyalkyl group having 1 to 6 carbon atoms, R₇₃ represents a hydrogen atom, an alkyl group having 1 to 6 carbon atoms, or a hydroxyalkyl group having 1 to 6 carbon atoms, R₇₄ represents an alkylene group having 1 to 6 carbon atoms that may have -O- in a chain, r represents an integer of 0 to 4, and a plurality of R₇₂'s, a plurality of R₇₃'s, and a plurality of R₇₄'s may be the same as or different from each other respectively.

6. The slurry composition according to claim 4,
wherein the copolymer is crosslinked by a crosslinking agent selected from compounds described in the following general formulae [1] to [13] and a polymer described in the following general formula [14]; 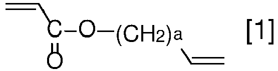 in the formula, a represents an integer of 1 to 6, 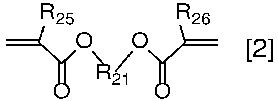 in the formula, R₂₅ and R₂₆ each independently represent a hydrogen atom or a methyl group, and R₂₁ represents an alkylene group having 1 to 20 carbon atoms, a group represented by the following general formula [2-1] 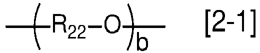 in the formula, R₂₂ represents an alkylene group having 1 to 6 carbon atoms, and b represents an integer of 1 to 6,
or a group represented by the following general formula [2-2] 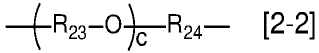 in the formula, R₂₃ and R₂₄ each independently represent an alkylene group having 1 to 6 carbon atoms, and c represents an integer of 1 to 22, 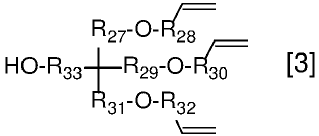 in the formula, R₂₇ to R₃₃ each independently represent an alkylene group having 1 to 3 carbon atoms, 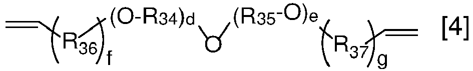 in the formula, R₃₄ to R₃₇ each independently represent an alkylene group having 1 to 6 carbon atoms, d represents an integer of 1 to 6, e represents an integer of 0 to 6, and f and g each independently represent an integer of 0 or 1, 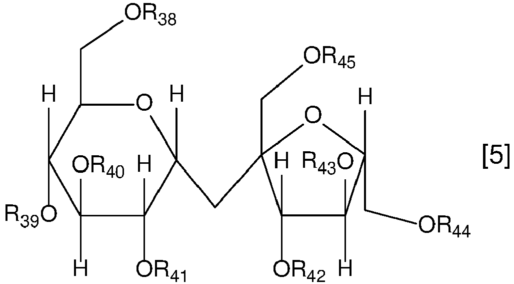 in the formula, R₃₈ to R₄₅ each independently represent a hydrogen atom, a vinyl group, or a vinyl ketone group, and at least two or more groups among R₃₈ to R₄₅ are vinyl groups or vinyl ketone groups, 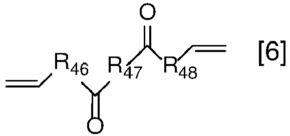 in the formula, R₄₆ to R₄₈ each independently represent an alkylene group having 1 to 6 carbon atoms, 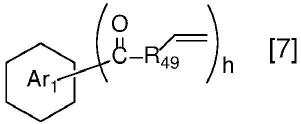 in the formula, a ring Ar₁ represents a benzene ring or a naphthalene ring, R₄₉ represents an alkylene group having 1 to 6 carbon atoms, and h represents an integer of 2 to 4, 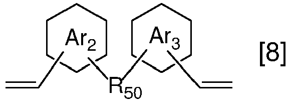 in the formula, a ring Ar₂ and a ring Ar₃ each independently represent a benzene ring or a naphthalene ring, and R₅₀ represents an alkylene group having 1 to 6 carbon atoms, 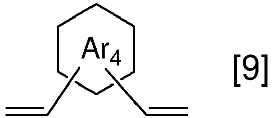 in the formula, a ring Ar₄ represents a benzene ring or a naphthalene ring, 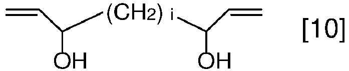 in the formula, i represents an integer of 0 to 6, 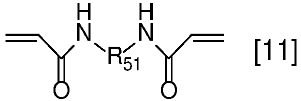 in the formula, R₅₁ represents an alkylene group having 1 to 6 carbon atoms, 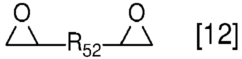 in the formula, R₅₂ represents an alkylene group having 1 to 6 carbon atoms that has a substituent or is unsubstituted, an arylene group having 6 to 10 carbon atoms that has a substituent or is unsubstituted, a group represented by the following general formula [12-1] 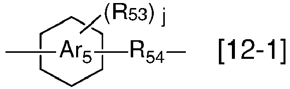 in the formula, R₅₃ represents an alkyl group having 1 to 6 carbon atoms, R₅₄ represents an alkylene group having 1 to 6 carbon atoms, a ring Ar₅ represents a benzene ring or a naphthalene ring, and j represents an integer of 0 to 4,
or a group represented by the following general formula [12-2] 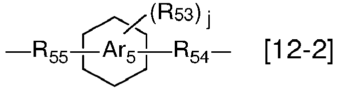 in the formula, R₅₅ represents an alkylene group having 1 to 6 carbon atoms, and R₅₃, R₅₄, a ring Ar₅, and j are the same as R₅₃, R₅₄, the ring Ar₅, and j described above,
R₅₆-N=C=N-R₅₇ [13]
in the formula, R₅₆ and R₅₇ each independently represent an alkyl group having 1 to 6 carbon atoms that has a substituent or is unsubstituted, an aryl group having 6 to 10 carbon atoms that has a substituent or is unsubstituted, or a group represented by the following general formula [13-1] 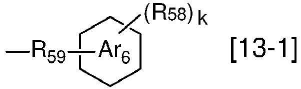 in the formula, R₅₈ represents an alkyl group having 1 to 6 carbon atoms, R₅₉ represents an alkylene group having 1 to 6 carbon atoms, a ring Ar₆ represents a benzene ring or a naphthalene ring, and k represents an integer of 0 to 5, 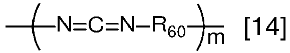 in the formula, R₆₀ represents an alkylene group having 1 to 6 carbon atoms that has a substituent or is unsubstituted, an arylene group having 6 to 10 carbon atoms that has a substituent or is unsubstituted, a group represented by the following general formula [14-1] or [14-2] 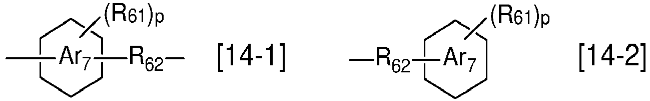 in the formulae, R₆₁ represents an alkyl group having 1 to 6 carbon atoms, R₆₂ represents an alkylene group having 1 to 6 carbon atoms, a ring Ar₇ represents a benzene ring or a naphthalene ring, and p represents an integer of 0 to 4,
or a group represented by the following general formula [14-3] 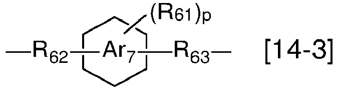 in the formula, R₆₃ represents an alkylene group having 1 to 6 carbon atoms, and R₆₁, R₆₂, a ring Ar₇, and p are the same as R₆₁, R₆₂, the ring Ar₇, and p described above, and m represents an integer of 10 to 10,000.

7. The slurry composition according to claim 4,
wherein the carbon-containing active material contains at least one kind of material among carbon, silicon with carbon-coated surface, a silicon oxide with carbon-coated surface, and a metal-bonded silicon with carbon-coated surface.

8. Use of the slurry composition according to claim 4 for preparing a negative electrode.

9. An electrode for lithium batteries, comprising:
1) a carbon-containing active material;
2) a conductive assistant;
3) a binder agent derived from the binder agent composition as described in claim 4; and
4) a current collector.

10. The electrode according to claim 9,
wherein the carbon-containing active material contains at least one kind of material among carbon, silicon with carbon-coated surface, a silicon oxide with carbon-coated surface, and a metal-bonded silicon with carbon-coated surface.

11. The electrode according to claim 9, wherein the electrode is a negative electrode.

12. A method for preparing an electrode for lithium batteries, comprising:
coating a current collector with the slurry composition according to claim 4; and
drying the slurry composition after the coating.

## Patentansprüche

1. Verwendung einer Bindemittelzusammensetzung für Lithiumbatterien, wobei die Bindemittelzusammensetzung umfasst:
ein Copolymer, das eine von Acrylsäure abgeleitete Monomereinheit und eine oder zwei Arten von Monomereinheiten, die von einer durch die folgende allgemeine Formel (I) oder allgemeine Formel (II) dargestellten Verbindung abgeleitet sind, als konstituierende Komponenten enthält;
einen zweiwertigen bis zehnwertigen Alkohol; und
Wasser; 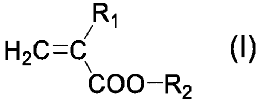
in der Formel bedeutet R₁ ein Wasserstoffatom oder eine Methylgruppe, in dem Fall, in dem R₂ ein Wasserstoffatom ist, bedeutet R₁ eine Methylgruppe, R₂ bedeutet ein Wasserstoffatom; eine Alkylgruppe mit 1 bis 20 Kohlenstoffatomen; eine Alkylgruppe mit 1 bis 20 Kohlenstoffatomen, die mit einem Fluoratom oder einer Hydroxygruppe substituiert ist; eine Arylgruppe mit 6 bis 10 Kohlenstoffatomen; eine Arylalkylgruppe mit 7 bis 13 Kohlenstoffatomen; eine Alkoxyalkylgruppe mit 2 bis 9 Kohlenstoffatomen; eine Alkoxyalkoxyalkylgruppe mit 3 bis 9 Kohlenstoffatomen; eine Aryloxyalkylgruppe mit 7 bis 13 Kohlenstoffatomen; eine Morpholinoalkylgruppe mit 5 bis 7 Kohlenstoffatomen;
eine Trialkylsilylgruppe mit 3 bis 9 Kohlenstoffatomen; eine alicyclische Kohlenwasserstoffgruppe mit 6 bis 12 Kohlenstoffatomen, die ein Sauerstoffatom hat oder
nicht hat; eine Dialkylaminoalkylgruppe mit 3 bis 9 Kohlenstoffatomen; eine Hexahydrophthalimid-N-alkylgruppe mit 9 bis 14 Kohlenstoffatomen; eine Gruppe der folgenden allgemeinen Formel (IV) 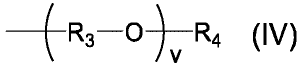
in der Formel bedeutet R₃ eine Alkylengruppe mit 1 bis 6 Kohlenstoffatomen, die eine Hydroxygruppe als Substituent aufweist oder unsubstituiert ist, R₄ bedeutet ein Wasserstoffatom, eine Alkylgruppe mit 1 bis 6 Kohlenstoffatomen oder eine Phenylgruppe, und v bedeutet eine ganze Zahl von 2 bis 20;
oder eine Gruppe, die durch die folgende allgemeine Formel (V) dargestellt wird 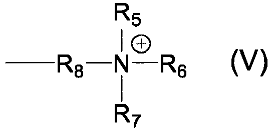
in der Formel bedeuten R₅ bis R₇ jeweils unabhängig voneinander eine Alkylgruppe mit 1 bis 3 Kohlenstoffatomen, und R₈ bedeutet eine Alkylengruppe mit 1 bis 3 Kohlenstoffatomen, 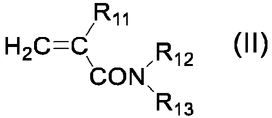
in der Formel steht R₁₁ für ein Wasserstoffatom oder eine Methylgruppe, R₁₂ für ein Wasserstoffatom oder eine Alkylgruppe mit 1 bis 6 Kohlenstoffatomen, R₁₃ für ein Wasserstoffatom, eine Alkylgruppe mit 1 bis 6 Kohlenstoffatomen, eine Dialkylaminoalkylgruppe mit 3 bis 9 Kohlenstoffatomen oder eine Hydroxyalkylgruppe mit 1 bis 6 Kohlenstoffatomen.

2. Verwendung nach Anspruch 1,
worin der zweiwertige bis zehnwertige Alkohol eine Verbindung ist, die durch die folgende allgemeine Formel (B1) dargestellt wird; 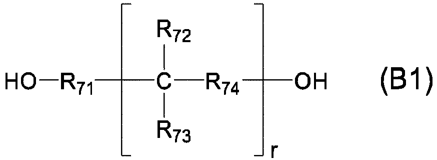 in der Formel bedeutet R₇₁ eine Alkylengruppe mit 1 bis 6 Kohlenstoffatomen, R₇₂ bedeutet eine Hydroxygruppe oder eine Hydroxyalkylgruppe mit 1 bis 6 Kohlenstoffatomen, R₇₃ bedeutet ein Wasserstoffatom, eine Alkylgruppe mit 1 bis 6 Kohlenstoffatomen oder eine Hydroxyalkylgruppe mit 1 bis 6 Kohlenstoffatomen, R₇₄ stellt eine Alkylengruppe mit 1 bis 6 Kohlenstoffatomen dar, die -O- in einer Kette haben kann, r stellt eine ganze Zahl von 0 bis 4 dar, und eine Vielzahl von R₇₂, eine Vielzahl von R₇₃ und eine Vielzahl von R₇₄ können jeweils gleich oder verschieden voneinander sein.

3. Verwendung nach Anspruch 1, worin das Copolymer durch ein Vernetzungsmittel, ausgewählt aus Verbindungen, die in den folgenden allgemeinen Formeln [1] bis [13] beschrieben sind, und einem Polymer, das in der folgenden allgemeinen Formel [14] beschrieben ist, vernetzt ist; 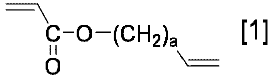 in der Formel steht a für eine ganze Zahl von 1 bis 6, 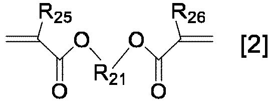 in der Formel bedeuten R₂₅ und R₂₆ jeweils unabhängig voneinander ein Wasserstoffatom oder eine Methylgruppe, und R₂₁ bedeutet eine Alkylengruppe mit 1 bis 20 Kohlenstoffatomen, eine Gruppe, die durch die folgende allgemeine Formel [2-1] dargestellt wird 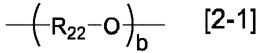 in der Formel stellt R₂₂ eine Alkylengruppe mit 1 bis 6 Kohlenstoffatomen dar, und b ist eine ganze Zahl von 1 bis 6, oder eine Gruppe, die durch die folgende allgemeine Formel [2-2] dargestellt wird 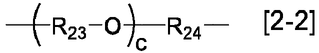 in der Formel bedeuten R₂₃ und R₂₄ jeweils unabhängig voneinander eine Alkylengruppe mit 1 bis 6 Kohlenstoffatomen, und c bedeutet eine ganze Zahl von 1 bis 22, 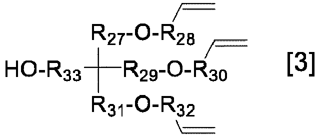 in der Formel bedeuten R₂₇ bis R₃₃ jeweils unabhängig voneinander eine Alkylengruppe mit 1 bis 3 Kohlenstoffatomen, 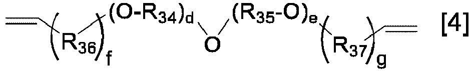 in der Formel bedeuten R₃₄ bis R₃₇ jeweils unabhängig voneinander eine Alkylengruppe mit 1 bis 6 Kohlenstoffatomen, d bedeutet eine ganze Zahl von 1 bis 6, e bedeutet eine ganze Zahl von 0 bis 6 und f und g bedeuten jeweils unabhängig voneinander eine ganze Zahl von 0 oder 1, 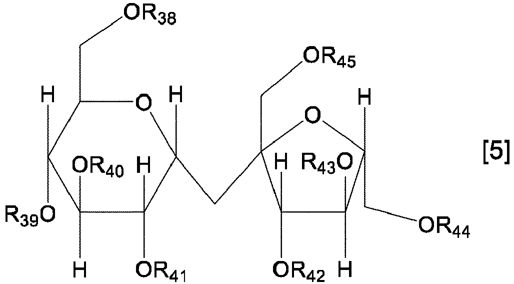 in der Formel bedeuten R₃₈ bis R₄₅ jeweils unabhängig voneinander ein Wasserstoffatom, eine Vinylgruppe oder eine Vinylketongruppe, und mindestens zwei oder mehr Gruppen unter R₃₈ bis R₄₅ sind Vinylgruppen oder Vinylketongruppen, 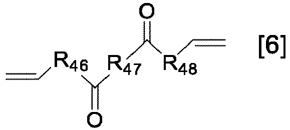 in der Formel bedeuten R₄₆ bis R₄₈ jeweils unabhängig voneinander eine Alkylengruppe mit 1 bis 6 Kohlenstoffatomen, 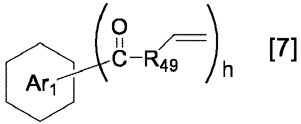 in der Formel stellt ein Ring An einen Benzolring oder einen Naphthalinring dar, R₄₉ stellt eine Alkylengruppe mit 1 bis 6 Kohlenstoffatomen dar, und h stellt eine ganze Zahl von 2 bis 4 dar, 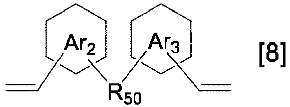 in der Formel bedeuten ein Ring Ar₂ und ein Ring Ar₃ jeweils unabhängig voneinander einen Benzolring oder einen Naphthalinring, und R₅₀ bedeutet eine Alkylengruppe mit 1 bis 6 Kohlenstoffatomen, 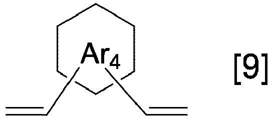 in der Formel steht ein Ring Ar₄ für einen Benzolring oder einen Naphthalinring, 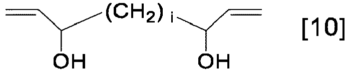 in der Formel steht i für eine ganze Zahl von 0 bis 6, 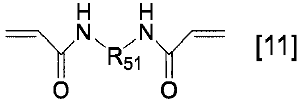 in der Formel steht R₅₁ für eine Alkylengruppe mit 1 bis 6 Kohlenstoffatomen, 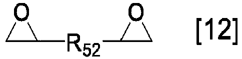 in der Formel bedeutet R₅₂ eine Alkylengruppe mit 1 bis 6 Kohlenstoffatomen, die einen Substituenten aufweist oder unsubstituiert ist, eine Arylengruppe mit 6 bis 10 Kohlenstoffatomen, die einen Substituenten aufweist oder unsubstituiert ist, eine Gruppe, die durch die folgende allgemeine Formel [12-1] dargestellt wird 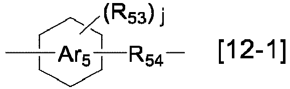 wobei in der Formel R₅₃ eine Alkylgruppe mit 1 bis 6 Kohlenstoffatomen darstellt, R₅₄ eine Alkylengruppe mit 1 bis 6 Kohlenstoffatomen darstellt, ein Ring Ar₅ einen Benzolring oder einen Naphthalinring darstellt und j eine ganze Zahl von 0 bis 4 darstellt, oder eine Gruppe, die durch die folgende allgemeine Formel [12-2] dargestellt wird 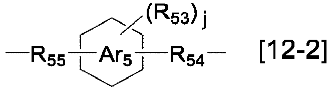 in der Formel stellt R₅₅ eine Alkylengruppe mit 1 bis 6 Kohlenstoffatomen dar, und R₅₃, R₅₄, ein Ring Ar₅ und j sind die gleichen wie R₅₃, R₅₄, der Ring Ar₅ und j oben beschrieben,
R₅₆-N=C=N-R₅₇ [13]
in der Formel bedeuten R₅₆ und R₅₇ jeweils unabhängig voneinander eine Alkylgruppe mit 1 bis 6 Kohlenstoffatomen, die einen Substituenten aufweist oder unsubstituiert ist, eine Arylgruppe mit 6 bis 10 Kohlenstoffatomen, die einen Substituenten aufweist oder unsubstituiert ist, oder eine Gruppe, die durch die folgende allgemeine Formel [13-1] dargestellt wird 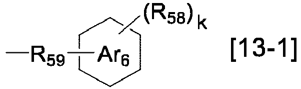 in der Formel bedeutet R₅₈ eine Alkylgruppe mit 1 bis 6 Kohlenstoffatomen, R₅₉ bedeutet eine Alkylengruppe mit 1 bis 6 Kohlenstoffatomen, ein Ring Ar₆ bedeutet einen Benzolring oder einen Naphthalinring, und k bedeutet eine ganze Zahl von 0 bis 5, 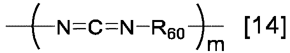 in der Formel bedeutet R₆₀ eine Alkylengruppe mit 1 bis 6 Kohlenstoffatomen, die einen Substituenten aufweist oder unsubstituiert ist, eine Arylengruppe mit 6 bis 10 Kohlenstoffatomen, die einen Substituenten aufweist oder unsubstituiert ist, eine Gruppe, die durch die folgende allgemeine Formel [14-1] oder [14-2] dargestellt wird 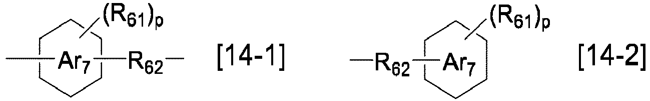 in den Formeln stellt R₆₁ eine Alkylgruppe mit 1 bis 6 Kohlenstoffatomen dar, R₆₂ stellt eine Alkylengruppe mit 1 bis 6 Kohlenstoffatomen dar, ein Ring Ar₇ stellt einen Benzolring oder einen Naphthalinring dar, und p stellt eine ganze Zahl von 0 bis 4 dar, oder eine Gruppe, die durch die folgende allgemeine Formel [14-3] dargestellt wird 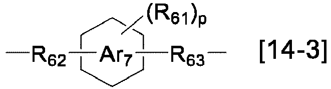 in der Formel stellt R₆₃ eine Alkylengruppe mit 1 bis 6 Kohlenstoffatomen dar, und R₆₁, R₆₂, ein Ring Ar₇ und p sind die gleichen wie R₆₁, R₆₂, der Ring Ar₇ und p wie oben beschrieben,
und m eine ganze Zahl von 10 bis 10.000 darstellt.

4. Aufschlämmungszusammensetzung für Lithiumbatterien, umfassend:
1) ein kohlenstoffhaltiges aktives Material;
2) ein leitfähiges Hilfsmittel; und
3) eine Bindemittelzusammensetzung, umfassend:
ein Copolymer, das eine von Acrylsäure abgeleitete Monomereinheit und eine oder zwei Arten von Monomereinheiten, die von einer durch die folgende allgemeine Formel (I) oder allgemeine Formel (II) dargestellten Verbindung abgeleitet sind, als konstituierende Komponenten enthält:
einen zweiwertigen bis zehnwertigen Alkohol; und
Wasser; 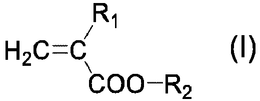
in der Formel bedeutet R₁ ein Wasserstoffatom oder eine Methylgruppe, in dem Fall, in dem R₂ ein Wasserstoffatom ist, bedeutet R₁ eine Methylgruppe, R₂ bedeutet ein Wasserstoffatom; eine Alkylgruppe mit 1 bis 20 Kohlenstoffatomen; eine Alkylgruppe mit 1 bis 20 Kohlenstoffatomen, die mit einem Fluoratom oder einer Hydroxygruppe substituiert ist; eine Arylgruppe mit 6 bis 10 Kohlenstoffatomen; eine Arylalkylgruppe mit 7 bis 13 Kohlenstoffatomen; eine Alkoxyalkylgruppe mit 2 bis 9 Kohlenstoffatomen; eine Alkoxyalkoxyalkylgruppe mit 3 bis 9 Kohlenstoffatomen; eine Aryloxyalkylgruppe mit 7 bis 13 Kohlenstoffatomen; eine Morpholinoalkylgruppe mit 5 bis 7 Kohlenstoffatomen;
eine Trialkylsilylgruppe mit 3 bis 9 Kohlenstoffatomen; eine alicyclische Kohlenwasserstoffgruppe mit 6 bis 12 Kohlenstoffatomen, die ein Sauerstoffatom hat oder
nicht hat; eine Dialkylaminoalkylgruppe mit 3 bis 9 Kohlenstoffatomen; eine Hexahydrophthalimid-N-alkylgruppe mit 9 bis 14 Kohlenstoffatomen; eine Gruppe der folgenden allgemeinen Formel (IV) 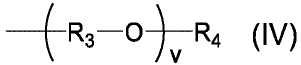
in der Formel bedeutet R₃ eine Alkylengruppe mit 1 bis 6 Kohlenstoffatomen, die eine Hydroxygruppe als Substituenten aufweist oder unsubstituiert ist, R₄ bedeutet ein Wasserstoffatom, eine Alkylgruppe mit 1 bis 6 Kohlenstoffatomen oder eine Phenylgruppe, und v bedeutet eine ganze Zahl von 2 bis 20;
oder eine Gruppe, die durch die folgende allgemeine Formel (V) dargestellt wird 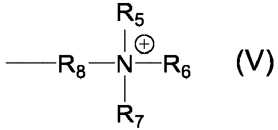
in der Formel bedeuten R₅ bis R₇ jeweils unabhängig voneinander eine Alkylgruppe mit 1 bis 3 Kohlenstoffatomen, und R₈ bedeutet eine Alkylengruppe mit 1 bis 3 Kohlenstoffatomen, 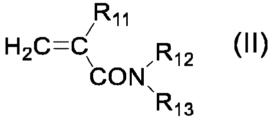
in der Formel steht R₁₁ für ein Wasserstoffatom oder eine Methylgruppe, R₁₂ für ein Wasserstoffatom oder eine Alkylgruppe mit 1 bis 6 Kohlenstoffatomen, R₁₃ für ein Wasserstoffatom, eine Alkylgruppe mit 1 bis 6 Kohlenstoffatomen, eine Dialkylaminoalkylgruppe mit 3 bis 9 Kohlenstoffatomen oder eine Hydroxyalkylgruppe mit 1 bis 6 Kohlenstoffatomen.

5. Die Aufschlämmungszusammensetzung nach Anspruch 4,
wobei der zweiwertige bis zersetzende Alkohol eine Verbindung der folgenden allgemeinen Formel (B1) ist; 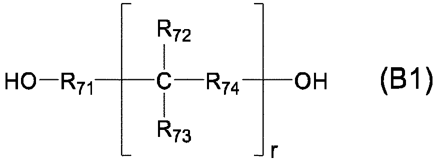 in der Formel bedeutet R₇₁ eine Alkylengruppe mit 1 bis 6 Kohlenstoffatomen, R₇₂ bedeutet eine Hydroxygruppe oder eine Hydroxyalkylgruppe mit 1 bis 6 Kohlenstoffatomen, R₇₃ bedeutet ein Wasserstoffatom, eine Alkylgruppe mit 1 bis 6 Kohlenstoffatomen oder eine Hydroxyalkylgruppe mit 1 bis 6 Kohlenstoffatomen, R₇₄ stellt eine Alkylengruppe mit 1 bis 6 Kohlenstoffatomen dar, die -O- in einer Kette haben kann, r stellt eine ganze Zahl von 0 bis 4 dar, und eine Vielzahl von R₇₂, eine Vielzahl von R₇₃ und eine Vielzahl von R₇₄ können jeweils gleich oder verschieden voneinander sein.

6. Aufschlämmungszusammensetzung nach Anspruch 4,
worin das Copolymer durch ein Vernetzungsmittel, ausgewählt aus Verbindungen, die in den folgenden allgemeinen Formeln [1] bis [13] beschrieben sind, und einem Polymer, das in der folgenden allgemeinen Formel [14] beschrieben ist, vernetzt ist; 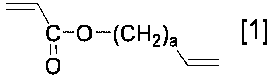 in der Formel steht a für eine ganze Zahl von 1 bis 6, 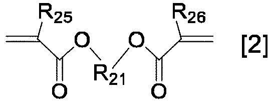 in der Formel bedeuten R₂₅ und R₂₆ jeweils unabhängig voneinander ein Wasserstoffatom oder eine Methylgruppe, und R₂₁ bedeutet eine Alkylengruppe mit 1 bis 20 Kohlenstoffatomen, eine Gruppe, die durch die folgende allgemeine Formel [2-1] dargestellt wird 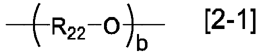 in der Formel stellt R₂₂ eine Alkylengruppe mit 1 bis 6 Kohlenstoffatomen dar, und b ist eine ganze Zahl von 1 bis 6,
oder eine Gruppe, die durch die folgende allgemeine Formel [2-2] dargestellt wird 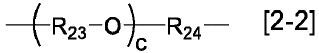 in der Formel bedeuten R₂₃ und R₂₄ jeweils unabhängig voneinander eine Alkylengruppe mit 1 bis 6 Kohlenstoffatomen, und c bedeutet eine ganze Zahl von 1 bis 22, 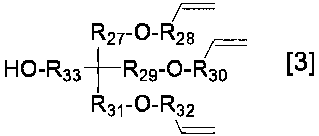 in der Formel bedeuten R₂₇ bis R₃₃ jeweils unabhängig voneinander eine Alkylengruppe mit 1 bis 3 Kohlenstoffatomen, 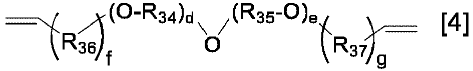 in der Formel bedeuten R₃₄ bis R₃₇ jeweils unabhängig voneinander eine Alkylengruppe mit 1 bis 6 Kohlenstoffatomen, d bedeutet eine ganze Zahl von 1 bis 6, e bedeutet eine ganze Zahl von 0 bis 6 und f und g bedeuten jeweils unabhängig voneinander eine ganze Zahl von 0 oder 1, 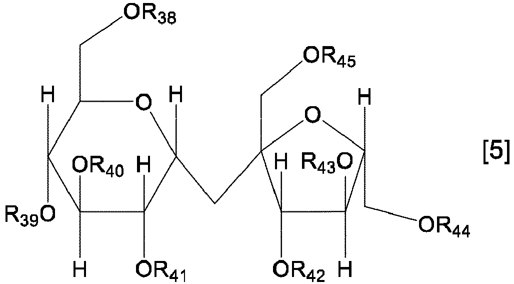 in der Formel bedeuten R₃₈ bis R₄₅ jeweils unabhängig voneinander ein Wasserstoffatom, eine Vinylgruppe oder eine Vinylketongruppe, und mindestens zwei oder mehr Gruppen unter R₃₈ bis R₄₅ sind Vinylgruppen oder Vinylketongruppen, 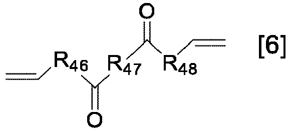 in der Formel bedeuten R₄₆ bis R₄₈ jeweils unabhängig voneinander eine Alkylengruppe mit 1 bis 6 Kohlenstoffatomen, 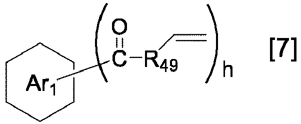 in der Formel stellt ein Ring An einen Benzolring oder einen Naphthalinring dar, R₄₉ stellt eine Alkylengruppe mit 1 bis 6 Kohlenstoffatomen dar, und h stellt eine ganze Zahl von 2 bis 4 dar, 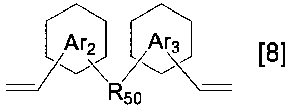 in der Formel bedeuten ein Ring Ar₂ und ein Ring Ar₃ jeweils unabhängig voneinander einen Benzolring oder einen Naphthalinring, und R₅₀ bedeutet eine Alkylengruppe mit 1 bis 6 Kohlenstoffatomen, 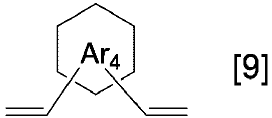 in der Formel steht ein Ring Ar₄ für einen Benzolring oder einen Naphthalinring, 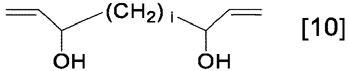 in der Formel steht i für eine ganze Zahl von 0 bis 6, 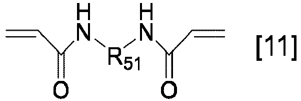 in der Formel steht R₅₁ für eine Alkylengruppe mit 1 bis 6 Kohlenstoffatomen, 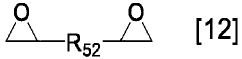 in der Formel bedeutet R₅₂ eine Alkylengruppe mit 1 bis 6 Kohlenstoffatomen, die einen Substituenten aufweist oder unsubstituiert ist, eine Arylengruppe mit 6 bis 10 Kohlenstoffatomen, die einen Substituenten aufweist oder unsubstituiert ist, eine Gruppe, die durch die folgende allgemeine Formel [12-1] dargestellt wird 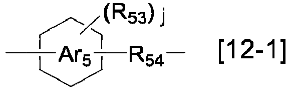 wobei in der Formel R₅₃ eine Alkylgruppe mit 1 bis 6 Kohlenstoffatomen darstellt, R₅₄ eine Alkylengruppe mit 1 bis 6 Kohlenstoffatomen darstellt, ein Ring Ar₅ einen Benzolring oder einen Naphthalinring darstellt und j eine ganze Zahl von 0 bis 4 darstellt,
oder eine Gruppe, die durch die folgende allgemeine Formel [12-2] dargestellt wird 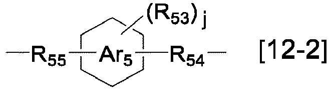 n der Formel stellt R₅₅ eine Alkylengruppe mit 1 bis 6 Kohlenstoffatomen dar, und R₅₃, R₅₄, ein Ring Ar₅ und j sind die gleichen wie R₅₃, R₅₄, der Ring Ar₅ und j oben beschrieben,
R₅₆-N=C=N-R₅₇ [13]
in der Formel bedeuten R₅₆ und R₅₇ jeweils unabhängig voneinander eine Alkylgruppe mit 1 bis 6 Kohlenstoffatomen, die einen Substituenten aufweist oder unsubstituiert ist, eine Arylgruppe mit 6 bis 10 Kohlenstoffatomen, die einen Substituenten aufweist oder unsubstituiert ist, oder eine Gruppe, die durch die folgende allgemeine Formel [13-1] dargestellt wird 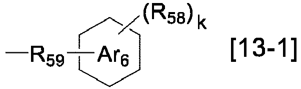 in der Formel bedeutet R₅₈ eine Alkylgruppe mit 1 bis 6 Kohlenstoffatomen, R₅₉ bedeutet eine Alkylengruppe mit 1 bis 6 Kohlenstoffatomen, ein Ring Ar₆ bedeutet einen Benzolring oder einen Naphthalinring, und k bedeutet eine ganze Zahl von 0 bis 5, 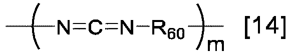 in der Formel bedeutet R₆₀ eine Alkylengruppe mit 1 bis 6 Kohlenstoffatomen, die einen Substituenten aufweist oder unsubstituiert ist, eine Arylengruppe mit 6 bis 10 Kohlenstoffatomen, die einen Substituenten aufweist oder unsubstituiert ist, eine Gruppe, die durch die folgende allgemeine Formel [14-1] oder [14-2] dargestellt wird 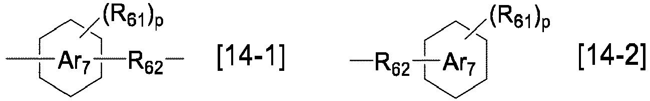 in den Formeln stellt R₆₁ eine Alkylgruppe mit 1 bis 6 Kohlenstoffatomen dar, R₆₂ stellt eine Alkylengruppe mit 1 bis 6 Kohlenstoffatomen dar, ein Ring Ar₇ stellt einen Benzolring oder einen Naphthalinring dar, und p stellt eine ganze Zahl von 0 bis 4 dar, oder eine Gruppe, die durch die folgende allgemeine Formel [14-3] dargestellt wird 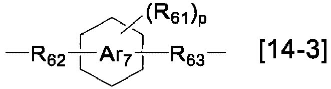 in der Formel stellt R₆₃ eine Alkylengruppe mit 1 bis 6 Kohlenstoffatomen dar, und R₆₁, R₆₂, ein Ring Ar₇ und p sind die gleichen wie R₆₁, R₆₂, der Ring Ar₇ und p wie oben beschrieben,
und m eine ganze Zahl von 10 bis 10.000 darstellt.

7. Die Aufschlämmungszusammensetzung nach Anspruch 4,
wobei das kohlenstoffhaltige aktive Material mindestens eine Art von Material unter Kohlenstoff, Silizium mit kohlenstoffbeschichteter Oberfläche, einem Siliziumoxid mit kohlenstoffbeschichteter Oberfläche und einem metallgebundenen Silizium mit kohlenstoffbeschichteter Oberfläche enthält.

8. Verwendung der Aufschlämmungszusammensetzung nach Anspruch 4 zur Herstellung einer negativen Elektrode.

9. Eine Elektrode für Lithiumbatterien, die Folgendes umfasst:
1) ein kohlenstoffhaltiges aktives Material;
2) ein leitfähiges Hilfsmittel;
3) ein Bindemittel, das von der in Anspruch 4 beschriebenen Bindemittelzusammensetzung abgeleitet ist; und
4) einen Stromkollektor.

10. Die Elektrode nach Anspruch 9,
wobei das kohlenstoffhaltige aktive Material mindestens eine Art von Material unter Kohlenstoff, Silizium mit kohlenstoffbeschichteter Oberfläche, Siliziumoxid mit kohlenstoffbeschichteter Oberfläche und metallgebundenem Silizium mit kohlenstoffbeschichteter Oberfläche enthält.

11. Elektrode nach Anspruch 9, wobei die Elektrode eine negative Elektrode ist.

12. Verfahren zur Herstellung einer Elektrode für Lithiumbatterien, umfassend:
Beschichten eines Stromkollektors mit der Aufschlämmungszusammensetzung nach Anspruch 4; und
Trocknen der Aufschlämmungszusammensetzung nach dem Beschichten.

## Revendications

1. Utilisation d'une composition d'agent liant pour des batteries au lithium, dans laquelle la composition d'agent liant comprend :
un copolymère contenant une unité monomère dérivée de l'acide acrylique et un ou deux types d'unités monomères dérivées d'un composé représenté par la formule générale (I) ou
la formule générale (II) suivante comme composants constitutifs ;
un alcool bivalent à décavalent ; et
de l'eau ; 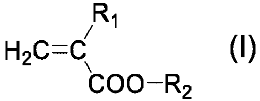
dans la formule, R₁ représente un atome d'hydrogène ou un groupe méthyle, dans le cas où R₂ est un atome d'hydrogène, R₁ représente un groupe méthyle, R₂ représente un atome d'hydrogène ; un groupe alkyle ayant 1 à 20 atomes de carbone ; un groupe alkyle ayant 1 à 20 atomes de carbone substitué par un atome de fluor ou un groupe hydroxy ; un groupe aryle ayant 6 à 10 atomes de carbone ; un groupe arylalkyle ayant 7 à 13 atomes de carbone ; un groupe alcoxyalkyle ayant 2 à 9 atomes de carbone ; un groupe alcoxyalcoxyalkyle ayant 3 à 9 atomes de carbone ; un groupe aryloxyalkyle ayant 7 à 13 atomes de carbone ; un groupe morpholinoalkyle ayant 5 à 7 atomes de carbone ; un groupe trialkylsilyle ayant 3 à 9 atomes de carbone ; un groupe hydrocarbure alicyclique ayant 6 à 12 atomes de carbone qui a ou n'a pas d'atome d'oxygène ; un groupe dialkylaminoalkyle ayant 3 à 9 atomes de carbone ; un groupe hexahydrophtalimide-N-alkyle ayant 9 à 14 atomes de carbone ; un groupe représenté par la formule générale (IV) suivante 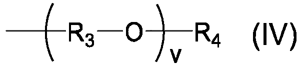
dans la formule, R₃ représente un groupe alkylène ayant 1 à 6 atomes de carbone qui a un groupe hydroxy comme substituant ou qui est non substitué, R₄ représente un atome d'hydrogène, un groupe alkyle ayant 1 à 6 atomes de carbone, ou un groupe phényle, et v représente un nombre entier de 2 à 20 ;
ou un groupe représenté par la formule générale suivante (V) 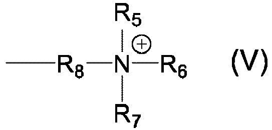
dans la formule, R₅ à R₇ représentent chacun indépendamment un groupe alkyle ayant 1 à 3 atomes de carbone, et R₈ représente un groupe alkylène ayant 1 à 3 atomes de carbone, 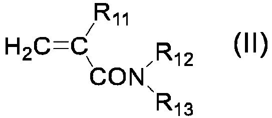
dans la formule, R₁₁ représente un atome d'hydrogène ou un groupe méthyle, R₁₂ représente un atome d'hydrogène ou un groupe alkyle ayant 1 à 6 atomes de carbone, R₁₃ représente un atome d'hydrogène, un groupe alkyle ayant 1 à 6 atomes de carbone, un groupe dialkylaminoalkyle ayant 3 à 9 atomes de carbone, ou un groupe hydroxyalkyle ayant 1 à 6 atomes de carbone.

2. Utilisation selon la revendication 1,
dans lequel l'alcool bivalent à décavalent est un composé représenté par la formule générale suivante (B1); 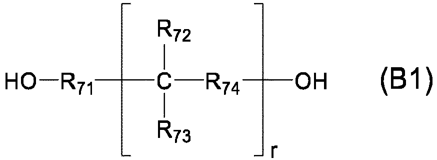 dans la formule, R₇₁ représente un groupe alkylène ayant 1 à 6 atomes de carbone, R₇₂ représente un groupe hydroxy ou un groupe hydroxyalkyle ayant 1 à 6 atomes de carbone, R₇₃ représente un atome d'hydrogène, un groupe alkyle ayant 1 à 6 atomes de carbone, ou un groupe hydroxyalkyle ayant 1 à 6 atomes de carbone, R₇₄ représente un groupe alkylène ayant 1 à 6 atomes de carbone qui peut avoir -O- dans une chaîne, r représente un nombre entier de 0 à 4, et une pluralité de R₇₂, une pluralité de R₇₃, et une pluralité de R₇₄ peuvent être identiques ou différents les uns des autres respectivement.

3. Utilisation selon la revendication 1,
dans lequel le copolymère est réticulé par un agent de réticulation choisi parmi les composés décrits dans les formules générales [1] à [13] suivantes et un polymère décrit dans la formule générale [14] suivante ; 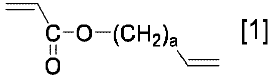 dans la formule, a représente un nombre entier de 1 à 6, 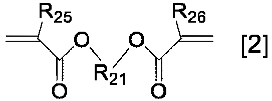 dans la formule, R₂₅ et R₂₆ représentent chacun indépendamment un atome d'hydrogène ou un groupe méthyle, et R₂₁ représente un groupe alkylène ayant 1 à 20 atomes de carbone, un groupe représenté par la formule générale [2-1] suivante 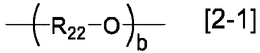 dans la formule, R₂₂ représente un groupe alkylène ayant 1 à 6 atomes de carbone, et b représente un nombre entier de 1 à 6,
ou un groupe représenté par la formule générale [2-2] suivante 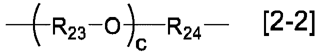 dans la formule, R₂₃ et R₂₄ représentent chacun indépendamment un groupe alkylène ayant 1 à 6 atomes de carbone, et c représente un nombre entier de 1 à 22, 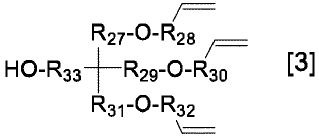 dans la formule, R₂₇ à R₃₃ représentent chacun indépendamment un groupe alkylène ayant 1 à 3 atomes de carbone, 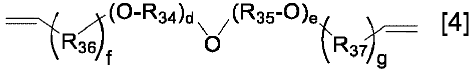 dans la formule, R₃₄ à R₃₇ représentent chacun indépendamment un groupe alkylène ayant 1 à 6 atomes de carbone, d représente un nombre entier de 1 à 6, e représente un nombre entier de 0 à 6, et f et g représentent chacun indépendamment un nombre entier de 0 ou 1, 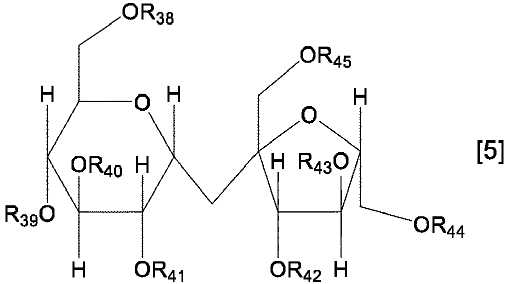 dans la formule, R₃₈ à R₄₅ représentent chacun indépendamment un atome d'hydrogène, un groupe vinyle, ou un groupe vinylcétone, et au moins deux groupes ou plus parmi R₃₈ à R₄₅ sont des groupes vinyle ou des groupes vinylcétone, 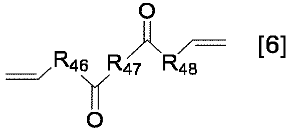 dans la formule, R₄₆ à R₄₈ représentent chacun indépendamment un groupe alkylène ayant 1 à 6 atomes de carbone, 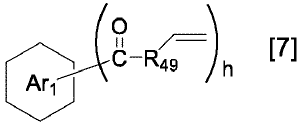 dans la formule, un cycle Ar₁ représente un cycle benzénique ou un cycle naphtalénique, R₄₉ représente un groupe alkylène ayant 1 à 6 atomes de carbone, et h représente un nombre entier de 2 à 4, 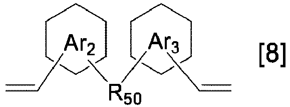 dans la formule, un cycle Ar₂ et un cycle Ar₃ représentent chacun indépendamment un cycle benzène ou un cycle naphtalène, et R₅₀ représente un groupe alkylène ayant 1 à 6 atomes de carbone, 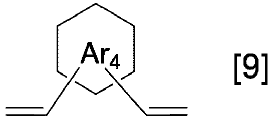 dans la formule, un cycle Ar₄ représente un cycle benzénique ou un cycle naphtalénique, 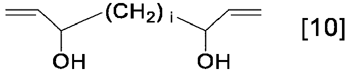 dans la formule, i représente un nombre entier de 0 à 6, 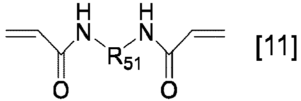 dans la formule, R₅₁ représente un groupe alkylène ayant 1 à 6 atomes de carbone, 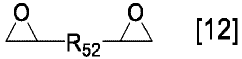 dans la formule, R₅₂ représente un groupe alkylène ayant 1 à 6 atomes de carbone qui a un substituant ou est non substitué, un groupe arylène ayant 6 à 10 atomes de carbone qui a un substituant ou est non substitué, un groupe représenté par la formule générale [12-1] suivante 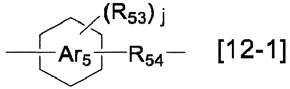 dans la formule, R₅₃ représente un groupe alkyle ayant 1 à 6 atomes de carbone, R₅₄ représente un groupe alkylène ayant 1 à 6 atomes de carbone, un cycle Ar₅ représente un cycle benzénique ou un cycle naphtalénique, et j représente un nombre entier de 0 à 4, ou un groupe représenté par la formule générale [12-2] suivante 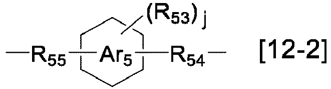 dans la formule, R₅₅ représente un groupe alkylène ayant 1 à 6 atomes de carbone, et R₅₃, R₅₄, un cycle Ar₅, et j sont les mêmes que R₅₃, R₅₄, le cycle Ar₅, et j décrits ci-dessus,
R₅₆-N=C=N-R₅₇ [13]
dans la formule, R₅₆ et R₅₇ représentent chacun indépendamment un groupe alkyle ayant 1 à 6 atomes de carbone qui a un substituant ou est non substitué, un groupe aryle ayant 6 à 10 atomes de carbone qui a un substituant ou est non substitué, ou un groupe représenté par la formule générale [13-1] suivante 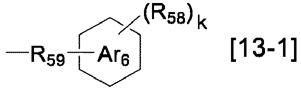 dans la formule, R₅₈ représente un groupe alkyle ayant 1 à 6 atomes de carbone, R₅₉ représente un groupe alkylène ayant 1 à 6 atomes de carbone, un cycle Ar₆ représente un cycle benzène ou un cycle naphtalène, et k représente un nombre entier de 0 à 5, 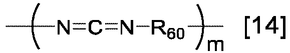 dans la formule, R₆₀ représente un groupe alkylène ayant 1 à 6 atomes de carbone qui a un substituant ou est non substitué, un groupe arylène ayant 6 à 10 atomes de carbone qui a un substituant ou est non substitué, un groupe représenté par la formule générale [14-1] ou [14-2] suivante 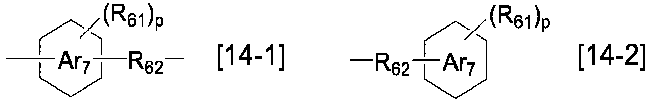 dans les formules, R₆₁ représente un groupe alkyle ayant 1 à 6 atomes de carbone, R₆₂ représente un groupe alkylène ayant 1 à 6 atomes de carbone, un cycle Ar₇ représente un cycle benzène ou un cycle naphtalène, et p représente un entier de 0 à 4,
ou un groupe représenté par la formule générale [14-3] suivante 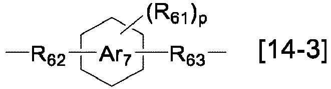 dans la formule, R₆₃ représente un groupe alkylène ayant 1 à 6 atomes de carbone, et R₆₁, R₆₂, un cycle Ar₇, et p sont les mêmes que R₆₁, R₆₂, le cycle Ar₇, et p décrits ci-dessus, et m représente un nombre entier de 10 à 10 000.

4. Une composition de boue pour les batteries au lithium, comprenant :
1) un matériau actif contenant du carbone ;
2) un assistant conducteur ; et
3) une composition d'agent liant comprenant
un copolymère contenant une unité monomère dérivée de l'acide acrylique et un ou deux types d'unités monomères dérivées d'un composé représenté par la formule générale (I) ou la formule générale (II) suivante comme composants constitutifs ; un alcool bivalent à décavalent ; et de l'eau ; 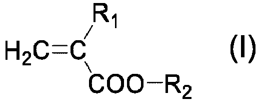 dans la formule, R₁ représente un atome d'hydrogène ou un groupe méthyle, dans le cas où R₂ est un atome d'hydrogène, R₁ représente un groupe méthyle, R₂ représente un atome d'hydrogène ; un groupe alkyle ayant 1 à 20 atomes de carbone ; un groupe alkyle ayant 1 à 20 atomes de carbone substitué par un atome de fluor ou un groupe hydroxy ; un groupe aryle ayant 6 à 10 atomes de carbone ; un groupe arylalkyle ayant 7 à 13 atomes de carbone ; un groupe alcoxyalkyle ayant 2 à 9 atomes de carbone ; un groupe alcoxyalcoxyalkyle ayant 3 à 9 atomes de carbone ; un groupe aryloxyalkyle ayant 7 à 13 atomes de carbone ; un groupe morpholinoalkyle ayant 5 à 7 atomes de carbone ; un groupe trialkylsilyle ayant 3 à 9 atomes de carbone ; un groupe hydrocarbure alicyclique ayant 6 à 12 atomes de carbone qui a ou n'a pas d'atome d'oxygène ; un groupe dialkylaminoalkyle ayant 3 à 9 atomes de carbone ; un groupe hexahydrophtalimide-N-alkyle ayant 9 à 14 atomes de carbone ; un groupe représenté par la formule générale (IV) suivante 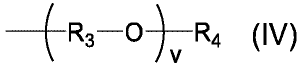 dans la formule, R₃ représente un groupe alkylène ayant 1 à 6 atomes de carbone qui a un groupe hydroxy comme substituant ou qui est non substitué, R₄ représente un atome d'hydrogène, un groupe alkyle ayant 1 à 6 atomes de carbone, ou un groupe phényle, et v représente un nombre entier de 2 à 20 ;
ou un groupe représenté par la formule générale suivante (V) 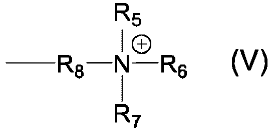 dans la formule, R₅ à R₇ représentent chacun indépendamment un groupe alkyle ayant 1 à 3 atomes de carbone, et R₈ représente un groupe alkylène ayant 1 à 3 atomes de carbone, 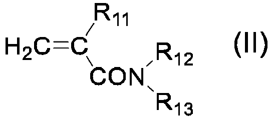 dans la formule, R₁₁ représente un atome d'hydrogène ou un groupe méthyle, R₁₂ représente un atome d'hydrogène ou un groupe alkyle ayant 1 à 6 atomes de carbone, R₁₃ représente un atome d'hydrogène, un groupe alkyle ayant 1 à 6 atomes de carbone, un groupe dialkylaminoalkyle ayant 3 à 9 atomes de carbone, ou un groupe hydroxyalkyle ayant 1 à 6 atomes de carbone.

5. Composition de boue selon la revendication 4,
dans laquelle l'alcool bivalent à décavalent est un composé représenté par la formule générale suivante (B1); 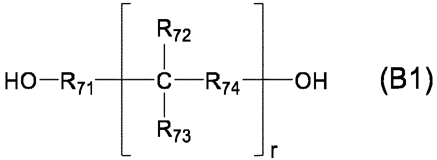 dans la formule, R₇₁ représente un groupe alkylène ayant 1 à 6 atomes de carbone, R₇₂ représente un groupe hydroxy ou un groupe hydroxyalkyle ayant 1 à 6 atomes de carbone, R₇₃ représente un atome d'hydrogène, un groupe alkyle ayant 1 à 6 atomes de carbone, ou un groupe hydroxyalkyle ayant 1 à 6 atomes de carbone, R₇₄ représente un groupe alkylène ayant 1 à 6 atomes de carbone qui peut avoir -O- dans une chaîne, r représente un nombre entier de 0 à 4, et une pluralité de R₇₂, une pluralité de R₇₃, et une pluralité de R₇₄ peuvent être identiques ou différents les uns des autres respectivement.

6. Composition de boue selon la revendication 4,
dans laquelle le copolymère est réticulé par un agent de réticulation choisi parmi les composés décrits dans les formules générales [1] à [13] suivantes et un polymère décrit dans la formule générale [14] suivante ; 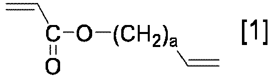 dans la formule, a représente un nombre entier de 1 à 6, 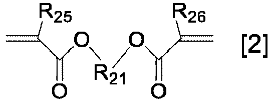 dans la formule, R₂₅ et R₂₆ représentent chacun indépendamment un atome d'hydrogène ou un groupe méthyle, et R₂₁ représente un groupe alkylène ayant 1 à 20 atomes de carbone, un groupe représenté par la formule générale [2-1] suivante 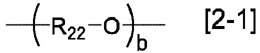 dans la formule, R₂₂ représente un groupe alkylène ayant 1 à 6 atomes de carbone, et b représente un nombre entier de 1 à 6,
ou un groupe représenté par la formule générale [2-2] suivante 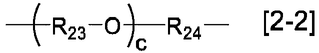 dans la formule, R₂₃ et R₂₄ représentent chacun indépendamment un groupe alkylène ayant 1 à 6 atomes de carbone, et c représente un nombre entier de 1 à 22, 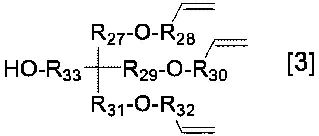 dans la formule, R₂₇ à R₃₃ représentent chacun indépendamment un groupe alkylène ayant 1 à 3 atomes de carbone, 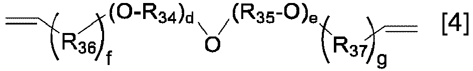 dans la formule, R₃₄ à R₃₇ représentent chacun indépendamment un groupe alkylène ayant 1 à 6 atomes de carbone, d représente un nombre entier de 1 à 6, e représente un nombre entier de 0 à 6, et f et g représentent chacun indépendamment un nombre entier de 0 ou 1, 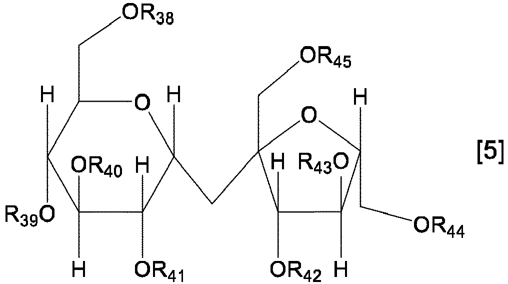 dans la formule, R₃₈ à R₄₅ représentent chacun indépendamment un atome d'hydrogène, un groupe vinyle, ou un groupe vinylcétone, et au moins deux groupes ou plus parmi R₃₈ à R₄₅ sont des groupes vinyle ou des groupes vinylcétone, 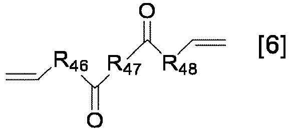 dans la formule, R₄₆ à R₄₈ représentent chacun indépendamment un groupe alkylène ayant 1 à 6 atomes de carbone, 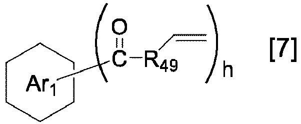 dans la formule, un cycle Ar₁ représente un cycle benzénique ou un cycle naphtalénique, R₄₉ représente un groupe alkylène ayant 1 à 6 atomes de carbone, et h représente un nombre entier de 2 à 4, 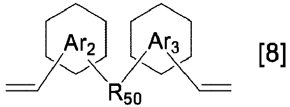 dans la formule, un cycle Ar₂ et un cycle Ar₃ représentent chacun indépendamment un cycle benzène ou un cycle naphtalène, et R₅₀ représente un groupe alkylène ayant 1 à 6 atomes de carbone, 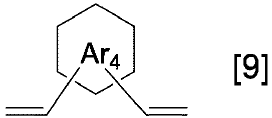 dans la formule, un cycle Ar₄ représente un cycle benzénique ou un cycle naphtalénique, 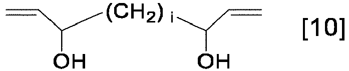 dans la formule, i représente un nombre entier de 0 à 6, 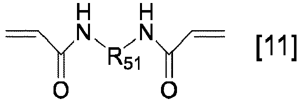 dans la formule, R₅₁ représente un groupe alkylène ayant 1 à 6 atomes de carbone, 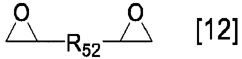 dans la formule, R₅₂ représente un groupe alkylène ayant 1 à 6 atomes de carbone qui a un substituant ou est non substitué, un groupe arylène ayant 6 à 10 atomes de carbone qui a un substituant ou est non substitué, un groupe représenté par la formule générale [12-1] suivante 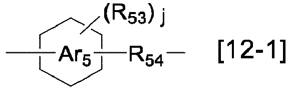 dans la formule, R₅₃ représente un groupe alkyle ayant 1 à 6 atomes de carbone, R₅₄ représente un groupe alkylène ayant 1 à 6 atomes de carbone, un cycle Ar₅ représente un cycle benzénique ou un cycle naphtalénique, et j représente un nombre entier de 0 à 4, ou un groupe représenté par la formule générale [12-2] suivante 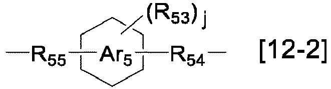 dans la formule, R₅₅ représente un groupe alkylène ayant 1 à 6 atomes de carbone, et R₅₃, R₅₄, un cycle Ar₅, et j sont les mêmes que R₅₃, R₅₄, le cycle Ar₅, et j décrits ci-dessus,
R₅₆-N=C=N-R₅₇ [13]
dans la formule, R₅₆ et R₅₇ représentent chacun indépendamment un groupe alkyle ayant 1 à 6 atomes de carbone qui a un substituant ou est non substitué, un groupe aryle ayant 6 à 10 atomes de carbone qui a un substituant ou est non substitué, ou un groupe représenté par la formule générale [13-1] suivante 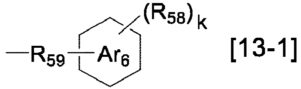 dans la formule, R₅₈ représente un groupe alkyle ayant 1 à 6 atomes de carbone, R₅₉ représente un groupe alkylène ayant 1 à 6 atomes de carbone, un cycle Ar₆ représente un cycle benzène ou un cycle naphtalène, et k représente un nombre entier de 0 à 5, 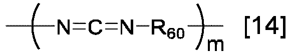 dans la formule, R₆₀ représente un groupe alkylène ayant 1 à 6 atomes de carbone qui a un substituant ou est non substitué, un groupe arylène ayant 6 à 10 atomes de carbone qui a un substituant ou est non substitué, un groupe représenté par la formule générale [14-1] ou [14-2] suivante 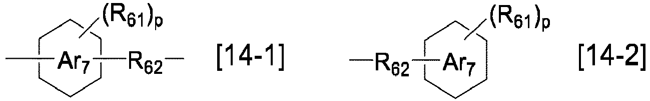 dans les formules, R₆₁ représente un groupe alkyle ayant 1 à 6 atomes de carbone, R₆₂ représente un groupe alkylène ayant 1 à 6 atomes de carbone, un cycle Ar₇ représente un cycle benzène ou un cycle naphtalène, et p représente un entier de 0 à 4,
ou un groupe représenté par la formule générale [14-3] suivante 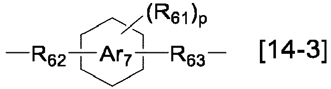 dans la formule, R₆₃ représente un groupe alkylène ayant 1 à 6 atomes de carbone, et R₆₁, R₆₂, un cycle Ar₇, et p sont les mêmes que R₆₁, R₆₂, le cycle Ar₇, et p décrits ci-dessus,
et m représente un nombre entier de 10 à 10 000.

7. Composition de boue selon la revendication 4,
dans laquelle la matière active contenant du carbone contient au moins un type de matière parmi le carbone, le silicium avec une surface revêtue de carbone, un oxyde de silicium avec une surface revêtue de carbone, et un silicium lié à un métal avec une surface revêtue de carbone.

8. Utilisation de la composition de boue selon la revendication 4 pour préparer une électrode négative.

9. Electrode pour batteries au lithium, comprenant
1) un matériau actif contenant du carbone ;
2) un assistant conducteur ;
3) un agent liant dérivé de la composition d'agent liant telle que décrite dans la revendication 4 ; et
4) un collecteur de courant.

10. Electrode selon la revendication 9,
dans laquelle le matériau actif contenant du carbone contient au moins un type de matériau parmi le carbone, le silicium avec une surface revêtue de carbone, un oxyde de silicium avec une surface revêtue de carbone, et un silicium lié à un métal avec une surface revêtue de carbone.

11. Electrode selon la revendication 9, dans laquelle l'électrode est une électrode négative.

12. Procédé pour préparer une électrode pour des batteries au lithium, comprenant :
le revêtement d'un collecteur de courant avec la composition de boue selon la revendication 4 ; et
le séchage de la composition de boue après le revêtement.
